# EUROPEAN PATENT APPLICATION

(11) **EP 4 797 523 A1**
(43) Date of publication of application: **26.08.2026**
(21) Application number: 25159329.9
(22) Date of filing: 21.02.2025
(51) Int. Cl.: H02N 1/00, H02N 1/08

(54) **ELECTROSTATIC GLIDING TRANSDUCER**

(71) Applicant: Max-Planck-Gesellschaft zur Förderung der Wissenschaften e.V., 80539 München (DE)
(72) Inventor: Wang, Xingrui, 70569 Stuttgart (DE); Li, Xiying, 70569 Stuttgart (DE); Rothemund, Philipp, 70569 Stuttgart (DE); Zhang, Philipp, 70569 Stuttgart (DE); Sanchez Tamayo, Natalia, 70569 Stuttgart (DE); Park, Ye Jin, 70569 Stuttgart (DE); Macari, Daniela, 70569 Stuttgart (DE); Keplinger, Christoph, 70569 Stuttgart (DE)
(74) Representative: Richardt Patentanwälte PartG mbB

(57) **Abstract**

Disclosed is an electrostatic gliding transducer (100) for converting energy between an electrostatic energy form and a mechanical energy form, which comprises a stator (102) and a glider (112). The stator (102) comprising a first electrode (104) on a first solid dielectric element (106). The glider (112) comprises a second electrode (114) on a second solid dielectric element (116). The first and second dielectric element (106, 116) are arranged between the two electrodes (104, 114) and spaced apart from each other with a clearance (126) filled with a dielectric liquid (110) providing for a hydrodynamic lubrication. The electrostatic gliding transducer (100) is adapted for a moving of the glider (112) relative to the stator (102) along a direction of movement with the second dielectric element (116) gliding hydrodynamically on the dielectric liquid (110) along the first dielectric element (106) in an activated state of the transducer (100).

## Description

### FIELD OF THE INVENTION

The invention relates to the field of transducers, more precisely to electric transducers as well as methods for controlling such transducers.

### BACKGROUND

Transducers may be used in a wide variety of technical fields. Considering, e.g., transducers in form of actuator, soft biomimetic robots and assistive wearable devices promise to revolutionize adaptable operation in unstructured environments, safe human-robot collaboration, and seamless enhancement of human mobility. However, these robotic systems are commonly restrained by existing actuator technologies, emphasizing a need for improved transducers and in particular for improved actuators.

### SUMMARY OF THE INVENTION

It is an objective to provide for an electrostatic gliding transducer, a set of electrostatic gliding transducers and a method for controlling an electrostatic gliding transducer.

In one aspect an electrostatic gliding transducer for converting energy between an electrostatic energy form and a mechanical energy form is disclosed, which comprises a stator and a glider. The glider is arranged movably relative to the stator along a direction of movement. The stator comprises a first electrode arranged on a first solid dielectric element. The glider comprises a second electrode arranged on a second solid dielectric element.

The first and second dielectric element are arranged between the two electrodes and spaced apart from each other with a clearance between the two dielectric elements filled with a dielectric liquid providing for a hydrodynamic lubrication.

The electrostatic gliding transducer is adapted for a moving of the glider in an activated state of the transducer relative to the stator along the direction of movement with the second dielectric element gliding hydrodynamically on the dielectric liquid along the first dielectric element. The moving of the glider alters a relative offset between the two electrodes along the direction of movement.

An electrostatic gliding transducer may, e.g., comprise the following structures with the following functions: The electrostatic gliding transducer may comprise a pair of electrodes, i.e., a first and second electrode, adapted for generating an electrostatic field between themselves. Between the first and second electrode dielectrics are arranged. The dielectrics comprise a first solid dielectric element, a second solid dielectric element, and a dielectric liquid. The electrostatic field results in electrostatic forces acting on the electrodes. The dielectrics may react to the electrostatic forces acting on the electrodes, e.g., a moving of the electrodes due to the electrostatic forces.

The first electrode is arranged on a first solid dielectric element, while the second electrode is arranged on a second first solid dielectric element. The two solid dielectric elements are arranged between the two electrodes. The solid dielectric elements may be used as substrates for the electrodes. The first solid dielectric element with the first electrode is comprised by a stator of the electrostatic gliding transducer. The stator may, e.g., be mounted to or comprising a fixed frame structure. The second solid dielectric element with the second electrode is comprised by a glider of the electrostatic gliding transducer. To the glider, e.g., an external load may be mounted. The dielectric liquid is used to provide a hydrodynamic lubrication layer between the stator and glider, e.g., between the first and second solid dielectric element.

For example, the electrostatic gliding transducer is adapted as an electrostatic gliding actuator for converting electrostatic energy into mechanical energy. The converting comprises decreasing the relative offset between the two electrodes by the moving of the glider relative to the stator along the direction of movement with the moving being due to a gliding force being generated in the activated state of the transducer by a driving voltage applied to the two electrodes.

For example, an electrostatic gliding transducer, which is adapted as an electrostatic gliding actuator, comprises a stator and a glider. The glider is arranged movably relative to the stator along a direction of movement. The stator comprises a first electrode arranged on a first solid dielectric element. The glider comprises a second electrode arranged on a second solid dielectric element.

In a deactivated state of the transducer, the two electrodes are, e.g., arranged with a relative offset in the direction of movement. The first and second dielectric element are arranged between the two electrodes and spaced apart from each other with a clearance between the two dielectric elements filled with a dielectric liquid providing for a hydrodynamic lubrication.

For example, the electrostatic gliding transducer is adapted for a moving of the glider relative to the stator along the direction of movement with the second dielectric element gliding hydrodynamically on the dielectric liquid along the first dielectric element due to a gliding force being generated in an activated state of the transducer by a driving voltage applied to the two electrodes. The moving of the glider reduces the relative offset between the two electrodes.

An electrostatic gliding transducer may, e.g., be adapted as an electrostatic gliding actuator. A process of actuation of such an electrostatic gliding actuator may, e.g., comprise the following: The pair of electrodes of the electrostatic gliding transducer may be arranged in an offset configuration, i.e., spaced apart from each by an offset in an intended direction of movement. The electrodes are arranged on and mechanically connected to the solid dielectric elements, which are arranged between the electrodes. With the electrodes, also the solid dielectric elements are arranged spaced apart from each other with a clearance between the solid dielectric elements being filled with the dielectric liquid. Thus, two layers of solid dielectrics with the dielectric liquid in between may be provided.

A driving voltage may be applied to the electrodes and an electrostatic field generated between the electrodes. The dielectrics, i.e. both the solid dielectric elements and the dielectric liquid, may react to electrostatic forces resulting from the generated electrostatic field and acting on the electrodes. For example, an electrostatic gliding force and/or an electrostatic normal force may act on the electrodes and via the electrodes, which are connected to the solid dielectric elements, on the dielectrics, i.e., the solid dielectric elements as well as the dielectric fluid between the same.

The electrostatic gliding force may act in the intended direction of movement. The gliding force may act parallel to the electrodes, i.e., the surface of the electrodes facing each other. The electrostatic normal force may act in a direction perpendicular to the intended direction of movement and/or perpendicular to the electrodes, i.e., to the surfaces of the electrodes facing each other. The electrostatic gliding force may try to drag the glider and, if there is an external load mounted to the glider, the external load along the intended direction of movement, e.g., against gravity. The electrostatic normal force may try to squeeze the stator and the glider together, i.e., to reduce the distance between the solid dielectric elements.

If the electrostatic gliding force is larger than the sum of external forces acting on the glider and the external load, e.g., gravity, the glider may move toward the stator. As a result, both the clearance between the solid dielectric elements, and thus a thickness of the hydrodynamic lubrication layer formed between the solid dielectric elements by the dielectric liquid, as well as the initial offset of the electrodes along the intended direction of movement may decrease.

For example, the thickness of the hydrodynamic lubrication layer provided by liquid dielectric between the solid dielectric elements may keep decreasing. There may be a period of time before the two solid dielectric elements come in contact with each other. This period of time may be used as a working window of electrostatic gliding transducer. Within the working window of the electrostatic gliding transducer, the glider may move towards the stator on the hydrodynamic lubrication layer of dielectric liquid. This layer of dielectric liquid working as a hydrodynamic lubrication layer may allow the glider to move with ultralow friction and thus with ultralow energy loss.

The movement of the glider may, e.g., stop when 1) the electrostatic gliding force turns to zero, i.e., when the offset between the electrodes along the intended direction of movements becomes zero and the electrodes are fully aligned. The electrodes may be fully aligned, when at least one of the two electrodes fully overlaps with the other electrodes. In case of electrodes of identical size, the electrodes nay fully align, when they fully overlap. Alternatively, the movement of the glider may, e.g., stop when 2) a frictional force in an interface between the solid dielectric elements become too high for the gliding force to overcome, which means that the time defined by the working window is exceed and the dielectric liquid may be fully squeezed out between the solid dielectric elements. In this state, the hydrodynamic lubrication is not valid anymore.

When the driving voltage is removed from the electrodes, external forces, like the gravitational force, acting on the glider and, e.g., an external load may reset them to their initial position for the next actuation of the electrostatic gliding transducer. Because of electrostatic clutching effects, this process of resetting may, e.g., take some time, e.g., hundreds of seconds. To quantify this process of resetting, e.g., a deactivation time may be defined as a period of time from an end of the driving voltage to a reset of the glider to a predefined ratio, e.g., 10%, of its maximum displacement. Maximum displacement refers to a maximum displacement from its initial position offset from the stator by the initial offset in the intended direction of movement.

Exemplary electrostatic gliding transducers may be adapted as electrostatic gliding actuators for converting electrostatic energy into mechanical energy by reducing the offset of electrodes. An exemplary transducer translates an electric input signal in form of a voltage, e.g., a driving voltage, into a motion and thus a displacement of the glider. The motion of the glider may, e.g., be a translation, i.e., a linear motion, and/or a rotation, i.e., a rotary motion, relative to the stator of the transducer. Furthermore, electrostatic gliding transducers harness hydrodynamic lubrication provided by the dielectric liquid filling the clearance between the solid dielectric elements to access a regime of very low friction.

Examples may have the beneficial effect of providing a transducer in form of an actuator, which shows an outstanding performance compared to other types of actuators. Examples may have the beneficial effect of enabling a high contraction and providing a large load-lifting capacity, combined with high power-to-weight ratio, speed, and efficiency.

For example, the electrostatic gliding transducer may harness hydrodynamic lubrication between the solid dielectric elements, e.g., provided in form of layers of dielectrics, to access a regime of extremely low frictional losses, when the glider glides relative to the stator. Thereby, the electrostatic gliding transducer may enable outstanding actuation performance. An electrostatic gliding transducer may, e.g., achieve a linear contraction of 49%, an actuation stress exceeding 1 MPa, a specific energy of 263 J/kg, a peak specific power of 5960 W/kg, and/or a strain rate of 2065 %/s, when operated in a dielectric liquid environment.

The glider and stator with the glider gliding relative to the stator along the direction of movement, wherein the second dielectric element of the glider glides on the dielectric liquid along the first dielectric element of the stator, may form a liquid bearing. There may be no contact between the moving parts, i.e., glider and stator, avoiding a sliding friction. Furthermore, with the clearance between glider and stator being filled with the dielectric liquid, while no other elements may be arranged between glider and stator, also other types of friction, like rolling friction, may be avoided as well. The absence of a contact between the moving parts may allow the actuator to have lower friction, wear, and/or vibration than many other types of actuators.

Hydrodynamic lubrication is obtained when a glider and stator, i.e., first and second solid dielectric element are completely separated by the dielectric liquid. A thickness of a layer of the dielectric liquid between the first and second solid dielectric element may in particular exceed a combined roughness of the surfaces of the first and second solid dielectric element.

An exemplary electrostatic gliding transducer may be configured to generate electric fields in the activated state. The electric fields force the first and second solid dielectric elements, which are, e.g., arranged parallel to each other, to hydrodynamically glide relative to each other on a layer of the dielectric liquid filling the clearance between the solid dielectric elements. This hydrodynamically gliding on the dielectric liquid may allow the electrostatic gliding transducer to exploit a low friction of the hydrodynamic lubrication regime. The resulting low coefficient of friction may enable the electrostatic gliding transducer to reach an improved actuation performance compared to other types of actuators with higher coefficients of friction.

An exemplary electrostatic gliding transducer may, e.g., be configured for different usages and/or may be arranged as a part of different setups: For example, the electrostatic gliding transducer may further be configured for a capacitive self-sensing. The capacitive self-sensing may enable a determining of a size and in particular changes of the size of the offset between the electrodes and thus of a distance of movement of the glider, while the electrostatic gliding transducer is in operation. For example, a pair of exemplary electrostatic gliding transducers may be arranged as an antagonistic pair of transducers. Such an antagonistic pair of electrostatic gliding transducers may, e.g., be used for driving a robotic arm. A packaging of one or more electrostatic gliding transducers using one or more sealed packaging envelopes may enable a usage of the respective packaged electrostatic gliding transducers in air. The one or more sealed packaging envelopes may provide reservoirs of dielectric liquid. For example, an array of electrostatic gliding transducers may be provided, which may be configured for an operation in liquid, i.e., in the dielectric liquid, or in air. For the operation in air, the electrostatic gliding transducers with the dielectric liquid may be packaged in one or more envelopes. An array of electrostatic gliding transducers may, e.g., be used to scale up actuation, stroke, and/or force. Such an array may comprise n × m electrostatic gliding transducers, e.g., 2 × 6 electrostatic gliding transducers.

Examples may have the beneficial effect of having wide potential for applications in robotics. For example, an electrostatic gliding transducer may be used as a linearly contractile, electrically driven artificial muscles. Electrostatic gliding transducer may, e.g., be used for providing artificial muscles that simultaneously feature high power-to-weight ratio, speed, and efficiency, as well as large linear contraction and load-lifting capabilities.

Electrostatic gliding transducers may, e.g., present a platform for the development of high-performance artificial muscles for practical applications spanning from biomimetic robots and assistive wearable devices to industrial automation. For example, artificial muscles may be provided comprising one or more of the electrostatic gliding transducers. Electrostatic gliding transducers may, e.g., be used for providing artificial muscles. Such artificial muscles may, e.g., be comprised by a biomimetic robot or an assistive wearable device. Using electrostatic gliding transducer for artificial muscles may, e.g., allow to improve agility and adaptability of biomimetic robots and assistive wearable devices and/or reduce the weight of biomimetic robots and assistive wearable devices.

Natural muscle may, e.g., feature a linear strain of 40 %, a maximum actuation stress of 0.35 MPa, a peak strain rate of 500 %/s, a specific energy 40 J/kg, an averaged specific power of 50 W/kg, and a peak specific power of 284 W/kg. An exemplary electrostatic gliding transducers may, e.g., feature a linear strain of 49 %, a maximum actuation stress of 1.01 MPa, a peak strain rate of 2065 %/s, a specific energy 263 J/kg, an averaged specific power of 1386 W/kg, and a peak specific power of 5960 W/kg.

Output energies of an exemplary electrostatic gliding transducer at different voltages may, e.g., be: 7.47 mJ at a voltage of 11 kV, i.e., 100 % percentage of output energy at 11 kV and 100 % percentage of square of maximum voltage of 11 kV; 6.06 mJ at a voltage of 10 kV, i.e., 81 % percentage of output energy at 11 kV and 83 % percentage of square of maximum voltage of 11 kV; 4.72 mJ at a voltage of 9 kV, i.e., 63 % percentage of output energy at 11 kV and 67 % percentage of square of maximum voltage of 11 kV; and 3.34 mJ at a voltage of 8 kV, i.e., 45 % percentage of output energy at 11 kV and 53 % percentage of square of maximum voltage of 11 kV.

Examples may have the beneficial effect of avoiding a requirement for tethers for fluid transport from a pressure source as in case of fluid-driven actuators. Thus, efficiency and portability may be improved compared to fluid-driven actuators. Examples may have the beneficial effect of a higher energy efficiency compared to thermally-driven actuators without limitations of bandwidth by heat dissipation. Examples may have the beneficial effect that no complex, multiphase, high-voltage AC driving signals may be required for driving an exemplary electrostatic gliding transducer. Examples may have the beneficial effect that for achieving muscle-like contraction and/or displacement upon activation, e.g., with a voltage, no stacked designs may be required. In particular, large strokes compared to other known types of actuators may be achievable using an exemplary electrostatic gliding transducer as an actuator, i.e., an electrostatic gliding actuator. Furthermore, examples may have the beneficial effect that no specialized stretchable materials and/or fabrication procedures may be required.

An exemplary electrostatic gliding transducer may harness an ultra-low friction mechanism of hydrodynamic lubrication, where two layers of dielectrics effortlessly glide relative to each other on a thin layer of dielectric liquid between them. Hence the term electrostatic gliding transducer. The performance metrics of exemplary electrostatic gliding transducers demonstrated herein highlight that the use of this hydrodynamic lubrication mechanism in electrostatic gliding transducers may enable a reaching of values of specific energy and power that exceed those of other electrically driven, linearly contractile artificial muscles. The potential of electrostatic gliding transducers is illustrated for wide use in robotic systems by showing, e.g., capacitive self-sensing, an antagonistic pair of electrostatic gliding transducers actuating a lever arm, as well as parallel and serial arrays of electrostatic gliding transducers operating both in liquid and air.

To substantially reduce electrostatic clutching effects, which limit the maximum bandwidth of actuation of electrostatic gliding transducers, e.g., a spring element, an alternating polarity voltage signals or a combined strategy thereof may be utilized as describes in further detail in the following further below.

An exemplary electrostatic gliding transducer may, e.g., comprise two solid dielectric elements. These solid dielectric elements may, e.g., be provided in form of thin solid dielectric films, which are electrode-covered. The two solid dielectric elements may, e.g., be configured to act as a stator and a glider. A space, i.e., a clearance, between the solid dielectric elements is, e.g., filled with a dielectric liquid. This dielectric liquid, e.g., forms a layer of dielectric liquid between the two solid dielectric elements. At rest state, i.e., in a deactivated state, the stator and the glider are aligned in parallel but vertically offset from each other. When a driving voltage is applied to the two electrodes, an electric field may be generated between the electrodes. The resulting electric field may, e.g., generate an electrostatic gliding force and an electrostatic normal force perpendicular to the electrostatic gliding force. The electrostatic gliding force may act in a direction parallel to a direction of extension of contacts surfaces of the electrodes with the solid dielectric elements, e.g., parallel to plans of extension of respective surfaces of the electrodes. The electrostatic normal force may act perpendicular to the contact surfaces of the electrodes with the solid dielectric elements.

When the gliding force exceeds an applied load, the glider glides along the direction of movement and the dielectric liquid between glider and stator functions as a hydrodynamic lubrication layer. This hydrodynamic lubrication layer allows the electrostatic gliding transducer to access a regime of very low friction. While the electrostatic gliding transducer contracts, the normal force may, e.g., reduce the distance between the solid dielectric elements and thus a thickness of the lubrication layer of dielectric liquid between glider and stator. The normal force may thus result in an additional squeezing motion. The contraction may, e.g., stop either when the gliding force vanishes as soon as the electrodes are fully aligned with each other, i.e., as soon as the relative offset between the two electrodes vanishes, or when hydrodynamic lubrication breaks. The hydrodynamic lubrication breaks may, e.g., break as soon as the distance between the solid dielectric elements vanishes and the solid dielectric elements come into contact.

When the driving voltage is switched off, e.g., when the electrostatic gliding transducer is deactivated, an additional spring element configured as a peeling spring integrated, e.g., on the stator may, e.g., release its elastic energy stored during contraction and peel off the stator from the glider. Thereby, a process of restoring the initial relative offset of the electrodes and the spacing between the solid dielectric elements may be accelerated. Thus, a resetting of the glider to a rest state, i.e., an initial deactivated state may be accelerated. For example, also a refilling of the increasing spacing between the solid dielectric elements with the dielectric liquid may be accelerated.

To qualitatively explain the very high actuation performance of an exemplary electrostatic gliding transducer, an idealized model system may be considered in the form of a parallel-plate capacitor comprising two offset solid dielectric elements in form of dielectric plates, each covered with an electrode. The dielectric plates are separated by a fixed distance h. Applying a voltage V₁ to such a capacitor causes an electrostatic gliding force F_{g} and an electrostatic normal force Fₙ that are both proportional to the Maxwell stress σ ∝ εE², with ε being a permittivity of a combination of the dielectric plates, i.e., the solid dielectric elements, and a dielectric liquid filling a clearance between the dielectric plates. Furthermore, E = V₁/h is the electric field between the electrodes. The electrostatic gliding force F_{g} acts on the dielectric plates to reduce the offset of the plates, thereby causing the transducer to contract. The electrostatic normal force Fₙ presses the dielectric plates together and causes a frictional force F_{f}, that opposes the gliding force F_{g}. Assuming a constant coefficient of friction (CoF) k at the interface so that F_{f} = k Fₙ. As a result, the transducer generates a contractile force F(L,k) = F_{g}- ${F}_{f} = \frac{1}{2} \frac{ε {wV}_{1}^{2}}{h} - \frac{1}{2} \frac{ε {wkLV}_{1}^{2}}{{h}^{2}}$, where L is the stroke, and w is the width of the transducer. The gliding force F_{g} is independent of the stroke L, so the contractile force F(L,k) is constant when there is no friction between the dielectric plates, i.e., k = 0. Thus, the stroke L is only limited by the length of the electrodes Lₑ, which provides a general geometry limit for the actuation stroke. In the case of a non-vanishing friction, i.e., k > 0, the frictional force F_{f} increases linearly with the actuation stroke. The coefficient of friction k governs the slope of the force-stroke relationship. Smaller values of the coefficient of friction k lead to higher actuation forces and strokes.

Using this idealized model system, experimental results for the force-stroke relationship of the electrostatic gliding transducer may be analyzed. Using the equation for F(L,k) with experimental values for geometry and materials properties of the electrostatic gliding transducer, the coefficient of friction k and the distance between the electrodes h can be estimated by fitting the slope and the intersection with the y-axis, i.e., the blocking force, of the force-stroke curve. This analysis reveals that an exemplary electrostatic gliding transducer operates in a regime of very low friction. For example, an exemplary electrostatic gliding transducer may operate with a coefficient of friction k = 2.7 × 10⁻⁶, which lies within a range for hydrodynamic lubrication from k = 10⁻⁴ - 10⁻⁸. Thus, the maximum force and stroke for the exemplary electrostatic gliding transducer are well above upper limits for electrostatic transducers based on both rolling friction with a coefficient of friction k in a range of k = 10⁻³ - 10⁻⁵ and dry sliding friction with a coefficient of friction k in a range of k = 3 × 10⁰ - 2 × 10⁻². For an exemplary electrostatic gliding transducer, the distance h between the electrodes may be composed of a thickness of the solid dielectric element of the stator and a thickness of the solid dielectric element of the glider, plus a thickness of the clearance between solid dielectric elements filled with the dielectric liquid, i.e., a thickness of the lubrication layer ĥ.

The value for the thickness of the lubrication layer ĥ depends on the applied driving voltage. A maximum value for the thickness of the lubrication layer ĥ, e.g., 12.3 µm for a driving voltage of 11 kV for an exemplary electrostatic gliding transducer using transformer oil as the dielectric liquid, may be used for estimating a mass of the dielectric liquid comprised by the lubrication layer and consequently a total mass of the electrostatic gliding transducer. The maximum value for the thickness of the lubrication layer may, e.g., refer to a value corresponding to corresponding to the blocking force. The total mass of the electrostatic gliding transducer may in turn be used to determine the specific energy and power of the electrostatic gliding transducer. The aforementioned idealized model assumes a fixed distance h between the electrodes. In case of the exemplary electrostatic gliding transducer, the gliding motion is coupled with a squeezing motion, so that the thickness of the lubrication layer ĥ is a transient variable. The viscosity of the dielectric liquid impedes the squeezing motion so that the hydrodynamic lubrication is maintained for a certain period of time.

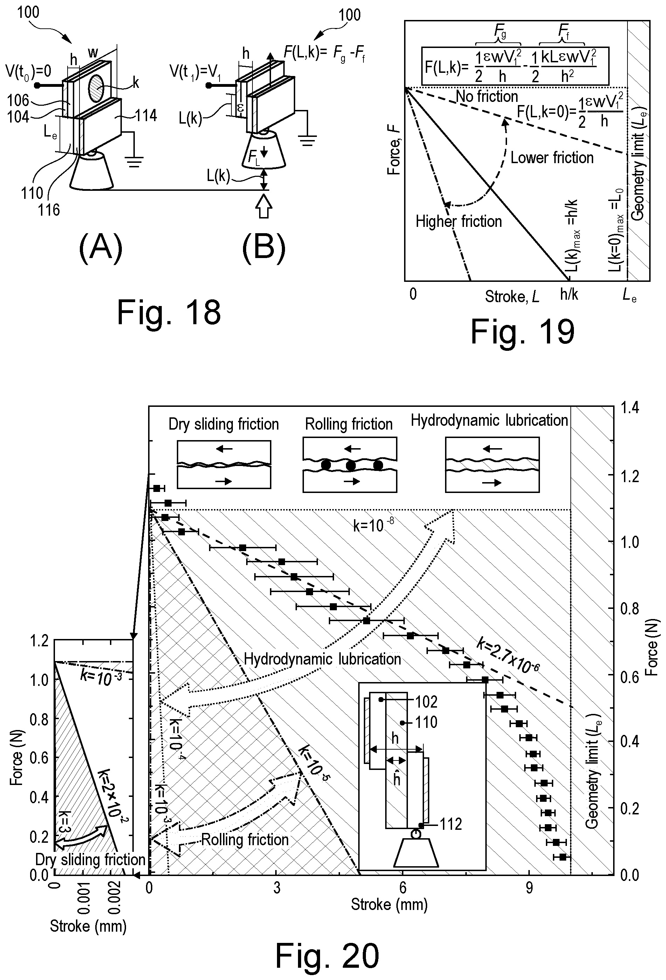

As a model for understanding an exemplary electrostatic gliding transducer an offset parallel-plate capacitor may be considered. Such an offset parallel-plate capacitor is, e.g., illustrated in Fig. 18, and may be connected to a voltage source that applies a voltage of V₁. The offset parallel-plate capacitor may be loaded with an external load F_{L} and exposed to a frictional force F_{f}.

A Helmholtz free energy H stored in this capacitor may be described by $H \left(Q, L\right) = \frac{1}{2} \frac{{Q}^{2} h}{εwL} ,$ when fringe fields are neglected. In this equation, Q is a charge on the capacitor, h is a thickness of the dielectric, ε is a permittivity of the dielectric, w is a width of the capacitor and L the overlap length of the capacitor.

In equilibrium, the system fulfills the equation $δH \left(Q, L\right) = \frac{\partial H}{\partial Q} δQ + \frac{\partial H}{\partial L} δL = {V}_{1} δQ - \left(F+{F}_{f}\right) δL ,$ which leads to the equations of state $Q = \frac{εwL}{h} {V}_{1} ,$ $F = \frac{1}{2} \frac{εw}{h} { V}_{1}^{2} - {F}_{f} .$

The first equation of state describes the capacitor equation Q = C V₁. In the second equation of state, the first term describes an actuation force of the offset parallel capacitor without friction. This result means that ${F}_{g} = \frac{1}{2} \frac{εw}{h} { V}_{1}^{2}$ is an electrostatic force generated by the electric field, which is the electrostatic gliding force identified above. This force is independent of the overlap length L of the electrodes.

The friction force may be calculated as F_{f} = k Fₙ, where k is the coefficient of friction and Fₙ is the normal force on the capacitor, which can be expressed as a function of Maxwell stress in the form of ${F}_{n} = \frac{1}{2} \frac{ε {wLV}_{1}^{2}}{{h}^{2}} .$

Thus, a total force generated by the offset parallel plate capacitor may be expressed as $F \left(L, {V}_{1}\right) = {F}_{g} - {F}_{n} = \frac{1}{2} \frac{εw}{h} { V}_{1}^{2} - k \frac{1}{2} \frac{ε {wLV}_{1}^{2}}{{h}^{2}} ,$ which corresponds to the equation provided above for the contractile force generated by the transducer.

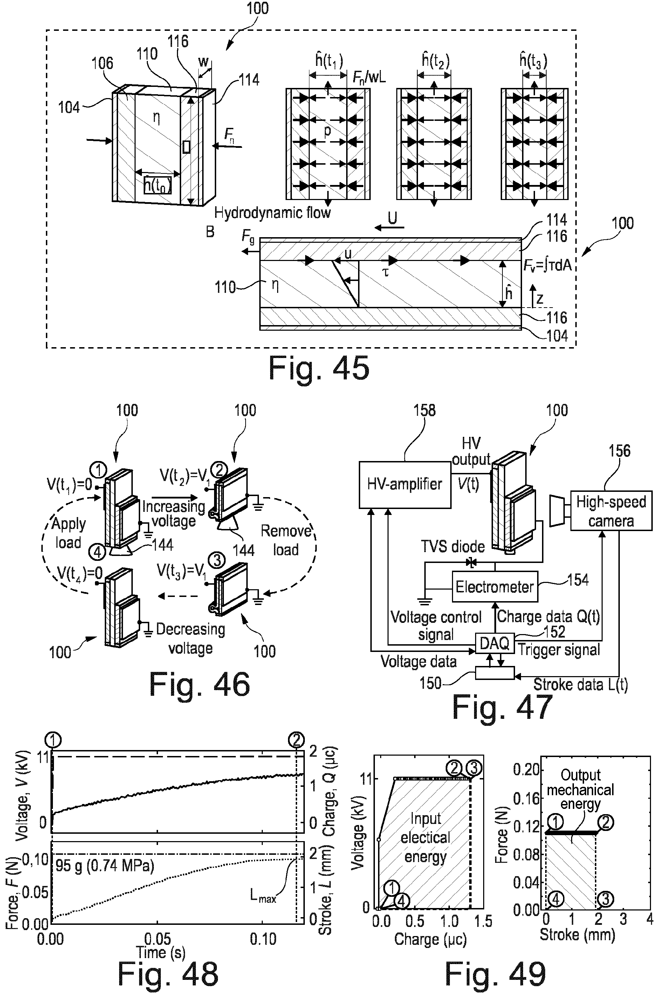

Driven by Maxwell stress, a stress-strain performance of an exemplary electrostatic gliding transducer and consequently the output energy of the electrostatic gliding transducer, may depend on a square of the applied driving voltage. To evaluate the electrical-to-mechanical energy conversion ratio of an exemplary electrostatic gliding transducer, a generated mechanical work may be measured and an expended electrical energy when lifting different loads. An exemplary cycle for evaluating an electrical-to-mechanical energy conversion ratio is illustrated in Fig.46 to 49 and further described in the description thereof. The exemplary electrostatic gliding transducer may, e.g., achieve a maximum conversion ratio of 28.9 % at a stress of 0.74 MPa.

An exemplary electrostatic gliding transducer may exhibit an outstanding power-to-weight ratio, also referred to as specific power. Comparing peak and average specific power of an exemplary electrostatic gliding transducer as a function of stress may, e.g., reveal that the respective electrostatic gliding transducer reaches a maximum peak specific power of 3664 W/kg at 0.20 MPa and a maximum average specific power of 966 W/kg at 0.43 MPa. An exemplary electrostatic gliding transducer may feature a rapid contraction rate. For example, a maximum peak strain rate of 1410 %/s may be achievable at 0.05 MPa.

An exemplary electrostatic gliding transducer harnesses hydrodynamic lubrication. An actuation performance may, e.g., be evaluated for exemplary electrostatic gliding transducers using dielectric liquids with different permittivities, temperatures, and viscosities. Using a dielectric liquid with lower permittivity reduced the actuation strain and specific power. Increasing the temperature of the dielectric liquid leads to a decreasing of the viscosity of the dielectric liquid and thus results in a lower strain but, at the same time, a higher maximum peak strain rate, e.g., a maximum peak strain rate of 2065 %/s. Increasing the viscosity of dielectric liquid leads to a higher strain but a lower peak specific power. An electrostatic gliding transducer using the dielectric liquid with the lowest viscosity tested, i.e., 20-cSt silicone oil, reached the lowest maximum actuation strain, but a peak specific power comparable to the electrostatic gliding transducers using dielectric liquids with higher viscosities. These results show that for electrostatic gliding transducers using a low-viscosity dielectric liquid, a large portion of the electrode area goes unused. However, this portion of the electrostatic gliding transducer still contributes to its total mass. This observation suggests that there is an ideal electrode length for the electrostatic gliding transducers based on a given combination of materials. Evaluating the performance of an electrostatic gliding transducer using the 20-cSt silicone oil and shortened electrodes, e.g., electrodes of a length of 3 mm, a specific energy of 108.7 J/kg and a peak specific power of 5960 W/kg may be achieved.

To estimate a mass of an electrostatic gliding transducer, all the functional parts comprised by the electrostatic gliding transducer may be taken into account, i.e., stator, lubrication layer, and the glider. Furthermore, a spring element, if comprised by the considered electrostatic gliding transducer may be taken into account. A mass of the electrodes may be negligible. For calculating the mass of stator and glider, volumes of the respective solid dialectic elements underneath the electrodes multiplied by a density of the solid dialectic elements may be used.

The stator may, e.g., be made of a 12.7 µm polyimide film, while the glider may be made from a 25 µm polyimide film. A density of the polyimide may, e.g., be given by 1.43 × 10³ kg/m³. In a configuration with a spring element, the mass of the spring element may be calculated using a volume of the spring element multiplied by a density of the spring element. The mass of the lubrication layer may be calculated using an estimated maximum thickness of the lubrication layer, multiplied by the area covered with electrodes in the fully elongated state of the electrostatic gliding transducer, i.e., in an initial deactivated state with maximum relative offset of the electrodes along a gliding direction, and a density of the dielectric liquid.

The mass of electrodes may, e.g., be neglected in estimating the mass of electrostatic gliding transducers, because the mass of electrodes may be largely influenced by the specific fabrication method and material used. Examples comprise carbon electrodes, many different types of thin-film electrodes may be expected to readily work for an electrostatic gliding transducer, including, e.g., metallic nanowires and deposited ultra-thin metallic films. Furthermore, the mass of electrodes is commonly neglected in the field of electrostatic actuators, due to its minor impact on an overall mass of the actuators. For comprehensiveness, the mass of the exemplary carbon electrodes described herein may, e.g., be estimated to be less than 2 mg by comparing a mass of a polyimide film before and after painting the electrode.

Electrostatic gliding transducers may be configured for enabling a moving of a pair of solid dielectric elements under an electrostatic field using hydrodynamic lubrication provided by a dielectric liquid arranged between the solid dielectric elements. The components of an electrostatic gliding transducer as described above may, e.g., be implemented using different structures configured for different applications.

The solid dielectric elements of an electrostatic gliding transducers may, e.g., comprise a least partially continuous material section under the electrostatic field generated using the electrodes, i.e., under the electrodes, where charges for generating the electrostatic field are stored. However, the form of solid dielectric elements may not be restricted to any specific shape. Different shapes of the solid dielectric elements may be possible for implementing an electrostatic gliding transducer. The solid dielectric elements may, e.g., have a periodic pattern or a non-periodic pattern on either side, i.e., at the glider and/or the stator. The solid dielectric elements may, e.g., have a variation of density and/or thickness along any direction of the respective elements.

The electrostatic field generated in an electrostatic gliding transducer may, e.g., being used as an actuator, may be asymmetric at the start of the movement of the glider. However, the formation of how to generate the electrostatic field may not be restricted to a particular configuration of electrodes. The electrostatic field may, e.g., be generated using a pair of electrodes with pattern on either side or both sides, i.e., at the glider and/or the stator. The electrostatic field may, e.g., be generated using a pair of electrodes with variations of density and/or thickness on either side or both sides, i.e., at the glider and/or the stator. The electrostatic field may, e.g., be generated using a pair of electrodes with variations of materials on either side or both sides; i.e., at the glider and/or the stator. The electrostatic field may, e.g., be generated using a pair of corona-discharged charges directly spread on either side or both sides of the solid dielectric elements. i.e., at the glider and/or the stator.

The dielectric liquid may, e.g., be a pure and/or homogenous liquid comprising a single dielectric component. The dielectric liquid may, e.g., be a mixture of different types of liquid dielectric components. The dielectric liquid may, e.g., be a suspension, i.e., a mixture of a dielectric liquid comprising solid dielectric particles. The solid dielectric particles may, e.g., be particles of the same type or different types of dielectrics. The dielectric liquid may, e.g., a mixture of different types of liquid dielectric components and solid dielectric particles of different types of dielectrics.

An electrostatic gliding transducer with a cross-sectional setup comprising two electrodes arranged on two solid dielectric elements arranged between the two electrodes and separated from each other by a clearance filled with dielectric liquid, may be implemented in different ways. By bending and/or extending this cross-sectional setup in one or more directions along an arbitrary curve different designs of electrostatic transducers may be implemented. For example, a direction of extension may be perpendicular and/or parallel to the cross-sectional plane of the cross-sectional setup.

An extending of the cross-sectional setup along a straight line perpendicular to the cross-sectional plane may, e.g., result in an electrostatic gliding transducer comprising two rectangular solid dielectric elements, e.g., configured for a linear movement.

A bending of the solid dielectric elements of the cross-sectional setup along a circle within the cross-sectional plane to form two concentrical closed circles and an extending of the cross-sectional setup along a straight line perpendicular to the cross-sectional plane may, e.g., result in an electrostatic gliding transducer comprising two cylindrical solid dielectric elements, e.g., configured for a rotational movement. The electrodes may, e.g., have curved rectangular shapes. The curvatures of the electrodes may each correspond to a curvature of the cylindrical solid dielectric element at which they are arranged.

A bending of the cross-sectional setup along a circle within the cross-sectional plane to form two concentrical closed circles and an extending of the cross-sectional setup along a straight line perpendicular to the cross-sectional plane may, e.g., result in an electrostatic gliding transducer comprising two cylindrical solid dielectric elements and two cylindrical electrodes. The resulting electrostatic gliding transducer may, e.g., be configured for a linear movement.

A bending of the solid dielectric elements of the cross-sectional setup along a circle within a plane perpendicular to the cross-sectional plane and filling of the resulting two concentrical closed circles may, e.g., provide an electrostatic gliding transducer comprising two cylindrical solid dielectric elements. The electrodes may, e.g., each have a shape of a circular sector. The resulting electrostatic gliding transducer may, e.g., be configured for a rotational movement.

An extending of the cross-section setup along a spiral with a central axis extending perpendicular to the cross-sectional plane may, e.g., result in an electrostatic gliding transducer comprising two concentrical spiral electrodes. The resulting solid dielectric elements, e.g., have spiral forms as well or may have cylindrical forms. The electrostatic gliding transducer may, e.g., be configured for a linear and/or rotational movement.

For different applications, different designs of the electrostatic gliding transducer and its general setup as described previously may be used. For example, different designs may be used for implementing the components of the electrostatic gliding transducer. For example, the first and second solid dielectric elements may have a cuboid shape. For example, the second solid dielectric element is configured to move parallel to a plane of extension of the first solid dielectric element. For example, the second solid dielectric element is configured to move parallel to a surface of the first solid dielectric element facing the second solid dielectric element. For example, a movement of the second solid dielectric element along the first solid dielectric element is a translational movement. For example, the first and second electrodes have a rectangular shape. Also, other shapes of the first and second electrodes may be possible. The first and second electrodes may have shapes comprising straight boundary lines. For example, the first and second electrodes may have shapes comprising curved boundary lines. For example, the first and second electrodes may comprise one or more cutouts. For example, the first and second electrodes may comprise no cutouts. For example, the first and second electrodes may comprise a constant density. For example, the first and second electrodes may comprise a varying density, in particular one or more sections with varying density.

For example, the first and second solid dielectric elements may have a cylindrical shape. For example, the cylindrical shape of the second solid dielectric element has a diameter smaller than a diameter of the cylindrical shape of the second solid dielectric element and the second solid dielectric element is configured to move within and/or into the first solid dielectric element. For example, the cylindrical shape of the second solid dielectric element has a diameter larger than a diameter of the cylindrical shape of the second solid dielectric element and the second solid dielectric element is configured to receive the first solid dielectric element, when moving along the first solid dielectric element. For example, the second solid dielectric element is configured to move parallel to a central longitudinal axis of the cylindrical shape of the first solid dielectric element. For example, the second solid dielectric element is configured to move parallel to a surface of the first solid dielectric element facing the second solid dielectric element. For example, a movement of the second solid dielectric element along the first solid dielectric element is a translational movement. For example, the first and second electrodes have a rectangular shape. Also, other shapes of the first and second electrodes may be possible. The first and second electrodes may have shapes comprising straight boundary lines. For example, the first and second electrodes may have shapes comprising curved boundary lines. For example, the first and second electrodes may comprise one or more cutouts. For example, the first and second electrodes may comprise no cutouts. For example, the first and second electrodes may comprise a constant density. For example, the first and second electrodes may comprise a varying density, in particular one or more sections with varying density.

For example, the first and second solid dielectric elements may have a circular disk-shape. For example, the second solid dielectric element is configured to move parallel to a plane of extension of the first solid dielectric element. For example, the second solid dielectric element is configured to move parallel to a surface of the first solid dielectric element facing the second solid dielectric element. For example, a movement of the second solid dielectric element along the first solid dielectric element is a rotational movement. For example, an axis of rotation of the rotational movement extends perpendicular to the first and second solid dielectric element. For example, the axis of rotation extends through a center of the first and/or the second solid dielectric element. For example, the first and second electrodes have a triangular shape. For example, the first and second electrodes have a shape of a circular sector. For example, the first and second electrodes have a shape of a circular segment. For example, the first and second electrodes have a shape of a section of an annulus. Also, other shapes of the first and second electrodes may be possible. The first and second electrodes may have shapes comprising straight boundary lines. For example, the first and second electrodes may have shapes comprising curved boundary lines. For example, the first and second electrodes may comprise one or more cutouts. For example, the first and second electrodes may comprise no cutouts. For example, the first and second electrodes may comprise a constant density. For example, the first and second electrodes may comprise a varying density, in particular one or more sections with varying density.

For example, the first and second solid dielectric elements may have a cylindrical shape. For example, the cylindrical shape of the second solid dielectric element has a diameter smaller than a diameter of the cylindrical shape of the second solid dielectric element and the second solid dielectric element is arranged, e.g., at least partially, within the first solid dielectric element. For example, the cylindrical shape of the second solid dielectric element has a diameter larger than a diameter of the cylindrical shape of the second solid dielectric element and the first solid dielectric element is arranged, e.g., at least partially, within the second solid dielectric element. For example, the second solid dielectric element is configured to move parallel to a surface of the first solid dielectric element facing the second solid dielectric element. For example, a movement of the second solid dielectric element along the first solid dielectric element is a rotational movement. For example, an axis of rotation of the rotational movement is a central longitudinal axis of the cylindrical shape of the first solid dielectric element. For example, the first and second electrodes have a rectangular shape. Also, other shapes of the first and second electrodes may be possible. The first and second electrodes may have shapes comprising straight boundary lines. For example, the first and second electrodes may have shapes comprising curved boundary lines. For example, the first and second electrodes may comprise one or more cutouts. For example, the first and second electrodes may comprise no cutouts. For example, the first and second electrodes may comprise a constant density. For example, the first and second electrodes may comprise a varying density, in particular one or more sections with varying density.

For example, the first and second solid dielectric elements may have a cylindrical shape. For example, the cylindrical shape of the second solid dielectric element has a diameter smaller than a diameter of the cylindrical shape of the second solid dielectric element and the second solid dielectric element is configured to move within and/or into the first solid dielectric element. For example, the cylindrical shape of the second solid dielectric element has a diameter larger than a diameter of the cylindrical shape of the second solid dielectric element and the second solid dielectric element is configured to receive the first solid dielectric element, when moving along the first solid dielectric element. For example, the second solid dielectric element is configured to move parallel to a surface of the first solid dielectric element facing the second solid dielectric element. For example, a movement of the second solid dielectric element along the first solid dielectric element is a combination of a lateral and a rotational movement, e.g., a spiral movement. For example, an axis of rotation of the rotational movement is a central longitudinal axis of the cylindrical shape of the first solid dielectric element and the second solid dielectric element is in addition configured to move parallel to the central longitudinal axis of the cylindrical shape of the first solid dielectric element. For example, the first and second electrodes have a spiral shape.

Alternatively to the shapes of the first and second electrodes described above, a usage of other shapes of the first and second electrodes may be possible. The first and second electrodes may, e.g., have shapes comprising straight boundary lines. For example, the first and second electrodes may have shapes comprising curved boundary lines. For example, the first and second electrodes may comprise one or more cutouts. For example, the first and second electrodes may comprise no cutouts. For example, the first and second electrodes may comprise a constant density. For example, the first and second electrodes may comprise a varying density, in particular one or more sections with varying density.

For example, the first solid dielectric element may be provided as a layer of a multi-layer body of the stator. For example, the first electrode may be provided as a further layer of the multi-layer body of the stator. For example, the second solid dielectric element may be provided as a layer of a multi-layer body of the glider. For example, the second electrode may be provided as a further layer of the multi-layer body of the glider.

For example, the electrostatic gliding transducer is configured to keep a distance between the first and second dielectric element constant, when the glider moves along the direction of movement in the activated state of the transducer.

For example, the electrostatic gliding transducer is adapted for an additional moving of the glider towards the stator, when the glider moves along the direction of movement in the activated state of the transducer. The additional moving of the glider may reduce a distance between the first and second dielectric element.

During a contraction of an electrostatic gliding transducer, e.g., two concurrent motions may occur, i.e., a squeezing motion and a gliding motion. Due to the squeezing motion, the stator and the glider of the electrostatic gliding transducer may approach each other and squeeze the lubrication layer of dielectric liquid between the stator and the glider, because of the electrostatic normal force. Thereby, a thickness of the lubrication layer is reduced. Due to the gliding motion, the glider glides to reduce the offset to the stator, because of the electrostatic gliding force. In the following explanations, the stator and glider, e.g., provided in form of solid dielectric films, are represented as idealized parallel plates. Thereby, edge effects are ignored. The lubrication layer of dielectric liquid is denoted as a fluid layer.

A period of time t for the thickness of the layer of dielectric liquid to decrease from ĥ₀ to a value ĥ₁ may be given by $t = \frac{{w}^{3} {L}^{3}}{{w}^{2} + {L}^{2}} \frac{n}{2 {F}_{n}} \left(\frac{1}{{\hat{h}}_{1}^{2}}-\frac{1}{{\hat{h}}_{0}^{2}}\right) .$

A period of time t is thus proportional to the viscosity of the liquid layer and inversely proportional to the applied normal force Fₙ. Within this period of time t, which depends on the viscosity, the hydrodynamic pressure p will maintain a certain thickness of the layer of dielectric liquid, while being exposed to the normal force Fₙ.

For the squeezing motion, two approaching parallel plates with an overlapping area of A = wL may be considered, which squeeze a layer of dielectric liquid in between, and the reduction of the thickness of the layer of dielectric liquid is impeded by a hydrodynamic pressure inside the dielectric liquid. This pressure p is a result of the viscous flow in the layer of dielectric liquid as it is squeezed out from the region between the plates and satisfies the relation ${∇}^{2} p = \frac{12 η}{{\hat{h}}^{3}} \frac{d \hat{h}}{dt} ,$ where η is the viscosity of the dielectric liquid, ĥ is the thickness of the layer of dielectric liquid, and $d \hat{h} / dt$ is the speed at which the plates change distance. The fluid is a Newtonian fluid and is assumed to be incompressible. Based on the Navier-Stokes equations for incompressible Newtonian fluids, the hydrodynamic pressure may then be solved as $p = - \frac{1}{{w}^{2} + {L}^{2}} \frac{12 η}{{\hat{h}}^{3}} \frac{d \hat{h}}{dt} xy \left(x-L\right) \left(y-w\right) ,$ where x and y denote the distances from a corner of a plate. Integrating the hydrodynamic pressure p over the overlapping area, i.e., *∫* pdA, equals the normal force Fₙ that squeezes the layer of dielectric liquid, as described in the following equation, $\frac{1}{{\hat{h}}^{3}} \frac{d \hat{h}}{dt} = - \frac{{w}^{2} + {L}^{2}}{{w}^{3} {L}^{3}} \frac{1}{η} {F}_{n} .$

Extrapolating the above principles to the squeezing motion of an electrostatic gliding transducer, the existence of such a period of time t indicates that the thickness of the lubrication layer is a transient variable. Within this period of time t, an electrostatic gliding transducer may be able to harness hydrodynamic lubrication and consequently contract under a very low friction. The period of time t may be elongated by using a dielectric liquid with a higher viscosity.

For the gliding motion, two parallel plates may sandwich a layer of dielectric liquid with a fixed distance ĥ in between. When one plate moves parallel to the other plate, a shear flow is induced in the layer of dielectric liquid. The local velocity of the layer of dielectric liquid may be expressed as $u \left(z\right) = \frac{U}{\hat{h}} z$, where U represents a speed of the moving plate, and z is a distance from the stationary plate. The shear stress in the fluid layer is $τ = η \frac{\partial u}{\partial z} = η \frac{U}{\hat{h}} .$

A viscous force Fᵥ resulting from a shear flow, which opposes the gliding motion, may be calculated as ${F}_{v} = \int τ \left(z=\hat{h}\right) dA = η \frac{U}{\hat{h}} wL .$

The viscous force Fᵥ, which is the major source of friction in hydrodynamic lubrication, is inversely proportional to the distance ĥ between the plates and directly proportional to the viscosity η of the dielectric liquid.

Extrapolating the above principles to the gliding motion of an electrostatic gliding transducer, the viscous force Fᵥ indicates that the frictional force is related to the state of the glider, i.e., its transient speed U, the transient thickness ĥ of the lubrication layer of dielectric liquid, as well as the overlap length L, and it is related to the viscosity of the dielectric liquid η. The frictional force is thus proportional to the viscosity of the dielectric liquid.

In an electrostatic gliding transducer, the two motions of squeezing and gliding may be coupled by the thickness ĥ of the lubrication layer of dielectric liquid and the overlap length L. Thus, the two motions may not be modeled independently. Therefore, it may be challenging to quantitatively evaluate an influence of geometric and material parameters on the performance of electrostatic gliding transducers. For instance, viscosity of the dielectric liquid has a positive effect on maintaining the lubrication layer, while it has the negative effect of increasing the frictional force.

For example, the hydrodynamic lubrication comprises a coefficient of friction within a range from 10⁻⁴ to 10⁻⁸. Preferably the hydrodynamic lubrication comprises a coefficient of friction within a range from 10⁻⁵ to 10⁻⁸. More preferably the hydrodynamic lubrication comprises a coefficient of friction within a range from 10⁻⁶ to 10⁻⁸. Examples may have the beneficial effect of enabling the electrostatic gliding transducer, using the low coefficient of friction, to reach an improved actuation performance compared to other types of actuators with higher coefficients of friction.

For example, the electrostatic gliding transducer further comprises one or more length limiting elements, e.g., strips or ribbons, fixing a relative initial position of the stator and the glider of the electrostatic gliding transducer.

For example, the electrostatic gliding transducer further comprises a spring element. The spring element is in a resting state in a deactivated state of the transducer and is adapted for storing potential energy, when the glider moves relative to the stator along the direction of movement in the activated state of the transducer with the relative offset between the two electrodes being altered.

For example, the spring element adapted for storing potential energy, when the glider moves and the relative offset between the two electrodes is decreased. For example, the spring element adapted for storing potential energy, when the glider moves and the relative offset between the two electrodes is increased.

An electrostatic gliding transducer may, e.g., comprise one or more spring elements configured for storing energy during an activation of the electrostatic gliding transducer and for releasing the stored energy, e.g., after a deactivation of the electrostatic gliding transducer to accelerate a reset of a glider of the electrostatic gliding transducer and, e.g., an external load mounted to the respective glider to their initial position. The one or more spring elements may, e.g., release the stored energy using a mechanical force directed in a direction opposite to a previous direction of movement of the glider during the actuation. The one or more spring elements may, e.g., release the stored energy using a mechanical force directed in a direction perpendicular to the previous direction of movement of the glider during the actuation.

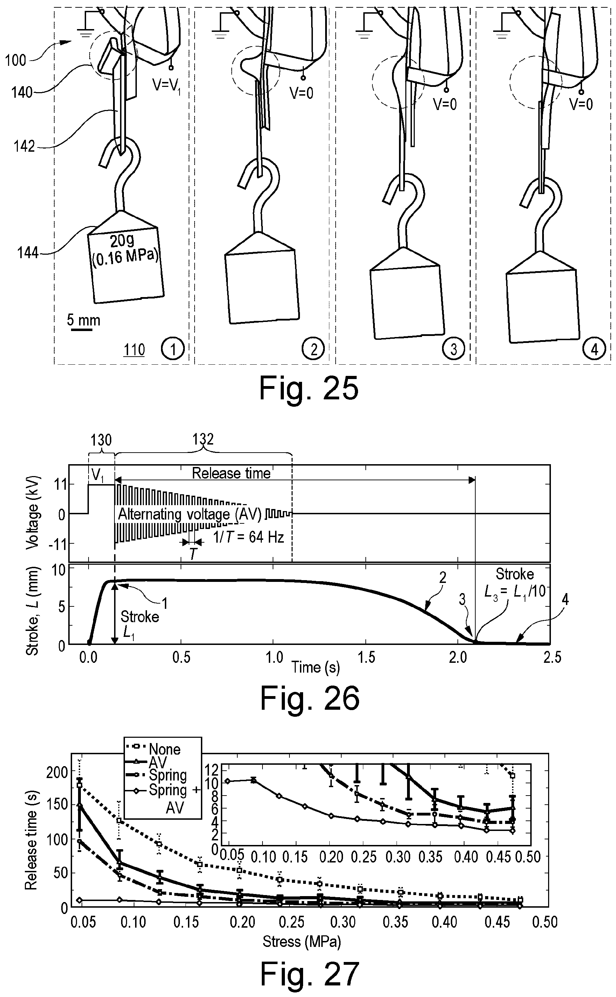

The spring element may, e.g., be used as a peeling spring for reducing electrostatic clutching effects. A reduction of electrostatic clutching effects may result in a shortening of a release time of the electrostatic gliding transducer. To quantify the effect electrostatic clutching, the release time may be measured, which is defined as a time period from the end of the driving voltage signal and the start of the deactivation voltage signal to the moment, when the stroke reduces to 10% of the actuation stroke (see, e.g., L₁ in Fig. 26). A shorter release time may allow for an increase actuation frequency of the electrostatic gliding transducer. For example, the spring element may be used on its own for reducing electrostatic clutching effects. For example, the spring element may be used in combination with other measures for reducing electrostatic clutching effects.

An electrostatic gliding transducer may experience electrostatic clutching and related interfacial charging effects after sustained exposure to electric fields. When the driving voltage is applied to an electrostatic gliding transducer, electric charges may accumulate on the interfaces between the solid dielectric elements and dielectric liquid. When the driving voltage is switched off, these accumulated charges may contribute to an electrostatic clutching, which may impede a return of electrostatic gliding transducer to its initial deactivated state until these interfacial charges are sufficiently dissipated. The dissipation of the accumulated electric charges is a process that may take some time, e.g., minutes, and may drastically limit an actuation frequency.

To reduce electrostatic clutching effects and to improve, i.e., increase, the actuation frequency, e.g., a spring element configured as a peeling spring located may be used. The peeling spring stores elastic energy during the contraction phase of the electrostatic gliding transducer and may support a separation of the solid dielectric elements as well as a restoration of the lubrication layer between the solid dielectric elements during a return phase of the electrostatic gliding transducer into a geometric configuration of the initial deactivated state.

For example, the stator and glider with the dielectric liquid are arranged in a common sealed packaging envelope providing a reservoir of the dielectric liquid. Examples may enable a usage of the packaged electrostatic gliding transducer in air and still ensuring an hydrodynamically gliding of the glider on the dielectric liquid.

For example, a single electrostatic gliding transducer may be arranged inside the sealed packaging envelope. For example, a plurality of electrostatic gliding transducers may be arranged inside the sealed packaging envelope. For example, the sealed packaging envelope may comprise a set of electrostatic gliding transducers mechanically connected to each other. For example, the sealed packaging envelope may comprise an antagonistic pair of electrostatic gliding transducers inside. The antagonistic pair of electrostatic gliding transducers comprises two mechanically connected electrostatic gliding transducers, which are being configured to be activated alternately as antagonists.

For example, the electrostatic gliding transducer further comprises one or more controllers. For example, the electrostatic gliding transducer comprises a controller configured for controlling the driving voltage being applied to the electrodes in the activated state of the electrostatic gliding transducer. Examples may have the beneficial effect that a controlled actuation of the electrostatic gliding transducer may be enabled. This controller may, e.g., enable a selective activation of the electrostatic gliding transducer.

For example, the controller further is configured for controlling a deactivation voltage being applied to the electrodes depending on a deactivation criterion. The deactivation voltage comprises an alternating polarity and/or a decaying amplitude.

An electrostatic gliding transducer may comprise one or more controller configured for applying activation and/or deactivation voltages to the electrostatic gliding transducer being used as an electrostatic gliding actuator.

Examples may enable a selective deactivation of the electrostatic gliding transducer. The alternating polarity voltage may, e.g., be used for reducing electrostatic clutching effects. A reduction of electrostatic clutching effects may result in a shortening of a release time of the electrostatic gliding transducer. A shorter release time may allow for an increase actuation frequency of the electrostatic gliding transducer. For example, the application of the voltage with the alternating polarity and/or with the decaying amplitude may be used on its own for reducing electrostatic clutching effects. For example, the application of the voltage with the alternating polarity and/or with the decaying amplitude may be used in combination with other measures for reducing electrostatic clutching effects. For example, the application of the voltage with the alternating polarity and/or with the decaying amplitude may be used in combination with a spring element configured as a peeling spring for reducing electrostatic clutching effects.

For example, the deactivation criterion is one of the following: receiving a deactivation signal, reaching a predefined end of the driving voltage, reaching a predefined deactivation time, reaching a predefined deactivation displacement of the glider. Using a deactivation criterion may, e.g., enable an automated deactivation of the electrostatic gliding transducer. Thus, rather than simply turning off the driving voltage, such an automation may, e.g., reduce the driving voltage using the deactivation voltage in form of the voltage with the alternating polarity voltage and/or with the decaying amplitude. For example, a deactivation may be initiated, i.e., a deactivation voltage may be applied in response to receiving a deactivation signal. For example, an electrostatic gliding transducer may be activated resulting in a contracted state after moving of the glider and held in this contracted state until a deactivation signal is received. In response to a reception of such a deactivation signal, the driving voltage may not simply be turned off. The driving voltage may rather be reduced using the deactivation voltage in form of the alternating polarity voltage with decaying amplitude. Alternatively, the deactivation voltage may be applied in response to a predefined end of the driving voltage being reached. This may enable an automated deactivation of the electrostatic gliding transducer at an end of the driving voltage. The predefined end of the driving voltage may, e.g., be defined relative to a start of the driving voltage. Alternatively, the deactivation voltage may be applied in response to a predefined deactivation time being reached. This may enable an automated deactivation of the electrostatic gliding transducer. The predefined deactivation time may, e.g., be defined relative to an application of the driving voltage. Alternatively, the deactivation voltage may be applied in response to a predefined deactivation displacement of the glider being reached. This may enable an automated deactivation of the electrostatic gliding transducer. The predefined deactivation displacement of the glider may, e.g., be defined relative to a reference position of the glider in the deactivated state of the transducer. The predefined deactivation displacement of the glider may, e.g., be a displacement of the glider along the direction of movement relative to the reference position.

The deactivation voltage may, e.g., be configured for accelerating a reset of the glider of the electrostatic gliding transducer its initial position. In case a load it mounted to the load glider, usage of the deactivation voltage may, e.g., accelerate a reset of the glider and the load to their initial positions. The deactivation voltage may, e.g., comprise a periodical voltage signal. The periodical voltage signal may, e.g., be a voltage signal from zero to a desired voltage value. For example, the periodical voltage signal may increase from zero to the desired voltage value and/or decrease from the desired voltage value within a period. For example, a voltage signal function may be maintained from period to period. For example, the deactivation voltage may vary the voltage signal function. For example, the deactivation voltage may vary the voltage signal function after each period. For example, a length of the period may be maintained. For example, the deactivation voltage may vary the lengths of the periods. For example, the deactivation voltage may alter the length of the period after each period. For example, the deactivation voltage may reverse polarity. For example, the deactivation voltage may reverse polarity after each period. For example, the deactivation voltage may decay within a period. For example, the deactivation voltage may decay from period to period with time.

To reduce electrostatic clutching effects and to increase the actuation frequency, e.g., an alternating polarity deactivation voltage signal may be used. An alternating polarity deactivation voltage signal continuing a driving voltage signal with a linearly decaying amplitude may accelerate the dissipation of the accumulated electric charges.

For example, a strategy may be used, which combines a spring element configured as a peeling spring, e.g., located in the stator of the electrostatic gliding transducer, with an alternating polarity deactivation voltage signal may be used. To quantify the effect of both mechanisms, the release time may be measured. Both the spring element and the deactivation voltage signals may reduce the release time individually. However, when these two mechanisms are combined, the release time of the electrostatic gliding transducer may, e.g., be reduced from minutes to seconds at low loads and from tens of seconds to seconds at high loads.

A short release time without sacrificing stroke may, e.g., be achieved with a voltage pattern consisting of a voltage-on time of 0.125 s followed by a 64 Hz AV deactivation voltage for 1 s. Repeating this voltage pattern every two seconds, i.e., with a 0.5 Hz actuation frequency, and under an applied stress of 0.55 MPa, the electrostatic gliding transducer may exhibit a cyclic actuation with full stroke. However, when further increasing the actuation frequency to 0.73 Hz, the electrostatic gliding transducer may not reach the maximum actuation strain and may not fully return to the undeformed initial deactivation state. Thus, the work capacity of the electrostatic gliding transducer, which is defined as the work done under a certain load, may be reduced at higher frequencies.

To evaluate the bandwidth of an electrostatic gliding transducer, its work capacity may be measured as a function of the actuation frequency at 11 kV for two loading conditions. At 0.55 MPa, the exemplary electrostatic gliding transducer may achieve its maximum output mechanical energy. The roll-off frequency for both cases is, e.g., 0.73 Hz.

The strategy to combine a spring element configured as a peeling spring with a deactivating signal allows the electrostatic gliding transducer to achieve stepwise linear contraction. A stepwise contraction may, e.g., be executed under a voltage pattern consisting of a 10 kV driving voltage with 50 ms voltage-on time followed by a 64 Hz AV deactivation voltage for 200 ms. The observed actuation response of the electrostatic gliding transducer implies that shortening of the voltage-on and AV times interrupted the gliding motion during contraction and thus could serve as input parameters for a control of electrostatic gliding transducers.

For example, a square-wave signal may be used as a driving voltage. For example, a driving voltage may be used, which is part of a voltage pattern further comprises a deactivation voltage with a linearly decaying amplitude continuing the driving voltage. The resulting voltage pattern may, e.g., resemble a step function, which is continued by an alternating polarity voltage. The resulting voltage pattern may, e.g., resemble a step function, which is continued by an alternating polarity voltage with a decaying amplitude, e.g., a linearly decaying amplitude. The resulting voltage pattern may, e.g., resemble a step function, which is continued by a voltage with a decaying amplitude, e.g., a linearly decaying amplitude.

For example, the controller further is configured for controlling a superposing of a sensing signal onto the driving voltage and/or onto the deactivation voltage. The controller is further, e.g., configured for using the sensing signal for determining a current capacitance of the electrostatic gliding transducer and using the determined current capacitance for determining a current relative offset between the two electrodes of the transducer.

For example, the first and second solid dielectric elements may, e.g., be made from polyimide, e.g., using polyimide sheets. For example, the electrodes may, e.g., be made from carbon, e.g., from carbon paint or carbon ink.

For example, the dielectric liquid may be an ester-based oil, e.g., an ester-based transformer oil. For example, the dielectric liquid may be a silicone oil.

For example, the electrostatic gliding transducer is adapted as an electrostatic gliding generator for converting mechanical energy into electrostatic energy. The converting comprises increasing the relative offset between the two electrodes by the moving of the glider relative to the stator along the direction of movement with the moving being due to a gliding force being generated in the activated state of the transducer by a mechanical force applied to the glider and the moving increasing a voltage between the two electrodes.

The electrostatic gliding transducer may, e.g., be adapted as an electrostatic gliding generator of electrostatic energy. A process of generation of electrostatic energy using the electrostatic gliding generator may comprise the following: The pair of electrodes of the electrostatic gliding transducer may be arranged in an aligned configuration with no offset between the electrodes along an intended direction of movement. The electrodes may be aligned, when at least one of the two electrodes fully overlaps with the other electrode. In case of electrodes of identical size, the electrodes nay fully align, when they fully overlap. Alternatively, the electrostatic gliding transducer may be arranged in a configuration with an offset between the electrodes along an intended direction of movement, which is adapted to be increased.

The electrodes are arranged on and mechanically connected to the solid dielectric elements, which are arranged between the electrodes. With the electrodes, also the solid dielectric elements are arranged spaced apart from each other with a clearance between the solid dielectric elements being filled with the dielectric liquid. Thus, two layers of solid dielectrics with the dielectric liquid in between may be provided.

An initial configuration voltage may be applied to the electrodes and an electrostatic field generated between the electrodes. The dielectrics, i.e. both the solid dielectric elements and the dielectric liquid, may react to electrostatic forces resulting from the generated electrostatic field and acting on the electrodes. When the electrodes are arranged in the aligned configuration, only an electrostatic normal force may act on the electrodes and via the electrodes, which are connected to the solid dielectric elements, on the dielectrics, i.e., the solid dielectric elements as well as the dielectric fluid between the same. When the electrodes are arranged with a small offset in the intended direction of movement, in addition to the electrostatic normal force an electrostatic gliding force may act on the electrodes and via the electrodes on the dielectrics.

The electrostatic normal force may act in a direction perpendicular to the intended direction of movement and/or perpendicular to the electrodes, i.e., to the surfaces of the electrodes facing each other. The electrostatic gliding force may act in the intended direction of movement. The gliding force may act parallel to the electrodes, i.e., the surface of the electrodes facing each other.

A circuit used for applying the initial configuration voltage to the electrodes may be open for both of the electrodes such that charges accumulated at the electrodes due to the previously applied initial configuration voltage are kept by the electrodes. Before the hydrodynamic lubrication layer formed between the solid dielectric elements by the dielectric liquid layer is diminished due to the electrostatic normal force acting on the electrodes, a mechanical force may be applied in the intended direction of movement to the glider of the electrostatic gliding transducer being used as a generator. The mechanical force may, e.g., be applied parallel to the electrodes, i.e., the surface of the electrodes facing each other. The glider may be dragged by the mechanical force in the intended direction of movement, thereby generating and/or increasing an offset between the electrodes along the intended direction of movement. Thus, the electrodes may be transferred to an offset configuration by the mechanical force being applied.

With the increasing offset due to mechanical force dragging the electrodes apart from each other along the intended direction of movement, the voltage between the electrodes increases. While the offset is increased and/or when a predefined offset has been reached, the electrodes of the electrostatic gliding transducer being used as a generator may be electrical connected, e.g., in parallel, to an additional capacitor having a voltage lower than the current voltage between the electrodes to pump the charges into the additional capacitor. Thereby, the voltage between the electrodes may decrease, while the voltage across the additional capacitor increases. The charges may stop moving, when the decreasing voltage between the electrodes and the increasing voltage across the capacitor become equal.

The additional capacitor may be disconnected from the electrodes and remove the mechanical force applied earlier removed before the hydrodynamic lubrication layer is diminished. The electrodes may move back into their initial state.

In another aspect, a set of electrostatic gliding transducers is disclosed, which comprises a plurality of mechanically connected electrostatic gliding transducers according to any of the previous examples. Examples may have the beneficial effect that a set of mechanically connected electrostatic gliding transducers may, e.g., increase an effect of the electrostatic gliding transducers compared to a single one of the electrostatic gliding transducer. Thus, a synergistic setup may be implemented. For example, an actuation stroke and/or force provided by the electrostatic gliding transducers may be scaled up compared to a single one of the electrostatic gliding transducer.

For example, at least two electrostatic gliding transducers of the plurality of electrostatic gliding transducers are configured to be activated alternately as antagonists. For example, a pair of electrostatic gliding transducers or a pair of subsets of electrostatic gliding transducers may be configured such that one electrostatic gliding transducer or subset of electrostatic gliding transducers contracts, as the other electrostatic gliding transducer or subset of electrostatic gliding transducers relaxes. For example, the least two electrostatic gliding transducers configured to be activated alternately are sealed in one or more packaging envelopes providing one or more reservoirs of the dielectric liquid. For example, the least two electrostatic gliding transducers configured to be activated alternately are sealed in a common packaging envelope providing a common reservoir of the dielectric liquid. For example, the least two electrostatic gliding transducers configured to be activated alternately are sealed in two different packaging envelopes providing two different reservoirs of the dielectric liquid.

Examples may have the beneficial effect that a set of mechanically connected electrostatic gliding transducers may, e.g., implemented in an antagonistic setup. Thus, a controlled movement, e.g., of a joint, in opposite directions may be implemented using the antagonistic setup of electrostatic gliding transducers.

For example, a set of electrostatic gliding transducers may comprise a plurality of electrostatic gliding transducers mechanically connected in parallel or in series. The electrostatic gliding transducers of the set of electrostatic gliding transducers may be arranged such that a configuration of the stators and the gliders of the respective electrostatic gliding transducers may, e.g., be mirrored and/or repeated. Following a direction of an arrangement of the electrostatic gliding transducers within the set, in which the electrostatic gliding transducers are mechanically connected to each other, the orientations of the stator and the glider of the electrostatic gliding transducers may, e.g., be repeated from electrostatic gliding transducer to electrostatic gliding transducer along the direction or the orientations of the stator and the glider of the electrostatic gliding transducers may, e.g., be mirrored from electrostatic gliding transducer to electrostatic gliding transducer along the direction.

The electrostatic gliding transducers may, e.g. be arranged in a one-dimensional setup, e.g., in a row. The configuration is, e.g., mirrored, when along the row an orientation of each subsequent electrostatic gliding transducer is mirrored relative to an orientation of an immediately preceding electrostatic gliding transducer. Thus, a glider of a preceding electrostatic gliding transducer of the set of electrostatic gliding transducers may be connected to a glider of a subsequent electrostatic gliding transducer of the set of electrostatic gliding transducers, while a stator of the subsequent electrostatic gliding transducer following the glider of the subsequent electrostatic gliding transducer in a direction along the row may be connected to a stator of an electrostatic gliding transducer following the subsequent electrostatic gliding transducer along the row. The configuration is, e.g., repeated, when along the row an orientation of each subsequent electrostatic gliding transducer is identical relative to an orientation of an immediately preceding electrostatic gliding transducer. Thus, a glider of a preceding electrostatic gliding transducer of the set of electrostatic gliding transducers may be connected to a stator of a subsequent electrostatic gliding transducer of the set of electrostatic gliding transducers, while a glider of the subsequent electrostatic gliding transducer following the stator of the subsequent electrostatic gliding transducer in a direction along the row may be connected to a glider of an electrostatic gliding transducer following the subsequent electrostatic gliding transducer along the row.

The electrostatic gliding transducers may, e.g. be arranged in a two-dimensional setup, e.g., in a matrix, or a three-dimensional setup. The configuration is, e.g., mirrored, when along one dimension of the setup an orientation of each subsequent electrostatic gliding transducer is mirrored relative to the immediately preceding electrostatic gliding transducer. The configuration is, e.g., repeated, when along one dimension of the setup an orientation of each subsequent electrostatic gliding transducer is identical to the orientation immediately preceding electrostatic gliding transducer.

For example, a set of electrostatic gliding transducers may, e.g., comprise a plurality of subsets of electrostatic gliding transducers, with are mechanically connected in parallel or in series. For example, electrostatic gliding transducers may be arranged in subsets of electrostatic gliding transducers. of the subsets of electrostatic gliding transducers may, e.g., comprise a plurality of electrostatic gliding transducers, which are mechanically connected in parallel or in series. The subsets of electrostatic gliding transducers may, e.g., be mechanically connected in parallel or in series to provide the set of electrostatic gliding transducers. The resulting set of set of electrostatic gliding transducers may, e.g., comprise a plurality of subsets of electrostatic gliding transducers.

For example, a set of electrostatic gliding transducers may, e.g., comprise a plurality of packaged electrostatic gliding transducers, each electrostatic gliding transducers arranged inside a sealed packaging envelope, which are mechanically connected in parallel and/or in series. Thus, the set of electrostatic gliding transducers may, e.g., comprise a plurality of sealed packaging envelopes, each comprising an electrostatic gliding transducer packaged therein. For example, a set of electrostatic gliding transducers may, e.g., comprise a plurality of packaged subsets of electrostatic gliding transducers, each subset of electrostatic gliding transducers arranged inside a sealed packaging envelope, which are mechanically connected in parallel and/or in series. Thus, the set of electrostatic gliding transducers may, e.g., comprise a plurality of sealed packaging envelopes, each comprising a subset of electrostatic gliding transducers packaged therein. For example, a set of electrostatic gliding transducers may, e.g., comprise a plurality of sealed packaging envelopes with one or more of the envelopes comprising a single electrostatic gliding transducer packaged therein and one or more of the envelopes comprising a subset of electrostatic gliding transducers packaged therein. Each of the subsets may comprise two or more electrostatic gliding transducers.

For a biomimetic robotic system an antagonistic pair of electrostatic gliding transducers may be used, which are coupled to control a rotation of a joint. Alternatively, e.g., a pair of subsets of electrostatic gliding transducers may be used with each subset comprising a plurality of electrostatic gliding transducers. For example, an antagonistic pair of electrostatic gliding transducers may be attached to a frame, e.g., an acrylic frame, and connected to a roller via threads, e.g., cotton threads. When actuating a first electrostatic gliding transducer A of the antagonistic pair of electrostatic gliding transducers with a first driving voltage, e.g., V_{A} = 9 kV, followed by a second driving voltage, e.g., V_{B} = 10 kV, used for actuating a second electrostatic gliding transducer B of the antagonistic pair of electrostatic gliding transducers with a 1 s delay, the robotic arm could achieve a full range of motion, e.g., ~40°, in 1 s. In contrast, unloaded electrostatic gliding transducers may require ~10 s for returning to their initial position, highlighting the benefit of using antagonistic pairs towards improving a frequency response of biomimetic robots using electrostatic gliding transducers.

In case of a pair of agonistic electrostatic gliding transducers, the level of driving voltage used for actuating the different agonistic electrostatic gliding transducers may be different. For example, the driving voltage for one of the agonistic electrostatic gliding transducers may be higher than for the other one. A first electrostatic gliding transducer of a pair of agonistic electrostatic gliding transducers, i.e., electrostatic gliding transducer A, may be actuated using a 9 kV voltage pattern and the second electrostatic gliding transducer of a pair of agonistic electrostatic gliding transducers, i.e., electrostatic gliding transducer B, may be actuated under a 10 kV voltage pattern with a one-second delay. Using a slightly higher voltage on electrostatic gliding transducer B may reduce a time needed to reset the initial position of electrostatic gliding transducer A.

An antagonistic pair of electrostatic gliding transducers may, e.g., be mechanically connected to a joint. A first one of the electrostatic gliding transducers may be mechanically connected to a first side of the joint, while a second one of the electrostatic gliding transducers may be mechanically connected to a second side of the joint. The second side of the joint may, e.g., be a side opposite of the first side of the joint. The electrostatic gliding transducers may, e.g., each be packaged inside a sealed packaging envelope. For example, the first electrostatic gliding transducer may be packaged in a first sealed packaging envelope and mechanically connected to the first side of the joint. For example, the second electrostatic gliding transducer may be packaged in a second sealed packaging envelope and mechanically connected to the second side of the joint.

An antagonistic arrangement of electrostatic gliding transducers may, e.g., comprise a first set of electrostatic gliding transducers and a second set of electrostatic gliding transducers. The first and second set of electrostatic gliding transducers may, e.g., be configured to be activated alternately as antagonists, i.e., as antagonistic sets of electrostatic gliding transducers. The antagonistic arrangement of electrostatic gliding transducers may, e.g., be mechanically connected to a joint. The first set of electrostatic gliding transducers may be mechanically connected to a first side of the joint, while the second set of electrostatic gliding transducers may be mechanically connected to a second side of the joint. The second side of the joint may, e.g., be a side opposite of the first side of the joint. The sets of electrostatic gliding transducers may, e.g., each be packaged inside one or more sealed packaging envelopes. For example, the first set of the electrostatic gliding transducers may be packaged in a first sealed packaging envelope and mechanically connected to the first side of the joint. For example, the second set of the electrostatic gliding transducers may be packaged in a second sealed packaging envelope and mechanically connected to the second side of the joint. Each of the sets may comprise a plurality of electrostatic gliding transducers mechanically connected to each other. For example, each of the sets of electrostatic gliding transducers may, e.g., comprise a plurality of subsets of electrostatic gliding transducers mechanically connected to each other. For example, each of the subsets may comprise a plurality of electrostatic gliding transducers mechanically connected to each other.

For example, two or more electrostatic gliding transducers of the plurality of electrostatic gliding transducers are mechanically connected in series. For example, two or more electrostatic gliding transducers of the plurality of electrostatic gliding transducers are mechanically connected in parallel.

A mechanical connection between electrostatic gliding transducers may, e.g., be established using one or more connecting components. The mechanical connection may, e.g., be a screwing connection. The connecting components may, e.g. comprise a screw and/or a screw nut. The mechanical connection may, e.g., be implemented as a non-destructively removable connection. A non-destructively removable connection is a connection, which may be removed without destructing connecting components used for establishing the respective connection.

A mechanical connection between electrostatic gliding transducers may, e.g., be established using an adhesive. The mechanical connection may, e.g., be an adhesive bonding. The mechanical connection may, e.g., be implemented as a destructively removable connection. A destructively removable connection is a connection, which requires an at least partial destructing connecting of an element used for establishing the respective connection.

Electrostatic gliding transducers may, e.g., be arranged in series and/or in parallel to scale up actuation stroke and force, respectively. For example, a n × m-array of electrostatic gliding transducers, with n units in series and m layers in parallel may be provided. For example, a 2 × 6-array of 13 cm wide electrostatic gliding transducers, with 2 units in series and 6 layers in parallel may be provided. When driven with an 11 kV voltage pattern, an array of electrostatic gliding transducers may, e.g., achieve a stroke of 10.89 mm with a 1 kg load, corresponding to 25.9% actuation strain.

For example, at least two of the plurality of electrostatic gliding transducers are arranged in a common sealed packaging envelope providing a reservoir of the dielectric liquid. Examples may have the beneficial effect that two or more electrostatic gliding transducers may be operable in air, while still ensuring a reservoir of the dielectric liquid for an effective hydrodynamic lubrication.

For example, at least two of the plurality of electrostatic gliding transducers are arranged mirror symmetrically in parallel and/or in series next to each other with the two gliders of the two electrostatic gliding transducers bonded to each other. Example may enable an efficient and effective implementation of packaged electrostatic gliding transducers allowing for a usage in air. For example, the two stators may be bonded to the sealed packaging envelope.

The operation principle of an electrostatic gliding transducers may only require a thin layer of dielectric liquid. For wide use in robotic systems, packaging strategies for electrostatic gliding transducers that operate in air may be beneficial. For this purpose, an array of electrostatic gliding transducers and a sufficient amount of dielectric liquid may be encased, in order to provide packaged electrostatic gliding transducers that can operate in air. To create a single package of electrostatic gliding transducers, e.g., two electrostatic gliding transducers may be placed in parallel. The two gliders of the electrostatic gliding transducers may be glued together, and the two stators of the electrostatic gliding transducers may be attached to a packing material, e.g., polyurethane packaging films. The packaging material may be sealed, e.g., heat sealed, to create a reservoir for dielectric liquid. Length limiting elements, e.g., two length limiting strips, may be taped to mounts of the packaging to prevent deformation of the packaging material under high load.

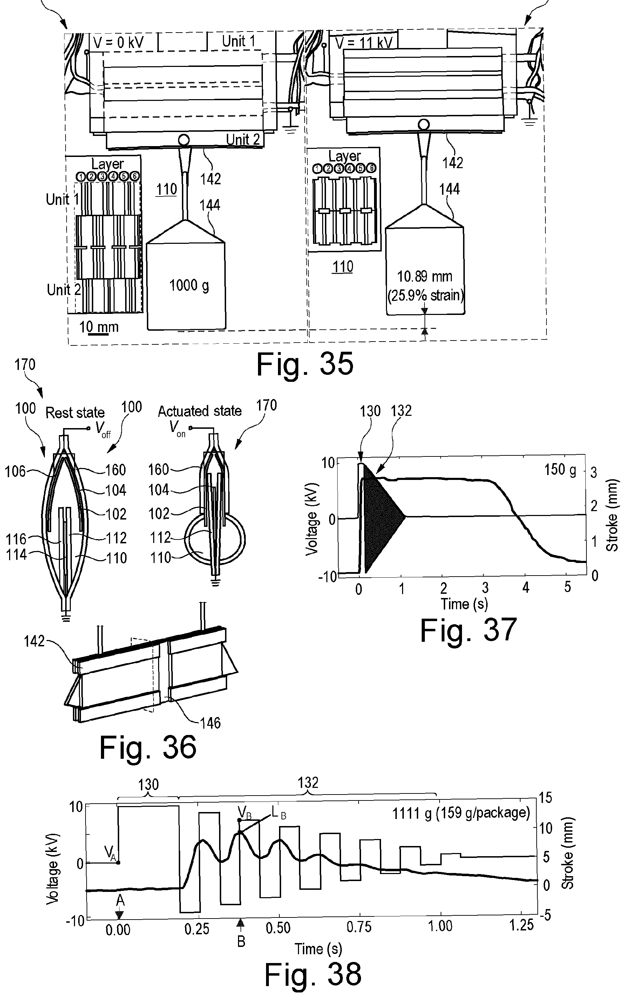

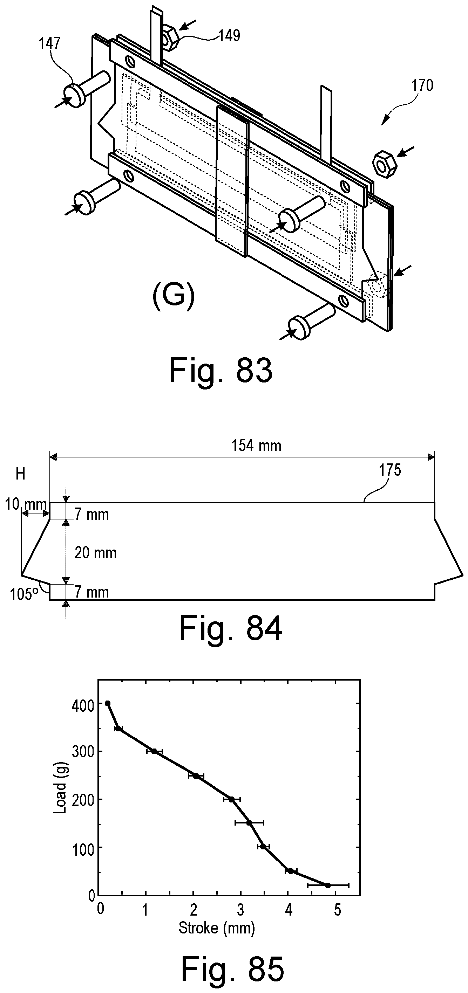

For example, Fig. 37 shows a transient stroke of a single package of two electrostatic gliding transducers when lifting a 150 g load and Fig. 85 provides a load-stroke performance of the single package. The specific energy of the packaged electrostatic gliding transducers may, e.g., only be 1.7 J/kg, since the packaging strategy used here resulted in a mass of the transducers only accounting for 3% of the total mass of the package.

For example, more than two electrostatic gliding transducers of the plurality of electrostatic gliding transducers are arranged in the common sealed packaging envelope in parallel next to each other. Adjacent electrostatic gliding transducers of the more than two electrostatic gliding transducers are arranged pairwise mirror symmetrically with gliders of the adjacent electrostatic gliding transducers being pairwise bonded to each other and stators of the adjacent electrostatic gliding transducers being pairwise bonded to each other. Example may enable an efficient and effective implementation of a packaged set of more than two electrostatic gliding transducers allowing for a usage in air.

The operation principle of an electrostatic gliding transducers may only require a thin layer of dielectric liquid. For wide use in robotic systems, packaging strategies for electrostatic gliding transducers that operate in air may be beneficial. For this purpose, an array of electrostatic gliding transducers and a sufficient amount of dielectric liquid may be encased, in order to provide packaged electrostatic gliding transducers that can operate in air. Packaged electrostatic gliding transducers may, e.g., be operated in arrayed structures to scale up force and/or stroke. For example, an n × m array of electrostatic gliding transducers may be packaged. For example, an exemplary arrangement of fourteen single packages of electrostatic gliding transducers arranged into a 2 × 7 array and driven by a 10 kV voltage pattern may, e.g., be configured to lift a weight of 1111 g and may reach a maximum stroke of 9.85 mm. A resulting transient stroke, e.g., as depicted in Fig. 38 displays a peculiar, but reproducible delay and oscillation pattern, which points to a complex interplay of the electrostatic gliding transducers with the packaging and array architecture.

In another aspect, a method for controlling an electrostatic gliding transducer according to any of the previous examples is disclosed. The method comprises applying energy of one of the two energy forms to the electrostatic gliding transducer for activating the electrostatic gliding transducer and for converting the applied energy at least partially into energy of the other one of the two energy forms. The converting comprises the altering of the relative offset between the two electrodes of the electrostatic gliding transducer along the direction of movement. The method may be used to control any of the exemplary electrostatic gliding transducer described herein.

For example, the applied energy is electrostatic energy, which is applied using a driving voltage applied to the two electrodes of the electrostatic gliding transducer for the activating of the electrostatic gliding transducer and for converting the applied electrostatic energy at least partially into mechanical energy. The converting comprises a decreasing of the relative offset between the two electrodes.

For example, the method further comprises applying a deactivation voltage to the electrodes depending on a deactivation criterion. The deactivation voltage comprises an alternating polarity and/or a decaying amplitude. The method may be used to control any of the exemplary electrostatic gliding transducer described herein. For example, the deactivation criterion is one of the following: receiving a deactivation signal, reaching a predefined end of the driving voltage, reaching a predefined deactivation time, reaching a predefined deactivation displacement of the glider.

The deactivation voltage may, e.g., be configured for accelerating a reset of the glider of the electrostatic gliding transducer its initial position. In case a load it mounted to the load glider, usage of the deactivation voltage may, e.g., accelerate a reset of the glider and the load to their initial positions. The deactivation voltage may, e.g., comprise a periodical voltage signal. The periodical voltage signal may, e.g., be a voltage signal from zero to a desired voltage value. For example, the periodical voltage signal may increase from zero to the desired voltage value and/or decrease from the desired voltage value within a period. For example, a voltage signal function may be maintained from period to period. For example, the deactivation voltage may vary the voltage signal function. For example, the deactivation voltage may vary the voltage signal function after each period. For example, a length of the period may be maintained. For example, the deactivation voltage may vary the lengths of the periods. For example, the deactivation voltage may alter the length of the period after each period. For example, the deactivation voltage may reverse polarity. For example, the deactivation voltage may reverse polarity after each period. For example, the deactivation voltage may decay within a period. For example, the deactivation voltage may decay from period to period with time.

For example, the method further comprises superposing a sensing signal onto the driving voltage. The sensing signal is, e.g., used for determining a current capacitance of the electrostatic gliding transducer and the determined current capacitance is, e.g., used for determining a current relative offset between the two electrodes of the transducer. The sensing signal is, e.g., used for determining a change of a capacitance of the electrostatic gliding transducer and the determined change of the capacitance is, e.g., used for determining a distance of movement of the glider along the direction of movement.

For example, the method further comprises superposing a sensing signal onto the deactivation voltage. The sensing signal is, e.g., used for determining a current capacitance of the electrostatic gliding transducer and the determined current capacitance is, e.g., used for determining a current relative offset between the two electrodes of the transducer. The sensing signal is, e.g., used for determining a change of a capacitance of the electrostatic gliding transducer and the determined change of the capacitance is, e.g., used for determining a distance of movement of the glider along the direction of movement.

From an electrical perspective, the structure of an electrostatic gliding transducers may represent a variable capacitor, where capacitance changes with the actuation stroke and the thickness of the lubrication layer. Thus, electrostatic gliding transducers may be endowed with capacitive self-sensing capabilities.

A sensing signal, i.e., a sensing voltage Vₛₑₙₛₑ may be superposed onto the driving voltage and/or deactivating voltage. A sensing current Iₛₑₙₛₑ resulting, when applying the sensing voltage Vₛₑₙₛₑ, may be determined based on a transient voltage Vₘₑₐₛ measured across a resistor R electrically connected to the electrostatic gliding transducer, i.e., Iₛₑₙₛₑ(t) = Vₘₑₐₛ(t)/R. By comparing an amplitude and phase shift between the sensing voltage Vₛₑₙₛₑ and the sensing current Iₛₑₙₛₑ, a direction φ and a value |Z|=Vₛₑₙₛₑ/Iₛₑₙₛₑ of the impedance Z may be calculated. Consequently, the current capacitance C may be determined, i.e., C = (2π f |Z| sin(φ))⁻¹, which is linked, in particular linearly linked, to the relative offset between the electrodes of the electrostatic gliding transducer. Using the determined current capacitance C, a current relative offset and a corresponding transient stroke of the electrostatic gliding transducer may be determined. A value for the transient stroke may, e.g., be given by an initial relative offset of the electrodes minus a current relative offset of the electrodes. The relationship between capacitance C and current relative offset may, e.g., be determined using calibration measurements of the offset-capacitance relationship, e.g., using optical measurement data.

For example, by superposing a low-voltage, e.g., ± 5 V, sinusoidal sensing signal onto a high-voltage, e.g., 10 kV, driving and/or deactivation voltage and by analyzing the resulting electrical impedance, a capacitance of the electrostatic gliding transducer and a corresponding stroke of the electrostatic gliding transducer may be determined as described above. A good agreement between results of a capacitive self-sensing and an optical evaluation has been found. For example, results for an actuation stroke as a function of time for different loads of an exemplary electrostatic gliding transducer may be in good agreement with each other.

The method of self-sensing may require a gradual change of voltage. Therefore, the driving voltage for self-sensing experiments may be slightly different from the other tests described herein. Specifically, it may be challenging to detect phase shift a φ for a steep edge on a voltage signal. Therefore, a slew rate of those steep edges may be limited for implementations of a self-sensing.

For example, the applied energy is mechanical energy applied to the glider of the electrostatic gliding transducer for the activating of the electrostatic gliding transducer and for converting the applied mechanical energy at least partially into electrostatic energy. The converting comprises an increasing of the relative offset between the two electrodes.

It is understood that one or more of the aforementioned examples may be combined as long as the combined examples are not mutually exclusive.

### BRIEF DESCRIPTION OF THE DRAWINGS

In the following, examples are described in greater detail making reference to the drawings in which:
Fig. 1 shows an exemplary electrostatic gliding transducer;
Fig. 2 shows another exemplary electrostatic gliding transducer;
Fig. 3 shows another exemplary electrostatic gliding transducer;
Fig. 4 shows another exemplary electrostatic gliding transducer;
Fig. 5 shows another exemplary electrostatic gliding transducer;
Fig. 6 shows an exemplary form of an electrode of an electrostatic gliding transducer;
Fig. 7 shows another exemplary form of an electrode of an electrostatic gliding transducer;
Fig. 8 shows another exemplary form of an electrode of an electrostatic gliding transducer;
Fig. 9 shows another exemplary form of an electrode of an electrostatic gliding transducer;
Fig. 10 shows another exemplary form of an electrode of an electrostatic gliding transducer;
Fig. 11 shows another exemplary form of an electrode of an electrostatic gliding transducer;
Fig. 12 shows another exemplary form of an electrode of an electrostatic gliding transducer;
Fig. 13 illustrates an exemplary activation of an exemplary electrostatic gliding transducer;
Fig. 14 illustrates the exemplary activation of Fig. 13;
Fig. 15 shows an exemplary activation of an exemplary electrostatic gliding transducer;
Fig. 16 is an exemplary stress-strain diagram for exemplary electrostatic gliding transducers;
Fig. 17 is an exemplary diagram for a relation between specific energy and specific power for exemplary electrostatic gliding transducers;
Fig. 18 illustrates an exemplary activation of an exemplary electrostatic gliding transducer;
Fig. 19 illustrates a relation between a force acting on the exemplary electrostatic gliding transducer of Fig. 18 and a resulting stroke for different coefficients of friction;
Fig. 20 illustrates a relation between a force acting on the exemplary electrostatic gliding transducer of Fig. 18 and a resulting stroke for different types of friction;
Fig. 21 is an exemplary stress-strain diagram for exemplary electrostatic gliding transducers at different driving voltages;
Fig. 22 is an exemplary energy-stress diagram for an input, output as well as an output/input-ratio for exemplary electrostatic gliding transducers;
Fig. 23 is an exemplary specific power-stress diagram for a peak and an average specific power of exemplary electrostatic gliding transducers;
Fig. 24 is an exemplary peak strain-stress diagram for exemplary electrostatic gliding transducers;
Fig. 25 illustrates an exemplary deactivation of an exemplary electrostatic gliding transducer;
Fig. 26 shows an exemplary voltage over time and an exemplary stroke over time diagram for the deactivation of Fig. 25;
Fig. 27 is an exemplary release time-stress diagram for different configurations of exemplary electrostatic gliding transducers;
Fig. 28 shows an exemplary voltage over time and an exemplary stroke over time diagram for a deactivation voltage with a first frequency;
Fig. 29 shows an exemplary voltage over time and an exemplary stroke over time diagram for a deactivation voltage with a second frequency;
Fig. 30 shows an exemplary diagram of a normalized work capacity as a function of a frequency of a deactivation voltage;
Fig. 31 shows an exemplary diagram of a stepwise linear contraction of an exemplary electrostatic gliding transducer;
Fig. 32 shows an exemplary activation of an exemplary electrostatic gliding transducer;
Fig. 33 shows exemplary stroke over time diagrams for different weights applied to the exemplary electrostatic gliding transducer of Fig. 32;
Fig. 34 illustrates an exemplary robotic arm driven by an antagonistic pair of exemplary electrostatic gliding transducers;
Fig. 35 illustrates an exemplary activation of an exemplary 2 × 6-array of exemplary electrostatic gliding transducers;
Fig. 36 illustrates exemplary electrostatic gliding transducers packaged in a common sealed packaging envelope;
Fig. 37 shows an exemplary voltage over time and an exemplary stroke over time diagram for the exemplary electrostatic gliding transducers of Fig. 36 packaged in a common sealed packaging envelope;
Fig. 38 shows an exemplary voltage over time and an exemplary stroke over time diagram for an exemplary 2 × 7-array of packaged electrostatic gliding transducers;
Fig. 39 illustrates an exemplary first step of fabricating exemplary electrostatic gliding transducers;
Fig. 40 illustrates an exemplary second step of fabricating exemplary electrostatic gliding transducers;
Fig. 41 illustrates an exemplary third step of fabricating exemplary electrostatic gliding transducers without a spring element;
Fig. 42 illustrates an exemplary third step of fabricating exemplary electrostatic gliding transducers with a spring element;
Fig. 43 illustrates mass contributions of different components to an exemplary electrostatic gliding transducer;
Fig. 44 provides estimates for a thickness of lubrication layer and a coefficient of friction for the exemplary stress-strain diagram of Fig. 21;
Fig. 45 illustrates fluid dynamics in a lubrication layer of an exemplary electrostatic gliding transducer;
Fig. 46 illustrates an exemplary activation of an exemplary electrostatic gliding transducer;
Fig. 47 illustrates an exemplary setup for controlling an exemplary electrostatic gliding transducer;
Fig. 48 shows an exemplary voltage over time, an exemplary charge over time, an exemplary force over time, and an exemplary stroke over time diagram for the exemplary electrostatic gliding transducer of Fig. 46;
Fig. 49 shows data from Fig. 48 plotted in a voltage-charge work-conjugate plane and a force-stroke work-conjugate plane;
Fig. 50 shows an exemplary stroke over time, a velocity over time, an acceleration over time, and a power over time diagram for an exemplary activation of an exemplary electrostatic gliding transducer;
Fig. 51 shows an exemplary relative permittivity-frequency diagram for different exemplary dielectric liquids;
Fig. 52 shows an exemplary stress-strain diagram for different exemplary dielectric liquids;
Fig. 53 shows an exemplary peak specific power-stress diagram for different exemplary dielectric liquids;
Fig. 54 shows an exemplary peak strain rate-stress diagram for different exemplary dielectric liquids;
Fig. 55 shows an exemplary viscosity-temperature diagram for an exemplary dielectric liquid;
Fig. 56 shows an exemplary relative permittivity-frequency diagram for an exemplary dielectric liquid at different temperatures;
Fig. 57 shows an exemplary stress-strain diagram for an exemplary dielectric liquid at different temperatures;
Fig. 58 shows an exemplary peak specific power-stress diagram for an exemplary dielectric liquid at different temperatures;
Fig. 59 shows an exemplary relative peak strain rate-stress diagram for an exemplary dielectric liquid at different temperatures;
Fig. 60 shows an exemplary relative permittivity-frequency diagram for different exemplary dielectric liquids;
Fig. 61 shows an exemplary stress-strain diagram for different exemplary dielectric liquids;
Fig. 62 shows an exemplary peak specific power-stress diagram for different exemplary dielectric liquids;
Fig. 63 shows an exemplary peak strain rate-stress diagram for different exemplary dielectric liquids;
Fig. 64 shows exemplary electrostatic gliding transducers with different electrode lengths;
Fig. 65 shows an exemplary force-stroke diagram for the exemplary electrostatic gliding transducers of Fig. 64;
Fig. 66 shows an exemplary stress-strain diagram for the exemplary electrostatic gliding transducers of Fig. 64;
Fig. 67 shows an exemplary peak specific power-stress diagram for the exemplary electrostatic gliding transducers of Fig. 64;
Fig. 68 shows an exemplary normalized stroke over time diagram for different configurations of exemplary electrostatic gliding transducers;
Fig. 69 shows an exemplary normalized stroke over time diagram for different configurations of exemplary electrostatic gliding transducers;
Fig. 70 shows an exemplary voltage pattern for controlling an exemplary electrostatic gliding transducer;
Fig. 71 shows an exemplary stroke-voltage-on time diagram for the voltage pattern of Fig. 70;
Fig. 72 shows an exemplary release time-AV frequency diagram for the voltage pattern of Fig. 70;
Fig. 73 shows an exemplary release time-AV time diagram for the voltage pattern of Fig. 70;
Fig. 74 shows an exemplary setup for implementing a stroke self-sensing for an exemplary electrostatic gliding transducer;
Fig. 75 shows an exemplary calibration diagram of a stroke-capacitance relationship for an exemplary electrostatic gliding transducer;
Fig. 76 shows exemplary stroke evaluations for an exemplary electrostatic gliding transducer using a self-sensing and an optical sensor;
Fig. 77 shows exemplary stroke evaluations for an exemplary electrostatic gliding transducer using a self-sensing and an optical sensor;
Fig. 78 shows an exemplary stroke-stress diagram for an exemplary electrostatic gliding transducer using a self-sensing and an optical sensor;
Fig. 79 shows exemplary components for assembling a robotic arm drivable by an antagonistic pair of exemplary electrostatic gliding transducers;
Fig. 80 shows an exemplary robotic arm with an antagonistic pair of exemplary electrostatic gliding transducers;
Fig. 81 shows an exemplary two-unit electrostatic gliding transducer;
Fig. 82 shows an exemplary set of six two-unit electrostatic gliding transducers;
Fig. 83 illustrates a fabrication of an exemplary set of two electrostatic gliding transducers arranged in a common sealed packaging envelope;
Fig. 84 shows an exemplary sealing line for the exemplary set of two electrostatic gliding transducers arranged in a common sealed packaging envelope of Fig. 83;
Fig. 85 shows an exemplary load-stroke diagram for the exemplary set of two electrostatic gliding transducers arranged in a common sealed packaging envelope of Fig. 83;
Fig. 86 shows mass contributions of different components of an exemplary set of two electrostatic gliding transducers arranged in a common sealed packaging envelope;
Fig. 87 shows mass contributions of different components for another packaging strategy;
Fig. 88 is a flowchart of an exemplary method for controlling an exemplary electrostatic gliding transducer;
Fig. 89 is a flowchart of an exemplary method for controlling an exemplary electrostatic gliding transducer;
Fig. 90 is a flowchart of an exemplary method for a stroke self-sensing for an exemplary electrostatic gliding transducer; and
Fig. 91 is a block diagram of an exemplary computational unit for controlling an exemplary electrostatic gliding transducer.

### DETAILED DESCRIPTION

In the following, similar elements are denoted by the same reference numerals.

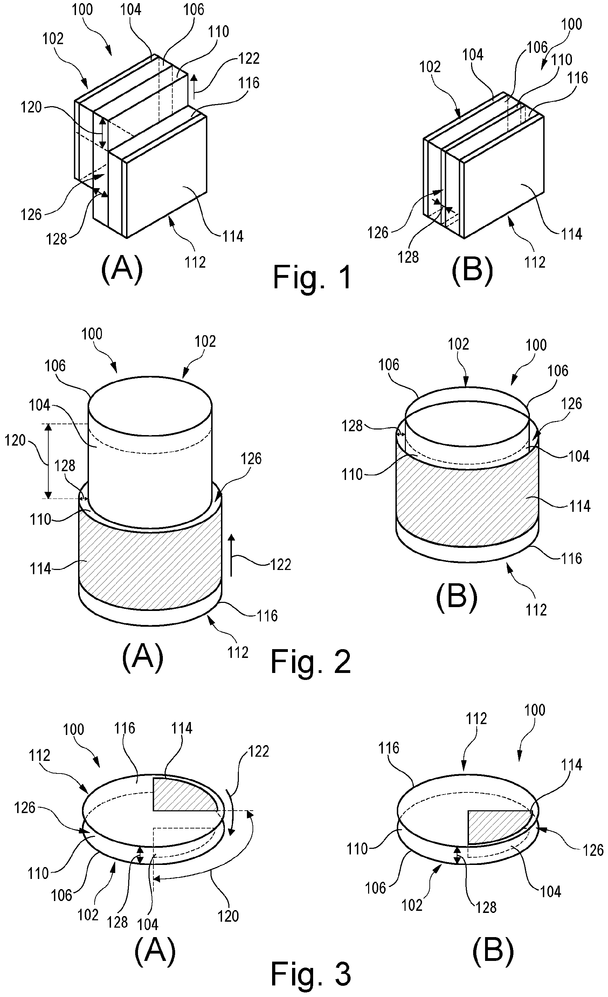

Fig. 1 shows an exemplary electrostatic gliding transducer 100, which comprises a stator 102 and a glider 112. The glider 112 is arranged movably relative to the stator 102 along a direction of movement 122. The stator 102 comprises a first electrode 104 arranged on a first solid dielectric element 106. The glider 112 comprises a second electrode 114 arranged on a second solid dielectric element 126. The first and second solid dielectric element 106, 116 of the exemplary electrostatic gliding transducer 100 shown in Fig. 1 are both cuboid-shaped. Both dielectric element 106, 116 extend parallel to each other. The first and second electrode 104, 114 arranged on the first and second solid dielectric element 106, 116, respectively, are rectangular. Thus, the stator 102 and glider 112 are also cuboid-shaped.

An electrostatic gliding transducer 100 with a cross-sectional setup comprising two electrodes 104, 114 arranged on two solid dielectric elements 106, 116 arranged between the two electrodes 104, 114 and separated from each other by a clearance126 filled with dielectric liquid 110, may be implemented in different ways. An extending of the cross-sectional setup along a straight line perpendicular to the cross-sectional plane may, e.g., result in the electrostatic gliding transducer 100 of Fig. 1 comprising two rectangular solid dielectric elements 106, 116, e.g., configured for a linear movement.

The electrostatic gliding transducer 100 nay be adapted as am electrostatic gliding actuator. In a deactivated state of the transducer 100, i.e., in the left configuration (A), the two electrodes 106, 116 are arranged with a relative offset 120 in the direction 122 of movement. The first and second dielectric element 106, 116 are arranged between the two electrodes 104, 114 and spaced apart from each other with a clearance 126 between the two dielectric elements 106, 116 filled with a dielectric liquid 110 providing for a hydrodynamic lubrication.

The electrostatic gliding transducer 100 is adapted for a moving of the glider 112 relative to the stator 102 along the direction 122 of movement with the second dielectric element 116 gliding hydrodynamically on the dielectric liquid 110 along the first dielectric element 106 due to a gliding force being generated in an activated state of the transducer by a driving voltage applied to the two electrodes 104 114. The moving of the glider 112 reduces the relative offset 120 between the two electrodes 104, 114 as shown in the right configuration (B) of the electrostatic gliding transducer 100. The moving of the glider 112 relative to the stator 102 along the direction 122 of movement may, e.g., be a translation movement. For example, the glider 112 is moved in a plane parallel to a surface of the first dielectric elements 106 facing the glider 112. For example, the electrostatic gliding transducer 100 is adapted for an additional moving of the glider 112 towards the stator 102, when the glider 102 moves along the direction 122 of movement in the activated state of the transducer 100. The additional moving of the glider 112 may, e.g., reduce a distance 128 between the first and second dielectric element 106, 116.

For fabricating an electrostatic gliding transducer 100 as depicted in Fig. 1, e.g., thin films may be used to provide the solid dielectric elements 106, 116. For example, polyimide films may be used to provide the solid dielectric elements 106, 116. For example, the glider 112 may be fabricated from a 25-µm-thick polyimide film. For example, the stator 102 may be fabricated from a 13-µm-thick polyimide film. For example, transformer oil may be used as dielectric fluid 110. For example, Envirotemp FR3 from Cargill Inc. may be used. This transformer oil is made from soybean oil CAS-Nr. 8001-22-7, with a weight percentage of over 99 %. Envirotemp FR3 has, e.g., a kinematic viscosity of 33 mm²/s to 35 mm²/s at 40°C.

For example, the solid dielectric elements 106, 116 may be submerged in the dielectric fluid 110.

An exemplary electrostatic gliding transducer may be configured to lift a weight. For example, the electrostatic gliding transducer may be able to lift a 50 g weight. The electrostatic gliding transducer may be able to exhibit a maximum actuation strain of 49% for a 9.8 mm stroke and a maximum actuation stress of 1.01 MPa for a 1.2 N force in response to a driving voltage of 11 kV being applied to the electrodes of the solid dielectric elements. The applied driving voltage, e.g., has square-wave form. These stress-strain characteristics of the electrostatic gliding transducer substantially exceed the performance of a type-I human skeletal muscle.

The exemplary electrostatic gliding transducer may, e.g., feature a specific energy of 263.0 J/kg and a peak specific power of 3664 W/kg, when using the transformer oil Envirotemp FR3, Cargill Inc. The electrostatic gliding transducer may, e.g., achieve a specific energy of 108.7 J/kg and a peak specific power of 5960 W/kg, when using a 20 cSt silicone oil, 4010, Carl Roth, CAS-Nr. 63148-62-9 with a kinematic viscosity of 18 to 22 mm²/s at 25 °C.

An exemplary electrostatic gliding transducer may, e.g., comprise three main components, i.e., a stator and a glider in form of a pair of solid dielectric elements, a pair of electrodes arranged on the stator and the glider, respectively, and a dielectric liquid.

The solid dielectric elements may, e.g., be made from polyimide films. For example, the solid dielectric elements may, e.g., be made from DuPont^{™} Kapton^{®} HN grade polyimide films. For example, the stator may be made from a polyimide film with a thickness of 13 µm. For example, the stator may be made using a polyimide film IM30-FM-000100 with a thickness of 13 µm from GoodFellow GmbH. For example, the stator may be made from a polyimide film with a thickness of 25 µm. For example, the glider may be made using a polyimide film IM30-FM-000130 with a thickness of 25 µm from GoodFellow GmbH.

The electrodes may be made from carbon paint, e.g., using DAG-T-502 from Ted Pella Inc., or screen-printable carbon ink, e.g., using CI-2051 from Nagase ChemteX America LLC.

The dielectric liquid may, e.g., be an ester-based transformer oil. The ester-based transformer oil may, e.g., be 0.92 × 10³ kg/m³ of Envirotemp FR3 from Cargill Inc. The dielectric liquid may, e.g., be a silicone oil with a viscosity of 20 cSt, i.e., 20 mm²/s at 25 °C. The dielectric liquid may, e.g., be a silicone oil, e.g., be 0.96 × 10³ kg/m³ of 4010 from Carl Roth, with a dynamic viscosity of 19.2 mPa s. The dielectric liquid may, e.g., be a silicone oil with a viscosity of 50 cSt, i.e., 50 mm²/s at 25 °C. The dielectric liquid may, e.g., be a silicone oil, e.g., be 0.97 × 10³ kg/m³ of 4020 from Carl Roth, with a dynamic viscosity of 48.5 mPa s. The dielectric liquid may, e.g., be a silicone oil with a viscosity of 500 cSt, i.e., 500 mm²/s at 25 °C. The dielectric liquid may, e.g., be a silicone oil, e.g., be 0.97 × 10³ kg/m³ of 4040 from Carl Roth, with a dynamic viscosity of 485 mPa s.

A configuration of an exemplary electrostatic gliding transducer may, e.g., comprise two solid dielectric elements in form of a 25 µm thick polyimide film and a 13 µm thick polyimide film with 30 mm wide and 10 mm long electrodes arranged thereon. Either the 25 µm thick polyimide film or the 13 µm thick polyimide film may be used as the stator. For example, there may be no differences in performance, when using the thicker and thinner film for stator and glider, respectively, or vice-versa. In other examples, an electrode length of 3 mm may be used. To prevent electrical arcing around the edges of electrostatic gliding transducers directly between the electrodes through the dielectric liquid during actuation, e.g., the solid dielectric elements may each extend laterally beyond the electrodes providing a framing section or frame around the electrodes. These framing sections may, e.g., have a width of 10 mm.

For example, a part of the framing section may be used as a mounting area for attaching one or more mounts to the electrostatic gliding transducer. At least one mount may, e.g., be attached at least to the glider. For example, to both solid dielectric elements, i.e., stator and glider, at least one mount may be attached.

In case of an electrostatic gliding transducer with a spring element, the stator and the glider have may both, e.g., have a width of 50 mm and a length of 30 mm. In case of an electrode with a length of 3 mm, the length of the glider may, e.g., be 3 mm. For example, the electrostatic gliding transducer may comprise additional aligning elements. The additional aligning elements may, e.g., be configured for holding the glider mechanically at an initial position in an initial deactivated state. For example, the electrostatic gliding transducer may comprise additional aligning elements in form of aligning strips. For example, the electrostatic gliding transducer may comprise four aligning strips.

For example, the electrostatic gliding transducer may comprise one or more spring elements. One or more spring elements may, e.g., be part of or attached to the stator. One or more spring elements may, e.g., be part of or attached to the glider. For example, the first solid dielectric element of the stator may comprise a flexible extension, which is configured as a spring element. For example, the second solid dielectric element of the glider may comprise a flexible extension, which is configured as a spring element.

In case of an electrostatic gliding transducer with a spring element, the glider may, e.g., be made from a 25 µm thick polyimide film with a width of 50 mm and a length of 30 mm. The stator may, e.g., be a 13 µm thick polyimide film with a width of 50 mm and a length of 40 mm. This polyimide film of the stator may, e.g., comprise a section forming the spring element. The section of the stator forming the spring element may, e.g., be 10 mm long. For example, the spring element may be configured for holding the glider in position. In this case, there may not be a need to use additional aligning elements. An aligning element may rather be provided in form of the spring element.

An exemplary electrostatic gliding transducer may, e.g., be hung on a frame, e.g., an acrylic frame. The exemplary electrostatic gliding transducer may, e.g., be submerged in a dielectric liquid provided in a vessel, e.g., in a glass tank. The exemplary electrostatic gliding transducer may be actuated with a driving voltage. The driving voltage may, e.g., be a high-voltage, square-wave pulse signal. The driving voltage may, e.g., be provided using a high voltage amplifier, e.g., Trek 50/12 from Advanced Energy or Trek 20/20C-HS from Advanced Energy. The driving voltage may, e.g., be provided with a current limit of 6 mA. The waveform of the driving voltage signal may, e.g., be generated using a computing device. The computing device may, e.g., comprise a processing device and a memory with computer executable instructions stored therein. Execution of the computer executable instructions by the processing device may cause the processing device to control the computing device to control an applying of a voltage signal to electrodes of the electrostatic gliding transducer. For example, a waveform of the voltage signal being applied is controlled. For example, a computing device in form of a personal computer, e.g., a Precision 3660 from Dell, may be used. For providing the computer executable instructions, a programming software, e.g., MATLAB R2020a from MathWorks may be used. For example, a definition of the waveform of the voltage signal may be sent to an amplifier. The definition of the waveform may, e.g., be sent via a data acquisition system (DAQ), e.g., a USB 6212 from National Instruments.

For testing an electrostatic gliding transducer, the electrostatic gliding transducer may, e.g., be pre-actuated for a multitude of activation-deactivation-cycles, e.g., for seven cycles and then tested. Testing may, e.g., starting from low loads and going up to higher loads. To ensure uniform operating conditions, stator and glider of the electrostatic gliding transducer may, e.g., be manually separated using metal tweezers after each actuation cycle unless specified otherwise.

Electrostatic gliding transducers have, e.g., been tested using heated dielectric liquid. The vessel, e.g., a glass tank, containing the dielectric liquid has been partially submerged in a beaker filled with stabilized silicone oil, e.g., 4212 from Carl Roth. Inside the beaker, the vessel was placed on support elements. For example, two acrylic blocks, e.g., two 20 mm thick acrylic blocks were used as support elements. The beaker was heated, e.g., on a heating plate, e.g., AREX from Fisherbrand, and the temperature of the heating plate was set to, e.g., 210 °C. Before each actuation, a thermometer, e.g., a 30.1040 from TFA-Dostmann, was used to monitor the local temperature of the dielectric liquid around the electrostatic gliding transducers. During the test, the temperature at the testing points was, e.g., measured to be stable at 65 ± 5 °C.

Quasi-static performance of an exemplary electrostatic gliding transducers, including stroke, strain, and specific energy was measured using a video recorded by an optical sensor, e.g., a DSLR camera, e.g., an EOS R5 from Canon with an RF100mm F2.8 L Macro IS USM from Canon. The actuation signal was a 1 s long, square-wave voltage signal. The displacement was measured using an open-source, video-analyzing software, e.g., Tracker ver. 6.0.10, and then analyzed using an analysis program, e.g., MATLAB. To minimize an error from noise, an initial position of the stroke L was defined as an average value from -25 % to -5 % of the voltage-on time, and a final position was defined as an average value from 50 % to 95 % of the voltage-on time, where 0 was a manually labeled starting point of contraction. Specifically, for a driving signal with a 1 s voltage-on time using the aforementioned definitions, an initial position is an average value of displacement from -0.25 s to -0.05 s before an onset of contraction, while a final position is an average value of displacement from 0.50 s to 0.95 s after the onset of contraction. For example, the contraction process is completed well before 0.50 s (see, e.g., Fig. 48). A strain s may be calculated from the stroke L and an initial functional length L₀ of the electrostatic gliding transducer, e.g., L₀ = 20 mm, which is defined as an overall length of the electrodes of the stator and glider, i.e., s = L/L₀.

A specific energy Eₛₚ may be calculated by numerically integrating an area under a force-stroke (F_{L}-L) curve, e.g., using trapezoidal integration in MATLAB, and dividing it by the mass of the electrostatic gliding transducer, i.e., m_{act}.

A buoyancy of one or more weights to be lifted as an applied load by the electrostatic gliding transducer in dielectric liquid was compensated mathematically using a volume of the respective one or more weights, e.g., measured using a measuring cylinder, and a density of the dielectric liquid. This compensation led to a multiplication factor, e.g., of 0.9, on the applied load. Thereby, the applied load on the electrostatic gliding transducer was calculated as F_{L} = 0.9 M g, where M is a sum of a mass of the weights and, e.g., a bottom mount, e.g., 1.23 g, and g is the gravitational constant, i.e., 9.8 N/kg. The mass m_{act} of the electrostatic gliding transducer is calculated using a sum of 1) a mass of an active film volume of the solid dielectric elements, given by a density, e.g., 1.43 × 10³ kg/m³, of a dielectric film used to provide the solid dielectric elements multiplied by its volume, e.g., defined by a width of an electrode covered area, e.g., 30 mm, a length of the electrode covered area plus a spring element, e.g., 10 mm for the glider and 20 mm for the stator, and a combined thickness of the stator and glider, e.g., 38 µm, (excluding, e.g., the framing sections and mounting areas comprised by the framing sections), and 2) a mass of the lubrication layer, given by a density, e.g., 0.92×10³ kg/m³, of the dielectric liquid multiplied by its volume, e.g., defined by a thickness of the lubrication layer, e.g., 12.3 µm, a width of the electrodes, e.g., 30 mm, and a length of both electrodes, e.g., 10 mm + 10 mm. For this specific design, the mass of the electrostatic gliding transducer with a spring element was 28.5 mg. The weight of the electrodes was neglected, since it was at least one order of magnitude less than the weight of the film.

An actuation stress σ was calculated from the load F_{L} and a cross-sectional area of the electrostatic gliding transducer in the fully contracted state, defined, e.g., by a width of the electrode covered area w and the overall thickness h of the transducer in the fully contracted state, i.e., σ = F_{L}/wh. In the fully contracted state, the thickness of the lubrication layer may go to zero.

For example, 7 exemplary electrostatic gliding test transducers were tested to test reproducibility. Each of the electrostatic gliding test transducers was actuated 5 times to test repeatability. Therefore, each data point of measurements of quasi-static performance parameters of exemplary electrostatic gliding transducers provided in the following represents a sample size n of 35, i.e., n = 7×5 = 35.

To evaluate an input electrical energy of an exemplary electrostatic gliding transducer, an electrometer, e.g., a 6514 from Keithley, was connected between ground and the electrostatic gliding transducer. For example, a 250-V TVS diode was used as a voltage fuse in parallel. Charge data were collected via the DAQ, e.g., with a sensitivity of 10 µC/V. The output voltage over time was collected from the high voltage amplifier via the DAQ. The input electrical energy was calculated from an area enclosed in the cycle in the voltage-charge work-conjugate plane, as shown in Fig. 49. The enclosed are may, e.g., be calculated using numerical integration, e.g., in MATLAB. Stroke-data was collected via video-recordings using a high-speed camera, e.g., a Phantom v2640 from Vision Research Inc. and an EF100mm F2.8L Macro IS USM from Canon. For example, with a frame rate of 2000 fps was used. The stroke L was measured using a similar method as described above in view of a quasi-static performance of the electrostatic gliding transducer. However, for determining the starting point of contraction, e.g., an electric trigger signal was used to synchronize the high-speed camera and the electrometer. The output mechanical energy was calculated from the area enclosed in the cycle in the force-stroke work-conjugate plane, as shown in Fig. 49. The enclosed are may, e.g., be calculated using numerical integration, e.g., in MATLAB.

For example, 7 exemplary electrostatic gliding test transducers were tested to test reproducibility. Each of the electrostatic gliding test transducers was actuated 5 times to test repeatability. Therefore, each data point of measurements of input electrical energy and output mechanical energy of exemplary electrostatic gliding transducers provided in the following represents a sample size n of 35, i.e., n = 7×5 = 35.

For calculating the dynamic performance of an exemplary electrostatic gliding transducer, including a peak strain rate, a peak specific power, and am average specific power, an actuation stroke was measured using the same optical method as explained above in the context of evaluating input electrical energy and output mechanical energy of an electrostatic gliding transducer. A velocity v and an acceleration a were obtained as the first and second time-derivatives of stroke. The peak strain rate s_{%} was determined as a maximum velocity vₘₐₓ during lifting divided by the initial length of the transducer L₀, i.e., s_{%} = vₘₐₓ/L₀.

The specific power Pₛₚ was calculated as Pₛₚ = [F_{L} + M a(t)] v(t)/m_{act}, where M is a mass of a load, F_{L} is the load on the electrostatic gliding transducer, i.e., a buoyancy force compensated load using a multiplication factor of 0.9, as explained above, g is the gravitational constant, a(t) and v(t) are acceleration and velocity at a time t during lifting, and m_{act} is the mass of the electrostatic gliding transducer. The peak specific power may be determined as a maximum of the specific power Pₛₚ, and an average specific power P_{sp,avg} may be determined as an average power during the entire lifting process, until the velocity became zero. The average specific power P_{sp,avg} may, e.g., be evaluated by numerically integrating an area under a P(t) curve, e.g., using MATLAB.

For example, 7 exemplary electrostatic gliding test transducers were tested to test reproducibility. Each of the electrostatic gliding test transducers was actuated 5 times to test repeatability. Therefore, each data point of measurements of dynamic performance parameters of exemplary electrostatic gliding transducers provided in the following represents a sample size n of 35, i.e., n = 7×5 = 35.

Dielectric properties of the dielectric liquids were measured using a high-resolution dielectric spectrometer, e.g., an Alpha-A from Novocontrol Technologies. The high-resolution dielectric spectrometer may, e.g., be equipped with a liquid sample cell, e.g., a BDS 1308 from Novocontrol Technologies. For example, dielectric properties of exemplary liquid films, e.g., 100 µm thick liquid films established with fused silica electrode spacers, were measured. The dielectric properties were, e.g., measured in a frequency range spanning from 100 mHz to 1 kHz at a root mean square voltage of 3 V. A temperature control was, e.g., performed using a temperature control system, e.g., a Quatro Cryosystem from Novocontrol Technologies.

Viscosity of the transformer oil was measured using a rheometer, e.g., a Discovery HR-2 from TA Instruments. The rheometer may, e.g., have been equipped with a cone plate geometry, e.g., with a diameter of 40 mm and a cone angle of 2°. For example, a Peltier plate Steel 111455 was used. The test was executed under a procedure of flow sweep with a shear rate of 10 s⁻¹, and a temperature under a linear sweep from 20 to 100 °C.

Release time may be defined as a time difference between an end of a driving voltage signal, e.g., coinciding with a start of a deactivation voltage signal, like an alternating voltage signal, and the time at which the stroke decreased to less than 10 % of the stroke L₁ (see, e.g., Fig. 26). The stroke data used for determining the release time may, e.g., be collected and analyzed using the same method as described above in view of the analysis of the quasi-static performance of the electrostatic gliding transducer.

A voltage pattern applied to an exemplary electrostatic gliding transducer may, e.g., comprise a driving voltage signal, e.g., a square-wave driving voltage signal with an amplitude of V₁, followed by a deactivation voltage signal, e.g., comprising an alternating voltage signal with decaying amplitude.

For example, 7 exemplary electrostatic gliding test transducers were tested to test reproducibility. Each of the electrostatic gliding test transducers was actuated 5 times to test repeatability. Therefore, each data point of measurements of release times of exemplary electrostatic gliding transducers provided in the following represents a sample size n of 35, i.e., n = 7×5 = 35.

A frequency response of work capacity may, e.g., be evaluated using stroke data collected in the same way as described above in view of the analysis of the quasi-static performance of the electrostatic gliding transducer. The work capacity may, e.g., be defined by an average work done in a plurality of continuous cycles, e.g., in 5 continuous cycles. Here, e.g., no manual separation of stator and glider using tweezers was used in between different cycles.

The driving voltage signal was, e.g., a voltage pattern with a voltage-on time of 0.125 s followed by a 64 Hz AV deactivation voltage for 1 s. A driving frequency may, e.g., be determined using a period of the voltage pattern (see, e.g., Fig. 26).

For example, 3 exemplary electrostatic gliding test transducers were tested to test reproducibility. Therefore, each data point of measurements of actuation frequencies of exemplary electrostatic gliding transducers provided in the following represents a sample size n of 3, i.e., n = 3.

A lifetime of an exemplary electrostatic gliding transducer was tested under 10 kV, i.e., 81% of the maximum specific energy, using an amplifier, e.g., a Trek 610E from Advanced Energy. For example, a voltage pattern with a 1 s voltage-on time followed by a 64 Hz, 1 s AV voltage was used until an electrical breakdown through stator and glider occurred. For example, 7 electrostatic gliding test transducers were tested. A best result of 6172 cycles and an average lifetime of 1100 cycles was obtained.

For example, an electrostatic gliding transducer configuration without a spring element and aligning strips removed was placed in a Petri dish, e.g., a 639102 from Greiner Bio-One. A mount of the stator of the electrostatic gliding transducer was fixed on the bottom of the Petri dish, e.g., using a single-sided tape, e.g., 57405 from Tesa SE. A fiber glass sheet, from which the mounts were made from, was placed next to the stator to compensate the thickness of the mount of the stator for the glider to be vertically aligned. A dielectric liquid, e.g., transformer oil, e.g., Envirotemp FR3 from Cargill Inc. was poured on the stator until a layer of dielectric liquid covered the bottom surface of the Petri dish. The glider was placed on the fiber glass sheet to form a configuration of an electrostatic gliding transducer. An electrical connection of the glider was fixed on the rim of the Petri dish, e.g., using a single-sided tape, to keep the glider at the desired position ready for gliding. A driving voltage, e.g., an 11 kV, square-wave voltage signal, was applied to the electrostatic gliding transducer using the same method as for the other tests above. A video was recorded using the same method as for testing the quasi-static performance.

In view of a linear contraction of electrostatic gliding transducers, an exemplary electrostatic gliding transducer with a stator and glider made from 13 µm and 25 µm polyimide films, respectively, comprising electrodes extending over areas of 3 cm by 1 cm and which further comprises a spring element have been shown to lift a 50 g (equivalent to an actuation stress of 0. 40 MPa), a 20 g (equivalent to an actuation stress of 0.16 MPa), and a 5 g (equivalent to an actuation stress of 0.05 MPa) weight in a dielectric liquid environment, e.g., transformer oil, e.g., Envirotemp FR3 from Cargill Inc., using an 11 kV, square-wave driving voltage signal.

In view of a reduction of a release time of electrostatic gliding transducers, exemplary electrostatic gliding transducers with a stator and glider made from 13 µm and 25 µm polyimide films, respectively, which further comprises electrodes extending over areas of 3 cm by 1 cm different mechanisms have been applied to reduce electrostatic clutching effects under a 50 g (equivalent to an actuation stress of 0.40 MPa) weight and a 20 g (equivalent to an actuation stress of 0.16 MPa) weight in a dielectric liquid environment, e.g., transformer oil, e.g., Envirotemp FR3 from Cargill Inc. The exemplary electrostatic gliding transducers comprised electrostatic gliding transducers with and without spring elements.

An electrostatic gliding transducer to which none of these mechanisms has been applied was driven as a reference transducer by a 1 s, square-wave driving voltage signal. The exemplary electrostatic gliding transducers were driven, e.g., using a 11 kV driving voltage, which is a square-wave signal, with a 1 s voltage-on time. The driving voltage is followed by a 64 Hz alternating deactivation voltage with a linearly decaying amplitude for 1s.

In view of a cyclic actuation of electrostatic gliding transducers, an exemplary electrostatic gliding transducer with a stator and glider made from 13 µm and 25 µm polyimide films, respectively, comprising electrodes extending over areas of 3 cm by 1 cm and which further comprises a spring element has been driven by an 11 kV driving voltage pattern with a 0.125 s voltage-on time and a 64 Hz AV deactivation voltage for 1 s exhibiting cyclic actuation under a 50 g (equivalent to an actuation stress of 0.40 MPa) weight in a dielectric liquid environment, e.g., transformer oil, e.g., Envirotemp FR3 from Cargill Inc. An actuation frequency was controlled by a frequency of the driving voltage pattern.

In view of a stepwise increase of actuation strokes of electrostatic transducers, an exemplary electrostatic gliding transducer with a stator and glider made from 13 µm and 25 µm polyimide films, respectively, comprising electrodes extending over areas of 3 cm by 1 cm and which further comprises a spring element has been driven by an 11 kV driving voltage pattern with a 50 ms voltage-on time and a 64 Hz AV deactivation voltage for 200 ms achieving a stepwise linear contraction in a dielectric liquid environment, e.g., transformer oil, e.g., Envirotemp FR3 from Cargill Inc.

In view of antagonistic pair of electrostatic gliding transducers, an antagonistic pair of two electrostatic gliding transducers, each with a stator and glider made from 13 µm and 25 µm polyimide films, respectively, comprising electrodes extending over areas of 3 cm by 1 cm and which further comprises a spring element, were used to control a rotation of a robotic arm in a dielectric liquid environment, e.g., transformer oil, e.g., Envirotemp FR3 from Cargill Inc. One of the electrostatic gliding transducers was driven by a 9 kV voltage pattern and the other one was driven by a 10 kV voltage pattern with a 1 s delay. The arm reached its full range of motion in approximately 1 s.

In view of an arrays of electrostatic gliding transducers, an exemplary 2-by-6 array of electrostatic gliding transducers, each with a stator and glider made from 13 µm and 25 µm polyimide films, respectively, comprising electrodes extending over areas of 3 cm by 1 cm and which further comprises a spring element, was shown to lift a 1 kg weight in response to an 11 kV voltage pattern in a dielectric liquid environment, e.g., transformer oil, e.g., Envirotemp FR3 from Cargill Inc.

In view of a demonstration of electrostatic gliding on a thin film of dielectric liquid, an exemplary electrostatic gliding transducer with a stator and glider made from 13 µm and 25 µm polyimide films, respectively, comprising electrodes extending over areas of 3 cm by 1 cm, without a spring element and aligning strips removed, was shown to horizontally glide on a thin film of dielectric liquid, e.g., transformer oil, e.g., Envirotemp FR3 from Cargill Inc., under an 11 kV, square-wave driving voltage signal.

In view of a single package of two electrostatic gliding transducers operating in air, a pair of electrostatic gliding transducer, each with a stator and glider made from 13 µm and 25 µm polyimide films, respectively, comprising electrodes extending over areas of 14 cm by 1 cm, without a spring, was packaged in thermoplastic polyurethane films containing a dielectric liquid, e.g., transformer oil, e.g., Envirotemp FR3 from Cargill Inc. The packaged pair of electrostatic gliding transducers was operated in air and shown to lift weights of 20 g and 150 g in response to a 10 kV voltage pattern.

In view of an array of packaged electrostatic gliding transducers operating in air, a 2×7-array with 14 single packages of pairs of electrostatic gliding transducers each with a stator and glider made from 13 µm and 25 µm polyimide films, respectively, comprising electrodes extending over areas of 14 cm by 1 cm, without a spring, were packaged in thermoplastic polyurethane films containing a dielectric liquid, e.g., transformer oil, e.g., Envirotemp FR3 from Cargill Inc. The 2×7-array of packages was shown to be able to lift a 1111 g pumpkin in response to a 10 kV voltage pattern.

Fig. 2 shows another exemplary electrostatic gliding transducer 100, which comprises a stator 102 and a glider 112. In case of Fig. 2, the stator 102 and glider 112 are both cylindrical and the direction of movement 122 may be directed along a common central axis of the two cylindrical shapes provided by the stator 102 and glider 112. The stator 102 is arranged, at least partially, within the glider 112. The stator 102 and glider 112 may, e.g., be arranged concentrically with their central axes coinciding to a common central axis of stator 102 and glider 112. The stator 102 and glider 112, e.g., may both be provided in form of a hollow cylinder. For example, the stator 102 may be provided by a hollow cylinder arranged on a core, while the glider 102 may be provided in form of a hollow cylinder.

The glider 112 is arranged movably relative to the stator 102 along the direction of movement 122. The stator 102 comprises a first electrode 104 arranged on a first solid dielectric element 106. The glider 112 comprises a second electrode 114 arranged on a second solid dielectric element 126. The first and second solid dielectric element 106, 116 of the exemplary electrostatic gliding transducer 100 shown in Fig. 2 are both cylindrically shaped. The first solid dielectric element 106 and second solid dielectric element 116 may, e.g., be provided in form of a hollow cylinders. The first electrode 104 is arranged on an inner surface of the first dielectric element 106 and extends circumferentially along the inner surface. The second electrode 114 is arranged on an outer surface of the second dielectric element 116 and extends circumferentially along the outer surface.

In a deactivated state of the transducer 100, i.e., in the left configuration (A), the two electrodes 106, 116 are arranged with a relative offset 120 in the direction 122 of movement. The first and second dielectric element 106, 116 are arranged between the two electrodes 104, 114 and spaced apart from each other with a clearance 126 between the two dielectric elements 106, 116 filled with a dielectric liquid 110 providing for a hydrodynamic lubrication.

The electrostatic gliding transducer 100 is adapted for a moving of the glider 112 relative to the stator 102 along the direction 122 of movement with the second dielectric element 116 gliding hydrodynamically on the dielectric liquid 110 along the first dielectric element 106 due to a gliding force being generated in an activated state of the transducer by a driving voltage applied to the two electrodes 104 114. The moving of the glider 112 reduces the relative offset 120 between the two electrodes 104, 114 as shown in the right configuration (B) of the electrostatic gliding transducer 100. The moving of the glider 112 relative to the stator 102 along the direction 122 of movement may, e.g., be a translation movement. For example, the glider 112 is moved along the common central axis of stator 102 and glider 112.

An electrostatic gliding transducer 100 with a cross-sectional setup comprising two electrodes 104, 114 arranged on two solid dielectric elements 106, 116 arranged between the two electrodes 104, 114 and separated from each other by a clearance126 filled with dielectric liquid 110, may be implemented in different ways. A bending of the cross-sectional setup along a circle within the cross-sectional plane to form two concentrical closed circles and an extending of the cross-sectional setup along a straight line perpendicular to the cross-sectional plane may, e.g., result in the electrostatic gliding transducer 100 comprising two cylindrical solid dielectric elements 106, 116 and two cylindrical electrodes 104, 114. The resulting electrostatic gliding transducer 100 may, e.g., be configured for a linear movement.

Fig. 3 shows an exemplary electrostatic gliding transducer 100, which comprises a stator 102 and a glider 112. The glider 112 is arranged movably relative to the stator 102 along a direction of movement 122. The glider 112 of the exemplary electrostatic gliding transducer 100 of Fig. 3 is configured for executing a rotational movement rather than a translational movement. The direction 122 of movement is a direction along a circular path. The stator 102 and the glider 112 are provided in form of circular disks. The two circular disks may, e.g., have the same size. The two circular disks may, e.g., have different sizes. The two circular disks may, e.g., be arranged concentrically, i.e., their center points may be lying on a straight line extending perpendicular to both circular disks. The rotational movement of the glider 112 may be a rotational movement with the straight line as a rotational axis.

The stator 102 comprises a first electrode 104 arranged on a first solid dielectric element 106. The glider 112 comprises a second electrode 114 arranged on a second solid dielectric element 126. The first and second solid dielectric element 106, 116 of the exemplary electrostatic gliding transducer 100 shown in Fig. 3 are both provided in form of a circular disk. Both dielectric element 106, 116 extend parallel to each other. The first and second electrode 104, 114 arranged on the first and second solid dielectric element 106, 116, may, e.g., be provided in form of circular sectors. In the example shown, central angles of the circular sectors are both 90°. However, the central angles in alternative examples may, e.g., be larger or smaller. Both central angles may, e.g., be identical. The two central angles may, e.g., be different.

In a deactivated state of the transducer 100, i.e., in the left configuration (A), the two electrodes 106, 116 are arranged with a relative offset 120 in the direction 122 of movement. The first and second dielectric element 106, 116 are arranged between the two electrodes 104, 114 and spaced apart from each other with a clearance 126 between the two dielectric elements 106, 116 filled with a dielectric liquid 110 providing for a hydrodynamic lubrication.

The electrostatic gliding transducer 100 is adapted for a moving of the glider 112 relative to the stator 102 along the direction 122 of movement with the second dielectric element 116 gliding hydrodynamically on the dielectric liquid 110 along the first dielectric element 106 due to a gliding force being generated in an activated state of the transducer by a driving voltage applied to the two electrodes 104 114. The moving of the glider 112 reduces the relative offset 120 between the two electrodes 104, 114 as shown in the right configuration (B) of the electrostatic gliding transducer 100. The moving of the glider 112 relative to the stator 102 along the direction 122 of movement may, e.g., be a rotational movement. For example, the glider 112 is moved in a plane parallel to a surface of the first dielectric elements 106 facing the glider 112.

An electrostatic gliding transducer 100 with a cross-sectional setup comprising two electrodes 104, 114 arranged on two solid dielectric elements 106, 116 arranged between the two electrodes 104, 114 and separated from each other by a clearance126 filled with dielectric liquid 110, may be implemented in different ways. A bending of the solid dielectric elements 106, 116 of the cross-sectional setup along a circle within a plane perpendicular to the cross-sectional plane and filling of the resulting two concentrical closed circles may, e.g., provide the electrostatic gliding transducer 100 of Fig. 3 comprising two cylindrical solid dielectric elements 106, 116. The electrodes 104, 114 may, e.g., each have a shape of a circular sector. The resulting electrostatic gliding transducer 100 may, e.g., be configured for a rotational movement.

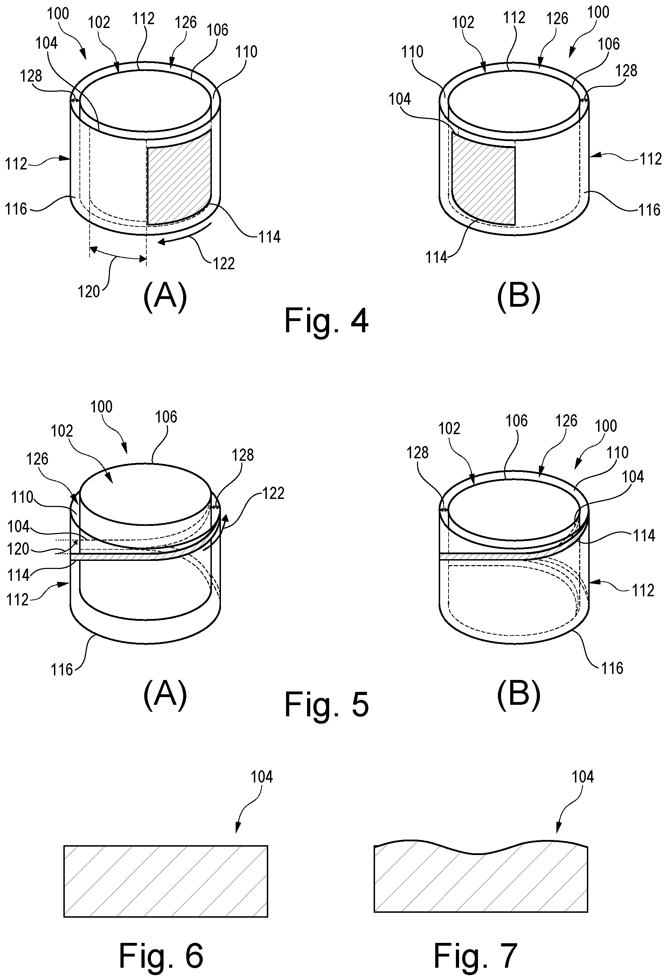

Fig. 4 shows an exemplary electrostatic gliding transducer 100, which comprises a stator 102 and a glider 112. In case of Fig. 4, the stator 102 and glider 112 are both cylindrical and the direction of movement 122 may be a rotational direction around a common central axis of the two cylindrical shapes provided by the stator 102 and glider 112. The stator 102 is arranged, at least partially, within the glider 112. The stator 102 and glider 112 may, e.g., be arranged concentrically with their central axes coinciding to a common central axis of stator 102 and glider 112. The stator 102 and glider 112, e.g., may both be provided in form of a hollow cylinder. For example, the stator 102 may be provided by a hollow cylinder arranged on a core, while the glider 102 may be provided in form of a hollow cylinder.

The glider 112 is arranged movably relative to the stator 102 along a direction of movement 122. The glider 112 of the exemplary electrostatic gliding transducer 100 of Fig. 4 is configured for executing a rotational movement rather than a translational movement. The direction 122 of movement is a direction along a circular path. The stator 102 comprises a first electrode 104 arranged on a first solid dielectric element 106. The glider 112 comprises a second electrode 114 arranged on a second solid dielectric element 126. The first and second solid dielectric element 106, 116 of the exemplary electrostatic gliding transducer 100 shown in Fig. 4 are both cylindrically shaped. The first solid dielectric element 106 and second solid dielectric element 116 may, e.g., be provided in form of a hollow cylinders. The first electrode 104 is arranged on an inner surface of the first dielectric element 106. The second electrode 114 is arranged on an outer surface of the second dielectric element 116. For example, the first and second electrode 104, 114 arranged on the first and second solid dielectric element 106, 116, respectively, are rectangular. Along the common central axis of the first and second solid dielectric element 106, 116, the first and second electrodes 104, 114 may, e.g., extend within the same segment. The first and second electrodes 104, 114 may, e.g., have the same length. The first and second solid dielectric element 106, 116 may, e.g., have the same length. The first and second solid dielectric element 106, 116 may, e.g., have different lengths.

In a deactivated state of the transducer 100, i.e., in the left configuration (A), the two electrodes 106, 116 are arranged with a relative offset 120 in the direction 122 of movement. The first and second dielectric element 106, 116 are arranged between the two electrodes 104, 114 and spaced apart from each other with a clearance 126 between the two dielectric elements 106, 116 filled with a dielectric liquid 110 providing for a hydrodynamic lubrication.

The electrostatic gliding transducer 100 is adapted for a moving of the glider 112 relative to the stator 102 along the direction 122 of movement with the second dielectric element 116 gliding hydrodynamically on the dielectric liquid 110 along the first dielectric element 106 due to a gliding force being generated in an activated state of the transducer by a driving voltage applied to the two electrodes 104 114. The moving of the glider 112 reduces the relative offset 120 between the two electrodes 104, 114 as shown in the right configuration (B) of the electrostatic gliding transducer 100. The moving of the glider 112 relative to the stator 102 along the direction 122 of movement may, e.g., be a rotation movement. For example, the glider 112 is rotated around the common central axis of stator 102 and glider 112.

An electrostatic gliding transducer 100 with a cross-sectional setup comprising two electrodes 104, 114 arranged on two solid dielectric elements 106, 116 arranged between the two electrodes 104, 114 and separated from each other by a clearance126 filled with dielectric liquid 110, may be implemented in different ways. A bending of the cylindrical solid dielectric elements 106, 116 of the cross-sectional setup along a circle within the cross-sectional plane to form two concentrical closed circles and an extending of the cross-sectional setup along a straight line perpendicular to the cross-sectional plane may, e.g., result in the electrostatic gliding transducer 100 of Fig. 4 comprising two cylindrical solid dielectric elements 106, 116, e.g., configured for a rotational movement. The electrodes 104, 114 may, e.g., have curved rectangular shapes. The curvatures of the electrodes 104, 114 may each correspond to a curvature of the cylindrical solid dielectric element 106, 116 at which they are arranged.

Fig. 5 shows an exemplary electrostatic gliding transducer 100, which comprises a stator 102 and a glider 112. In case of Fig. 4, the stator 102 and glider 112 are both cylindrical. The direction of movement 122 may be a direction along a spiral winding around a common central axis of the two cylindrical shapes provided by the stator 102 and glider 112. The stator 102 is arranged, at least partially, within the glider 112. The stator 102 and glider 112 may, e.g., be arranged concentrically with their central axes coinciding to a common central axis of stator 102 and glider 112. The stator 102 and glider 112, e.g., may both be provided in form of a hollow cylinder. For example, the stator 102 may be provided by a hollow cylinder arranged on a core, while the glider 102 may be provided in form of a hollow cylinder.

The glider 112 is arranged movably relative to the stator 102 along the direction of movement 122. The glider 112 of the exemplary electrostatic gliding transducer 100 of Fig. 5 is configured for executing a spiral movement, i.e., a combined translational and rotational movement. The direction 122 of movement is a direction along a spiral path. The spiral path may, e.g., be a spiral path along and around the common central axis. The stator 102 comprises a first electrode 104 arranged on a first solid dielectric element 106. The glider 112 comprises a second electrode 114 arranged on a second solid dielectric element 126. The first and second solid dielectric element 106, 116 of the exemplary electrostatic gliding transducer 100 shown in Fig. 5 are both cylindrically shaped. The first solid dielectric element 106 and second solid dielectric element 116 may, e.g., be provided in form of a hollow cylinders. The first electrode 104 is arranged on an inner surface of the first dielectric element 106 in form of a spiral extending circumferentially along the inner surface. The second electrode 114 is arranged on an outer surface of the second dielectric element 116 extending circumferentially around the outer surface.

In a deactivated state of the transducer 100, i.e., in the left configuration (A), the two electrodes 106, 116 are arranged with a relative offset 120 in the direction 122 of movement. The first and second dielectric element 106, 116 are arranged between the two electrodes 104, 114 and spaced apart from each other with a clearance 126 between the two dielectric elements 106, 116 filled with a dielectric liquid 110 providing for a hydrodynamic lubrication.

The electrostatic gliding transducer 100 is adapted for a moving of the glider 112 relative to the stator 102 along the direction 122 of movement with the second dielectric element 116 gliding hydrodynamically on the dielectric liquid 110 along the first dielectric element 106 due to a gliding force being generated in an activated state of the transducer by a driving voltage applied to the two electrodes 104 114. The moving of the glider 112 reduces the relative offset 120 between the two electrodes 104, 114 as shown in the right configuration (B) of the electrostatic gliding transducer 100. The moving of the glider 112 relative to the stator 102 along the direction 122 of movement may, e.g., be a spiral movement, i.e., a combination of translation and rotation. For example, the glider 112 is moved along and rotated around the common central axis of stator 102 and glider 112 in a spiral movement.

An electrostatic gliding transducer 100 with a cross-sectional setup comprising two electrodes 104, 114 arranged on two solid dielectric elements 106, 116 arranged between the two electrodes 104, 114 and separated from each other by a clearance126 filled with dielectric liquid 110, may be implemented in different ways. An extending of the cross-section setup along a spiral with a central axis extending perpendicular to the cross-sectional plane may, e.g., result in the electrostatic gliding transducer 100 of Fig. 5 comprising two concentrical spiral electrodes 104, 114. The resulting solid dielectric elements106, 116, e.g., have spiral forms as well or may have cylindrical forms. The electrostatic gliding transducer 100 may, e.g., be configured for a linear and/or rotational movement.

Fig. 6 shows an exemplary form of an electrode 104 of an electrostatic gliding transducer. The electrode 104 may, e.g., be an electrode of a stator or glider of the electrostatic gliding transducer. The exemplary electrode 104 of Fig. 6 has a rectangular form with straight boundary lines and a constant density without cutouts. However, alternative examples of electrodes may have other forms, in particular other forms of boundary lines, varying densities, and/or cutouts.

Fig. 7 shows another exemplary form of an electrode 104 of an electrostatic gliding transducer. The electrode 104 may, e.g., be an electrode of a stator or glider of the electrostatic gliding transducer. The exemplary electrode 104 of Fig. 7 differs from the exemplary electrode 104 of Fig. 6 by the form of one of the four boundary lines, which, e.g., has a wave form. Also, alternative forms other than a waveform may, e.g., be possible.

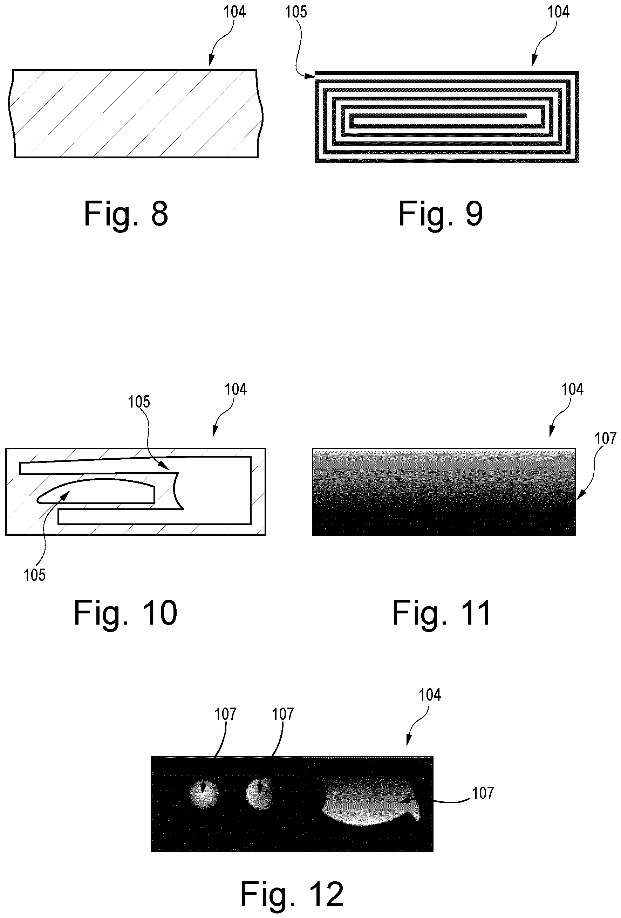

Fig. 8 shows another exemplary form of an electrode 104 of an electrostatic gliding transducer. The electrode 104 may, e.g., be an electrode of a stator or glider of the electrostatic gliding transducer. The exemplary electrode 104 of Fig. 8 differs from the exemplary electrode 104 of Fig. 6 by the form of two opposing boundary lines, which, e.g., have wave forms. Also, alternative forms other than waveforms may, e.g., be possible. For example, all the boundary lines may have forms different from a straight line.

Fig. 9 shows another exemplary form of an electrode 104 of an electrostatic gliding transducer. The electrode 104 may, e.g., be an electrode of a stator or glider of the electrostatic gliding transducer. The exemplary electrode 104 of Fig. 9 has a cutout 105 resulting in a spiral form of the electrode 104. The cutout 105 has, e.g., a constant width. The spiral electrode 104 has, e.g., a constant width. Also, other forms and numbers of cutouts 105 may, e.g., be possible. Fig. 10 shows another exemplary form of an electrode 104 of an electrostatic gliding transducer. The electrode 104 may, e.g., be an electrode of a stator or glider of the electrostatic gliding transducer. The exemplary electrode 104 of Fig. 10 has a plurality of cutouts 105 with different forms. These cutouts 105 result in an electrode 104 comprising sections of different widths.

Fig. 11 shows another exemplary form of an electrode 104 of an electrostatic gliding transducer. The electrode 104 may, e.g., be an electrode of a stator or glider of the electrostatic gliding transducer. The exemplary electrode 104 of Fig. 11 has a varying density. The density of the exemplary electrode 104 decreases towards an edge of the electrode 104. Thus, the density may, e.g., vary over the entire area 107 of the electrode 104. Fig. 12 shows another exemplary form of an electrode 104 of an electrostatic gliding transducer. The electrode 104 may, e.g., be an electrode of a stator or glider of the electrostatic gliding transducer. There are, e.g., sections 107 of the electrode 104 with varying densities. The densities may, e.g., decrease towards an edge of one or more of the respective sections 107 and/or towards a center of one or more of the respective sections 107.

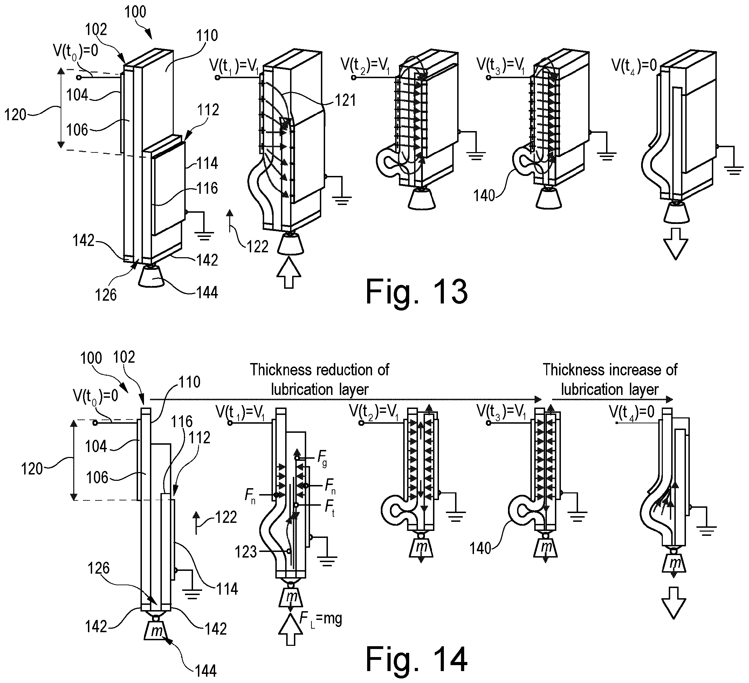

Fig. 13 illustrates components and working principles of an electrostatic gliding transducer 100, e.g., an electrostatic gliding actuator. The exemplary electrostatic gliding transducer 100 comprises a stator 102 and a glider 112. The glider 112 is arranged movably relative to the stator 102 along a direction 122 of movement. The stator 102 comprises a first electrode 104 arranged on a first solid dielectric element 106. The glider 112 comprises a second electrode 114 arranged on a second solid dielectric element 116. The electrostatic gliding transducer 100 further comprises a spring element 140. The spring element 140 is, e.g., provided by a flexible extension of the first solid dielectric element 106 of the stator. The spring element 140 is in a resting state in the deactivated state of the transducer 100 and adapted for storing potential energy, when the glider 112 moves relative to the stator 102 along the direction 122 of movement in the activated state of the transducer 100 with a relative offset between the two electrodes 104, 114 being reduced.

A voltage V₁, i.e., a driving voltage, applied to the electrodes 104, 114 causes electric fields 121 that force the two, e.g., parallel, solid dielectric elements 106, 116 to hydrodynamically glide relative to each other on a thin layer of a dielectric liquid 110 filling a clearance 126 between them. The electrostatic gliding transducer 100 is shown in Fig. 13 in five different states during a full actuation cycle. In a first deactivated state at time t₀, no voltage is applied to the electrodes 104, 114. In an activated state at times t₁, t₂ and t₃, the driving voltage V₁ is applied to the electrodes 104, 114 generating a gliding force, due to which the glider 112 moves along the direction 122 of movement. The movement ends, e.g., at time t₃, when the relative offset 120 between the two electrodes 104, 114 has been minimized, e.g., reduced to zero. Due to the movement of the glider 112, the spring element 140 stores potential energy. This stored potential energy is released, when the driving voltage V₁ is turned at time t₄. The stored potential energy being released speeds up a moving back of the glider 112 to its start position relative to the stator 102 in the deactivated state of the electrostatic gliding transducer 100. Via a mount, a weight is attached to the exemplary electrostatic gliding transducer 100 and moved by the glider 112. For example, the weight is attached to both the first and the second solid dielectric element 106, 116 of the stator 102 and the glider 112.

Fig. 14 shows the components and working principles of the electrostatic gliding transducer 100 of Fig. 13 from a different perspective. When the driving voltage V₁ is applied to the electrodes 104, 114 of the electrostatic gliding transducer 100 a gliding force F_{g} is generated, due to which the glider 112 moves along the direction 122 of movement. The gliding force F_{g} acts against the frictional force F_{f} and the weight or load force F_{L} = mg of the weight 144, where m is the mass of the weight 144 and g is the local acceleration of free fall. When the gliding force F_{g} is large enough to overcome the frictional force F_{f} and the weight force F_{L}, the glider 112 moves along the direction 122 of movement. In addition, the applying of the driving voltage V₁ may result in a normal force Fₙ acting on the glider 112 and the stator 102 in a direction normal to the surfaces of the electrodes 104, 114, which are facing each other, and thus perpendicular to the gliding force Fg. Furthermore, may normal force Fₙ may also act in a direction perpendicular the indicated direction 122 of movement. The normal force Fₙ may result in a reduction of the hydrodynamic lubrication layer provided by the dielectric liquid 110 filling a clearance 126 between the solid dielectric elements 106, 116 of stator 102 and glider 112. The moving of the glider 112 and the reduction of the hydrodynamic lubrication layer causes a hydrodynamic flow 123 of the dielectric liquid 110 filling a clearance 126.

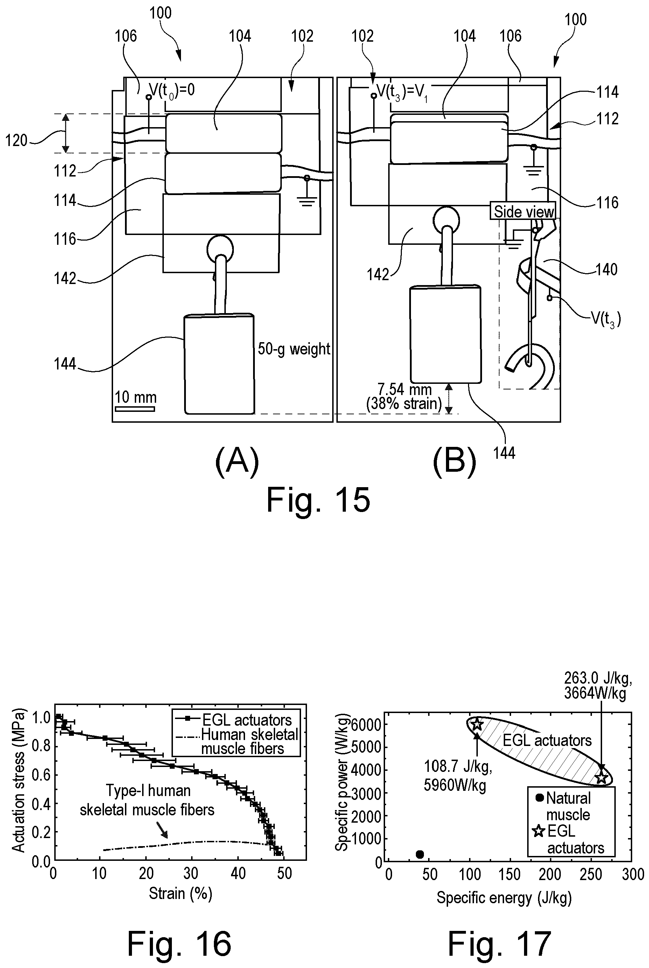

Fig. 15 shows an exemplary activation of an exemplary electrostatic gliding transducer 100, e.g., an electrostatic gliding actuator. The exemplary electrostatic gliding transducer 100, e.g., with a transducer mass of 0.03 g, submerged in dielectric liquid 110 is shown to lift a 50 g weight using a driving voltage of V₁ = 11 kV. A weight 144 of 50 g corresponds to approximately 45 g, when compensating buoyancy, and is equivalent to an actuation stress of 0.40 MPa. A configuration of the exemplary electrostatic gliding transducer 100 of Fig. 15 corresponds to the exemplary electrostatic gliding transducer 100 of Fig. 13 and 14. The inset of Fig. 15 shows a spring element 140 of the exemplary electrostatic gliding transducer 100.

Fig. 16 shows an exemplary stress-strain diagram for exemplary electrostatic gliding transducers, e.g., electrostatic gliding actuators like the exemplary electrostatic gliding transducer of Fig. 13 to 15. The diagram illustrates an exemplary stress-strain performance of the electrostatic gliding transducers under an applied driving voltage of 11 kV using data from 7 exemplary electrostatic gliding transducers. In the diagram, furthermore data of a stress-strain performance of type-I human skeletal muscle fibers is plotted for reference illustrating the superiority of the electrostatic gliding transducers compared to the type-I human skeletal muscle fibers.

Fig. 17 shows an exemplary diagram for a relation between specific energy and specific power for exemplary electrostatic gliding transducers, e.g., electrostatic gliding actuators. Shown is furthermore a comparison of the exemplary specific energy and specific power of exemplary electrostatic gliding transducers to natural muscles illustrating the superiority of the electrostatic gliding transducers.

Fig. 18 illustrates an exemplary activation of an exemplary electrostatic gliding transducer 100, e.g., an electrostatic gliding actuator. The exemplary electrostatic gliding transducer 100 comprises a stator 102 and a glider 112. The glider 112 is arranged movably relative to the stator 102 along a direction 122 of movement. The stator 102 comprises a first electrode 104 arranged on a first solid dielectric element 106. The glider 112 comprises a second electrode 114 arranged on a second solid dielectric element 116. The shown exemplary electrostatic gliding transducer 100 is an idealized model of an electrostatic gliding transducer corresponding to an offset parallel-plate capacitor. This exemplary electrostatic gliding transducer 100 may access a hydrodynamic lubrication regime to achieve very low friction and outstanding actuation performance.

Fig. 19 shows a relation between a force acting on the exemplary electrostatic gliding transducer 100 of Fig. 18 and a resulting stroke for different coefficients of friction. This force-stroke performance illustrated in Fig. 19 is governed by the coefficient of friction k. The exemplary electrostatic gliding transducer 100 being supplied with a driving voltage V₁ generates a force $F \left(L, k\right) = {F}_{g} - {F}_{f} = \frac{1}{2} \frac{εw}{h} {V}_{1}^{2} - k \frac{1}{2} \frac{εwL}{{h}^{2}} {V}_{1}^{2}$. The force F comprises a gliding F_{g} and a frictional force F_{f}. Here, k is a coefficient of friction assumed to be constant, ε is a permittivity of the solid dielectric elements, h is a distance between the electrodes, L is a stroke, i.e., a distance of movement of the glider along the direction of movement, and w is the width of the transducer, i.e., of the solid dielectric elements. Increasing the friction, i.e., the coefficient of friction k, leads to lower strokes indicated by the dot-dashed line compared to a reference case indicated by the solid line. Lowering the friction, i.e., the coefficient of friction k, leads to larger strokes indicated by the dashed line. The dotted line depicts the no-friction case with $F \left(L,k=0\right) = \frac{1}{2} \frac{εw}{h} {V}_{1}^{2}$. Overall, the stroke is limited by Lₑ, which is reached at the geometry limit, where the electrodes of the capacitor completely overlap.

Fig. 20 illustrates a relation between a force acting on the exemplary electrostatic gliding transducer of Fig. 18 and a resulting stroke for different types of friction. Electrostatic transducers based on offset parallel-plate capacitor architectures as shown in Fig. 18 may, e.g., be limited to low strokes when using dry sliding friction between the solid dielectric elements with a coefficient of friction k = 3 × 100 - 2 × 10⁻², which is depicted in a magnified way in the bottom left part of Fig. 20. Such a dry sliding friction may be achieved, when the solid dielectric elements are in direct contact with each other. Electrostatic transducers based on offset parallel-plate capacitor architectures may reach medium strokes when using rolling friction with a coefficient of friction k = 10⁻³ - 10⁻⁵. Such a rolling friction may, e.g., be implemented by arranging rolling elements between the solid dielectric elements. Experimental results showed that electrostatic transducers based on offset parallel-plate capacitor architectures may be able to reach large strokes when using hydrodynamic lubrication with a coefficient of friction k = 10⁻⁴ - 10⁻⁸. Experimental results corresponding to the results of Fig.16 exhibit that exemplary electrostatic gliding transducers as proposed may operate in the range of hydrodynamic lubrication with exceptionally low friction, e.g., with a coefficient of friction k = 2.7 × 10⁻⁶. Thus, they may be able to reach outstanding performance.

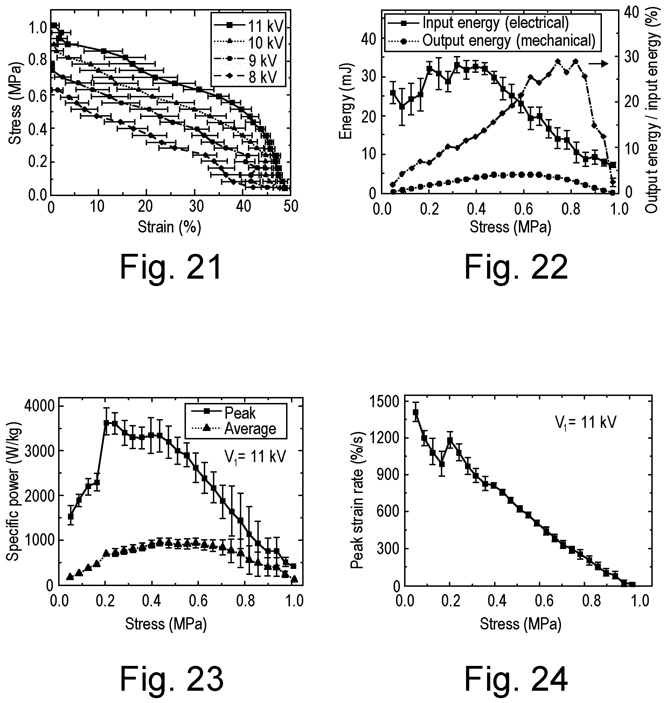

Fig. 21 shows an exemplary stress-strain diagram for exemplary electrostatic gliding transducers, e.g., electrostatic gliding actuators, at different driving voltages. The diagram illustrates a stress-strain performance of electrostatic gliding transducers at different voltages. All data is collected from 7 exemplary electrostatic gliding transducers.

Fig. 22 shows an exemplary energy-stress diagram for an input, output as well as an output/input-ratio for exemplary electrostatic gliding transducers, e.g., electrostatic gliding actuators. Illustrated are input electrical energy and output mechanical energy of electrostatic gliding transducers as well as their ratio, during contraction for different loads, i.e., different actuation stresses at a driving voltage of 11 kV. All data is collected from 7 exemplary electrostatic gliding transducers.

Fig. 23 shows an exemplary specific power-stress diagram for a peak and an average specific power of exemplary electrostatic gliding transducers, e.g., electrostatic gliding actuators. The diagram illustrates peak and average specific power for different loads, i.e., different actuation stresses at a driving voltage of 11 kV. All data is collected from 7 exemplary electrostatic gliding transducers.

Fig. 24 shows an exemplary peak strain-stress diagram for exemplary electrostatic gliding transducers, e.g., electrostatic gliding actuators. Illustrated is a peak strain rate during contraction for different loads, i.e., different actuation stresses at a driving voltage of 11 kV. A maximum peak strain rate of 1410 %/s is achieved at 0.05 MPa. All data is collected from 7 exemplary electrostatic gliding transducers.

Fig. 25 illustrates an exemplary deactivation of an exemplary electrostatic gliding transducer 100, e.g., an electrostatic gliding actuator. Improved deactivation mechanisms shortening a release time for releasing the glider 112 after an actuation may enable an increasing of an actuation frequency. In Fig. 25 a usage of a spring element 140 for reducing the release time of an exemplary electrostatic gliding transducer 100 is shown.

Fig. 26 shows an exemplary voltage over time and an exemplary stroke over time diagram for the steps of deactivation of Fig. 25. The voltage over time diagram illustrates a voltage pattern, which may be used for reducing the release time of the electrostatic gliding transducer 100 of Fig. 25 in addition to the spring element 140 or as an alternative to the spring element 140. The voltage pattern comprises a driving voltage 130 in form of a square-wave voltage of magnitude V₁, which is continued by a deactivation voltage 132. The deactivation voltage is provided in form of an alternating polarity voltage with a linearly decaying amplitude. The exemplary stroke over time diagram shows different values of strokes for different steps 1 to 4 as illustrated in Fig. 25, when using the voltage pattern of Fig. 26.

Fig. 27 shows an exemplary release time-stress diagram for different configurations of exemplary electrostatic gliding transducers, e.g., electrostatic gliding actuators. The comparison of the release times as a function of stress, i.e., weights being lifted, are depicted for a configuration without any additional measures for reducing the release time, for a configuration with a spring element for reducing the release time, for a configuration using an AV deactivation voltage for reducing the release time, and for a configuration using both, i.e., spring element and AV deactivation voltage, simultaneously. Data was acquired from 7 exemplary electrostatic gliding transducers.

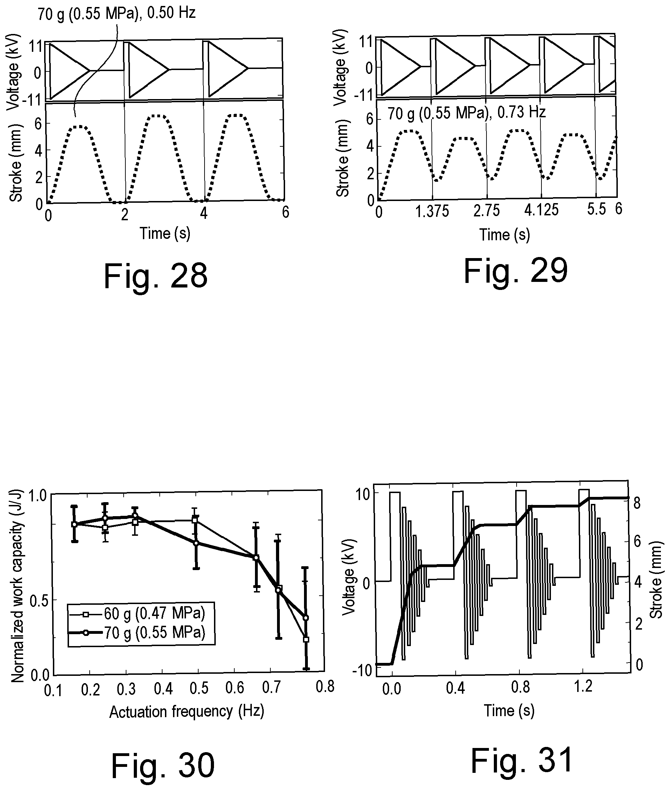

Fig. 28 shows an exemplary voltage over time and an exemplary stroke over time diagram for a deactivation voltage with a first frequency of 0.50 Hz. The exemplary electrostatic gliding transducer, for which the respective stroke is measured comprises a spring element and is operated by a driving voltage of 11 kV under e stress of 0.55 MPa, i.e., with a weight of 70 g attached to the exemplary electrostatic gliding transducer. The pattern of the voltage shown in the exemplary voltage over time corresponds to the voltage pattern shown in Fig. 26.

Fig. 29 shows an exemplary voltage over time and an exemplary stroke over time diagram for a deactivation voltage with a second frequency of 0.73 Hz. The exemplary electrostatic gliding transducer, for which the respective stroke is measured comprises a spring element and is operated by a driving voltage of 11 kV under a stress of 0.55 MPa, i.e., with a weight of 70 g attached to the exemplary electrostatic gliding transducer. The pattern of the voltage shown in the exemplary voltage over time corresponds to the voltage pattern shown in Fig. 26.

Fig. 30 shows an exemplary diagram of a normalized work capacity as a function of a frequency of a deactivation voltage. The normalized work capacity is depicted for a stress of 0.47 MPa, i.e., with a weight of 60 g attached to exemplary electrostatic gliding transducers and for a stress of 0.55 MPa, i.e., with a weight of 70 g attached to exemplary electrostatic gliding transducers. Data was acquired from 3 exemplary electrostatic gliding transducers.

Fig. 31 shows an exemplary diagram of a stepwise linear contraction of an exemplary electrostatic gliding transducer, e.g., an electrostatic gliding actuator. For driving the exemplary electrostatic gliding transducer, a 10 kV voltage pattern is used.

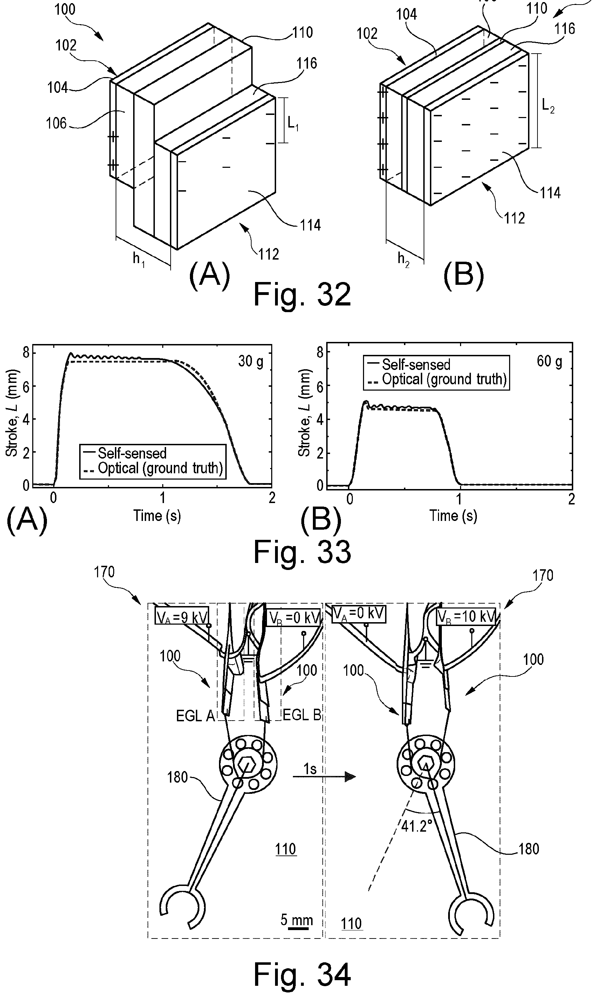

Fig. 32 shows an exemplary activation of an exemplary electrostatic gliding transducer 100, e.g., an electrostatic gliding actuator. The exemplary electrostatic gliding transducer 100 comprises a stator 102 and a glider 112. The glider 112 is arranged movably relative to the stator 102 along a direction 122 of movement. The stator 102 comprises a first electrode 104 arranged on a first solid dielectric element 106. The glider 112 comprises a second electrode 114 arranged on a second solid dielectric element 116.

A capacitance of electrostatic gliding transducers is linked to their geometry. The capacitance of the exemplary electrostatic gliding transducer 100 depends on a relative position of the glider 112 with the second electrode 114 relative to the stator 102 with the first electrode 104. For a configuration (A) shown on the left with only partially overlapping electrodes 104, 114, which only have an overlap of L₁, a capacitance of the exemplary electrostatic gliding transducer 100 is lower than for a configuration (B) shown on the right with fully overlapping electrodes 104, 114 having an overlap of L₂ equal to a length of the electrodes 104, 114. Thus, by determining the capacitance of the exemplary electrostatic gliding transducer 100, a stroke can be sensed. This feature of a stroke sensing may, e.g., be implemented in form of a self-sensing capability. Such a self-sensing capability may, e.g., be implemented by superposing a sensing signal onto a driving voltage and/or a deactivation voltage used for controlling the exemplary electrostatic gliding transducer 100. The sensing signal may, e.g., be used for determining a capacitance of the electrostatic gliding transducer 100, which may be used determined for determining a stroke, i.e., a distance by which the glider 112 has been moved along the direction 122 of movement.

An electrostatic gliding transducer 100 may, e.g., be considered in an approximation as an offset parallel-plate capacitor with a capacitance that may be calculated as C = ε A/h =ε w L/h, where ε is an overall permittivity of the dielectric materials, A is an overlapping area of the electrodes 104, 114, h is a thickness of the dielectric materials between the electrodes 104, 114, w is a width of the electrostatic gliding transducer 100, and L is the stroke of the electrostatic gliding transducer 100. As an electric field is applied to an electrostatic gliding transducer 100, the glider electrode 114 is pulled towards the stator electrode 104, changing the overlapping electrode area and the thickness of the dielectric materials.

For example, a low-amplitude, e.g., 50 V, high-frequency, e.g., 1000 Hz, alternating, e.g., sinusoidal, sensing voltage signal Vₛₑₙₛₑ may be superimposed to a high-amplitude driving voltage signal, e.g., V_{D} = 9.8 kV, such that the amplitude of the sensing voltage Vₛₑₙₛₑ is enough that it does not affect actuation. A current flowing through the electrostatic gliding transducer Iₛₑₙₛₑ may, e.g., be estimated from a voltage Vₘₑₐₛ across a fixed measurement resistor, e.g., R = 50 kΩ, which is connected between the electrostatic gliding transducer and ground.

A capacitive reactance of the electrostatic gliding transducer may be calculated as X_{C} = |Z| sin(φ), where a magnitude of the impedance Z is |Z| = Vₛₑₙₛₑ / Iₛₑₙₛₑ.

The capacitance of the electrostatic gliding transducer may be calculated using the capacitive reactance X_{C} and the frequency of the sensing voltage signal f as C = 1/ X_{C} 2π f.

The voltage signals were created using MATLAB and amplified using an amplifier, e.g., a Trek 610E from Advanced Energy. Measured voltage and current data were transmitted and recorded via a DAQ and the capacitance was calculated using the above equations, e.g., by a custom MATLAB program. The stroke of the transducers was recorded using the same optical method as above in view of the evaluating of input electrical energy and output mechanical energy of electrostatic gliding transducers and tracked using the open-source tracking software, e.g., DeepLabCut. For example, a linear fitting relationship between the capacitance and the stroke may be obtained for calculating the self-sensed stroke.

Fig. 33 shows exemplary stroke over time diagrams for different weights applied as loads to the exemplary electrostatic gliding transducer of Fig. 32. The diagrams provide a comparison of transient strokes of the exemplary electrostatic gliding transducers evaluated using a self-sensing and an optical method The left stroke over time diagram (A) shows a development of a stroke over time for an activation of for the exemplary electrostatic gliding transducer of Fig. 32 lifting a weight of 30 g. The diagram comprises a function of the stroke measured using a self-sensing capability of the exemplary electrostatic gliding transducer. As ground truth, the diagram also shows a function of the stroke measured optically, e.g., using a high-speed camera for monitoring the transient stroke. As shown in the left stroke over time diagram (A), the results of the self-sensing measurement are in good agreement with the ground truth.

The left stroke over time diagram (A) of Fig. 33 shows a development of a stroke over time for an activation of for the exemplary electrostatic gliding transducer of Fig. 32 lifting a weight of 60 g. The diagram comprises a function of the stroke measured using a self-sensing capability of the exemplary electrostatic gliding transducer. As ground truth, the diagram also shows a function of the stroke measured optically, e.g., using a high-speed camera for monitoring the transient stroke. As shown in the right stroke over time diagram (A), the results of the self-sensing measurement are in good agreement with the ground truth.

Fig. 34 shows an exemplary robotic arm 180 driven by an antagonistic pair 170 of exemplary electrostatic gliding transducers 100, e.g., electrostatic gliding actuators. The pair 170 comprises a first exemplary electrostatic gliding transducers EGL A driven by a driving voltage of 9 kV and a second exemplary electrostatic gliding transducers EGL B driven by a driving voltage of 10 kV. The antagonistic pair 170 of exemplary electrostatic gliding transducers 100 as well as the robotic arm 180 are, e.g., arranged in a liquid dielectric 110.

Fig. 35 shows an exemplary activation of an exemplary 2 × 6-array 170 of exemplary electrostatic gliding transducers 100, e.g., electrostatic gliding actuators. The 2 × 6-array 170 comprises a first unit with 6 exemplary electrostatic gliding transducers 100 arranged in parallel and a second unit with 6 exemplary electrostatic gliding transducers 100 arranged in parallel. The two units of 6 exemplary electrostatic gliding transducers 100 are arranged in series. Using electrostatic gliding transducers 100 in arrays may, e.g., increase an actuation stroke and/or force. A 2 × 6-array 170 of electrostatic gliding transducers 100 as shown in Fig. 35 is, e.g., able to lift a 1 kg weight at 11 kV. A stroke may, e.g., be 10.89 mm with a strain of 25.9%. The 2 × 6-array 170 of electrostatic gliding transducers 100 as shown in Fig. 35 is, e.g., arranged in a liquid dielectric 110.

A fabrication of a 2×6-array 170 of electrostatic gliding transducers 100 may, e.g., comprise: For example, an array of electrostatic gliding transducers may be provided by mechanically connecting a multitude of electrostatic gliding transducers in parallel and/or in series. For example, a 2×6-array of electrostatic gliding transducers may be made from six two-unit electrostatic gliding transducers that are mechanically connected in parallel. The two-unit electrostatic gliding transducers are two electrostatic gliding transducers mechanically connected in series. An exemplary two-unit electrostatic gliding transducer may, e.g., comprise three solid dielectric elements, i.e., a first, a second, and a third dielectric element. The first solid dielectric element may, e.g., be provided by a 13 µm polyimide film with an area of 150 mm by 62 mm and the second and third solid dielectric elements may, e.g., be provided by two 25 µm polyimide films with an area of 150 mm by 30 mm. The 13 µm film may, e.g., comprise a 130 mm-by-22 mm electrode area in the center of the film. For example, the first solid dielectric element, e.g., the 13 µm film, may form a first glider and a second stator of the two-unit electrostatic gliding transducer. The 25 µm films may, e.g., comprise a 130 mm-by-10 mm electrode area in the center of the films. For example, the second and third solid dielectric elements, e.g., the two 25-µm films, may form a first stator and a second glider of the two-unit electrostatic gliding transducer. To the first solid dielectric element one or more, e.g., two reinforcement elements may be attached. The reinforcement elements may, e.g., be attached to the first solid dielectric element on opposite sides to form a reinforcement frame. For example, in the middle of the 13 µm film, two reinforcement elements in form of two strips of 130 mm-by 2-mm fiberglass with a thickness of 0.5 mm may be attached on opposing sides of the 13 µm film as a reinforcement frame. The stators and the gliders of the two-unit electrostatic gliding transducers may, e.g., be provided with mounts. The second and third solid dielectric elements may, e.g., be folded from an edge of the electrode arranged thereon to prevent interference during contraction. The two-unit electrostatic gliding transducers, e.g., six two-unit electrostatic gliding transducers, may, e.g., be connected in parallel using connecting elements to form the array of electrostatic gliding transducers. The connecting elements may, e.g., comprise bolts, e.g., M4 bolts, and nuts as spacers to form the array of electrostatic gliding transducers.

Fig. 36 shows exemplary electrostatic gliding transducers 100, e.g., electrostatic gliding actuators, packaged in a common sealed packaging envelope 160. Such a design of packaged electrostatic gliding transducers 100 may, e.g., allow operation in air. Fig. 37 shows an exemplary combined voltage over time and an exemplary stroke over time diagram for the exemplary electrostatic gliding transducers of Fig. 36 packaged in a common sealed packaging envelope. The transient stroke illustrated in the diagram of Fig. 37 is a stroke of a single package of electrostatic gliding transducers lifting a 150 g load in response to a 10 kV voltage pattern as shown in the diagram of Fig. 37.

Fig. 38 shows an exemplary voltage over time and an exemplary stroke over time diagram for an exemplary 2 × 7-array of packages of electrostatic gliding transducers 100, e.g., electrostatic gliding actuators. The 2 × 7-array may comprise a first unit with 7 exemplary packages of electrostatic gliding transducers 100 arranged in parallel and a second unit with 7 exemplary packages of electrostatic gliding transducers 100 arranged in parallel. The two units of 7 exemplary packages of electrostatic gliding transducers 100 may be arranged in series. For example, such a 2 × 7-array of packages of electrostatic gliding transducers may be able to lift a weight of 1111 g in air. A stroke may, e.g., be 9.85 mm with a strain of 20.5%. Each package may lift a weight of circa 159 g. At point A in time, the electrostatic gliding transducers 100 of the 2×7-array of packages are deactivated. At point B in time a maximum stroke L_{B} is reached.

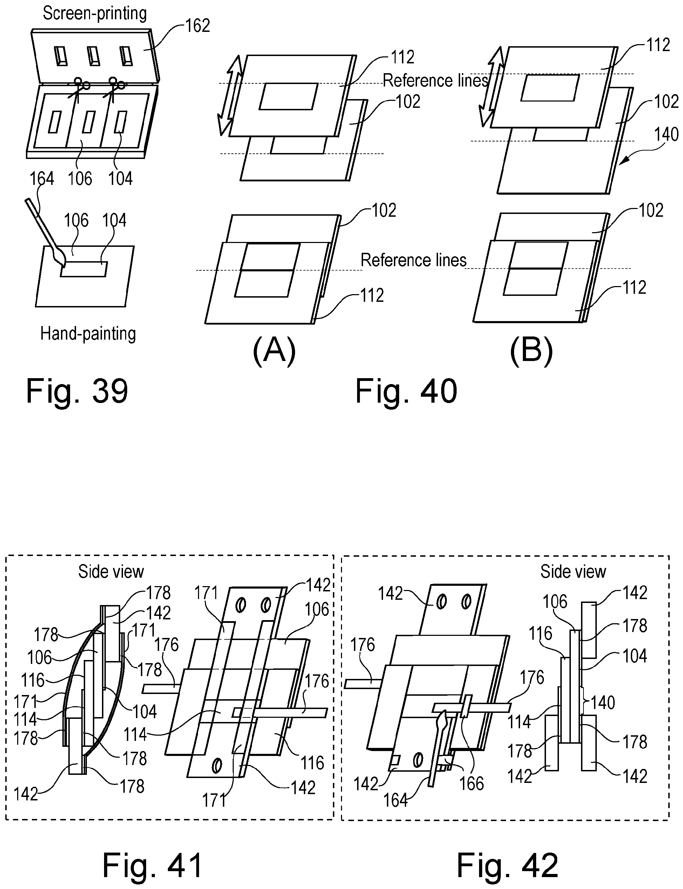

Fig. 39 to 42 show exemplary fabrication steps for fabricating exemplary electrostatic gliding transducers 100. Fig. 39 shows an exemplary first step of fabricating exemplary electrostatic gliding transducers 100. In the first step, electrodes 104 may be printed or painted, e.g., using screen printing or (hand) painting, onto solid dielectric elements 106, e.g., polyimide dielectric films. For screen printing, e.g., a screen 162 may be used. For painting, e.g., a brush 164 may be used. Fig. 40 shows an exemplary second step of fabricating exemplary electrostatic gliding transducers 100. In the second step, the solid dielectric elements 106, 116, e.g., polyimide dielectric films, are trimmed into designated sizes and aligned, e.g., based on the edge of the electrodes 104, 114 arranged the solid dielectric elements 106, 116. Fig. 41 shows an exemplary third step of fabricating exemplary electrostatic gliding transducers 100 without spring element. This third step comprises an attaching of accessories, including, e.g., mounts 142, electrical connections 176, and aligning elements 171 to the solid dielectric elements 106, 116 to complete an electrostatic gliding transducer 100. The mounts 142 may, e.g., be attached using bonding elements 178, e.g., double-sided tapes. The aligning elements 171 may, e.g., be provided in form of aligning strips. The aligning elements 171 may, e.g., be attached using bonding elements 178, e.g., double-sided tapes. The electrical connections 176 may, e.g., be attached using the aligning elements 171. Fig. 42 shows an exemplary third step of fabricating exemplary electrostatic gliding transducers 100 with a spring element 140. This third step comprises an attaching of accessories, including, e.g., mounts 142, and electrical connections 171 to the solid dielectric elements 106, 116 to complete an electrostatic gliding transducer 100. The mounts 142 may, e.g., be attached using bonding elements 178, e.g., double-sided tapes. The electrical connections 176 may, e.g., be attached using tape 166.

An exemplary electrostatic gliding transducer may, e.g., be fabricated using the following steps: For example, one or more dielectric films may be provided. The one or more dielectric films may, e.g., be a polyimide film. Onto the one or more dielectric films one or more electrodes may be applied. The one or more electrodes may, e.g., be carbon electrodes. For example, a carbon electrode may be applied, either manually or automatically, onto a dielectric film using carbon paint, e.g., DAG-T-502 from Ted Pella Inc. For example, a carbon electrode may be applied, either manually or automatically, onto a dielectric film using a brush or screen-printing carbon ink, e.g., CI-2051 by Nagase ChemteX America LLC.

For screen-printing, e.g., the following process may be used: a polyester screen with a 90 thread/cm mesh, e.g., SRA490T6 from SiebdruckVersand, may be coated on both sides with a layer of photoresist, e.g., HIGHRE from SiebdruckVersand, and dried in a dark environment, e.g., for 4 hours. A transparency, e.g., LASEA4 from SiebdruckVersand, with the designed electrode pattern may be printed using an inkjet printer, e.g., Expression Photo HD XP-15000 from Epson, as a mask. The mask may be placed on the screen and exposed to light, e.g., provided by a lamp. The lamp may, e.g., be a 5001782 lamp from Fischer & Honsel GmbH, which may be arranged in a distance of approximately 80 cm from the screen with the mask. The screen with the mask may, e.g., be exposed to the light for 7.5 minutes. After the exposure to the light, the screen may be flushed, e.g., with water, to wash off the unexposed photoresist. The screen may be dried, e.g., air-dried. The dried screen may be fixed onto one or more hinges, e.g., onto a pair of hinges, on a platform with a piece of heat-resistant glass as the printing base.

Before printing electrodes onto the films, e.g., one or more alignment patterns of electrodes may be printed onto the glass. The alignment patterns may, e.g., be printed by applying carbon ink on the screen using a squeegee, e.g., RRG80SH from SiebdruckVersand.

The alignment patterns may be dried. For example, the alignment patterns may be dried using a heat gun, e.g., HL 1920 E from Steinel. For example, a dielectric film, e.g., a strip of trimmed dielectric film, is placed onto the glass. Using, e.g., the same process as for the printing the one or more alignment patterns, one or more electrodes may be printed onto the dielectric film. The dielectric film may be dried. For drying the dielectric film, a drier may be used, e.g., Fruit Jerky 18 from Klarstein. The dielectric film may, e.g., be dried for 30 min at 30 °C. The resulting dielectric film with electrodes may afterwards be trimmed, mechanically or automatically, into the forms of the stator and/or the glider of the electrostatic gliding transducer. The dielectric film with electrodes may, e.g., be trimmed using a cutter knife.

Two pieces of trimmed and printed dielectric film, i.e., a stator and a glider, may be aligned. The two pieces of trimmed and printed dielectric film may, e.g., be aligned using edges of the electrodes as a reference line on a millimeter paper. The aligned pieces of trimmed and printed dielectric film may be assembled. The pieces may be assembled with one or more accessories, comprising, e.g., one or more mounts, one or more electrical connections of the electrodes, and/or one or more aligning elements, e.g., aligning strips if needed.

The one or more mounts may, e.g., be made from a fiberglass sheet. The fiberglass sheet may, e.g., have a thickness of 0.5 mm. For example, a fiberglass sheet 6206205405 from R&G Faserverbundwerkstoffe GmbH may be used. The fiberglass sheet may be trimmed mechanically, manually, or automatically, into one or more pieces. One or more holes may be applied to, e.g., drilled into, the one or more pieces for providing one or more connecting interfaces for connecting one or more weights to the one or more mounts.

A design of a top mount to be applied at an upper end of a solid dielectric element may, e.g., comprise a width of 30 mm and a length of 40 mm. The top mount may, e.g., comprise one or more through holes. For example, the top mount may comprise two 4.5 mm-diameter holes, e.g., configured for receiving M4 bolts. A central distance between the holes of the top mount may, e.g., be 15 mm. A position of the holes of the top mount may, e.g., be in a center of a width direction of the top mount and/or 5 mm away from a width edge of the top mount.

A design of a bottom mount to be applied at a lower end of a solid dielectric element may, e.g., comprise a width of 30 mm and a length of 20 mm. The bottom mount may, e.g., comprise one or more through holes. For example, the bottom mount may comprise a 7 mm-diameter hole. The hole may, e.g., be arranged in a center of a width direction of the bottom mount and/or 6 mm away from a width edge of the bottom mount.

For example, the mounts may be bonded to the solid dielectric elements. For example, a double-sided tape, e.g., 9086 from 3M, may be used to bond, i.e., adhere, the mounts to the solid dielectric elements.

The electrodes of the electrostatic gliding transducer may, e.g., be provided with conductive lines configured for establishing electrical connections to one or more external electronic devices. The one or more external electronic devices may, e.g., comprise a voltage source configured for applying the driving voltage to the electrodes. The with conductive lines may, e.g., be sandwiched between two layers of a solid dielectric material, e.g., two layers of dielectric films. For example, conductive lines may be screen-printed. For example, a heat-sealable biaxially oriented polypropylene (BOPP) sheet, e.g., HSF5114H from Multiplastics Europe Ltd., may be used to print an array of conductive lines. The printed array of conductive lines may, e.g., have a width of 3 mm and/or a length of 200 mm. The printed BOPP sheet may, e.g., be encapsulated with another layer of BOPP. The other layer of BOPP may, e.g., be DK20SP from Geo Knight & Co Inc. The other layer of BOPP may, e.g., be shorter than the printed BOPP sheet being encapsulated and thus shorter than the array of conductive lines. The other layer of BOPP may, e.g., have a length of 160 mm. Thus, e.g., 20 mm of conductive electrodes may be left exposed at both ends of the array of conductive lines. The encapsulating may, e.g., comprise a heat pressing. Heat pressing may, e.g., be executed at a temperature of 140 °C and/or a pressure of 0.6 bar. For example, the heat pressing is applied for 35 seconds. For example, a polyimide sheet, e.g., a 25 µm polyimide sheet may be placed on top of BOPP films during heat pressing to avoid surface damage. The conductive lines may be connected to the electrodes of the electrostatic gliding transducer using conductive paint, e.g., carbon paint, and/or a bonding agent, e.g., provided in form of a single-sided tape. The single-sided tape may, e.g., be 1205 from 3M or 57405 from Tesa SE.

Aligning elements, e.g., aligning strips may, e.g., be made from a polyester film. For example, the polyester film may be Mylar 850 from Petroplast GmbH. The aligning strips may, e.g., have a width of 10 mm and a length of 60 mm. The aligning elements may, e.g., be attached to the solid dielectric elements and/or mounts attached to the solid dielectric elements at both ends, e.g., using a bonding agent. The bonding agent for attaching the aligning elements may, e.g., be provided in form of a double-sided tape, e.g., 9086 from 3M. The aligning elements may, e.g., be stuck onto mounts of the electrostatic gliding transducer using double-sided tape for aligning the stator and the glider at rest state, in particular in an initial deactivated state.

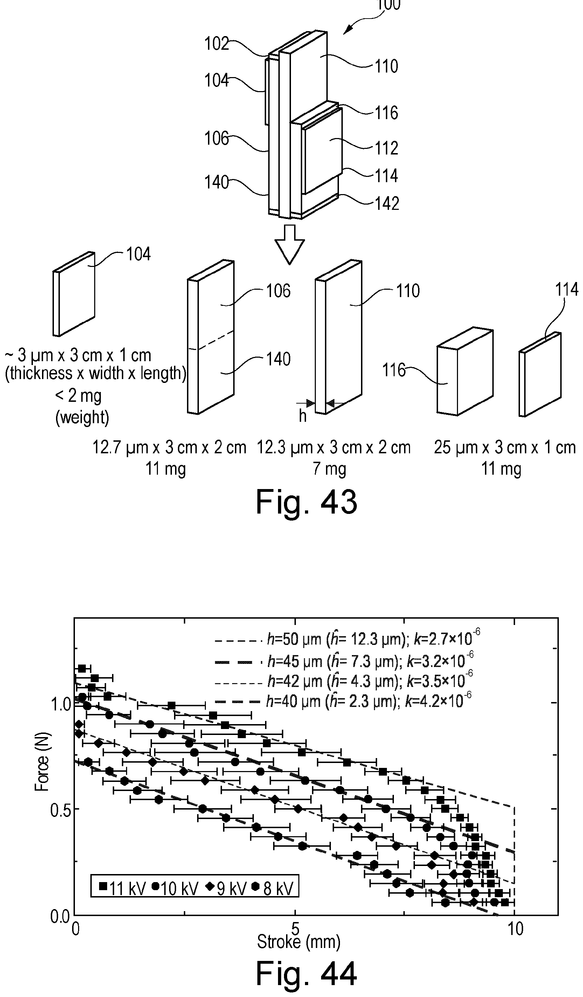

Fig. 43 shows mass contributions of different components to an exemplary electrostatic gliding transducer 100. These components comprise, e.g., solid dielectric element 106 of a stator 102 with spring element 140, electrode 104 of the stator 102, solid dielectric element 116 of a glider 102, electrode 114 of the stator 112, and a dielectric liquid 110 forming a hydrodynamic lubrication layer.

Fig. 44 provides estimates for a thickness of lubrication layer and a coefficient of friction k for the exemplary stress-strain diagram of Fig. 21. The diagram illustrates a stress-strain performance of electrostatic gliding transducers at different voltages. All data is collected from 7 exemplary electrostatic gliding transducers. Using the experimental data of Fig. 21 and the equations for the $F \left(L, k\right) = {F}_{g} - {F}_{f} = \frac{1}{2} \frac{εw}{h} {V}_{1}^{2} - k \frac{1}{2} \frac{εwL}{{h}^{2}} {V}_{1}^{2}$ generated by an exemplary electrostatic gliding transducer 100 with an offset parallel-plate capacitor architecture as discussed in context of Fig. 18 and 19, a thickness of lubrication layer ĥ of dielectric liquid 110 can be estimated using the maximum force F(L,k)ₘₐₓ, i.e., an intersection of the function F(L,k) with the y-axis. Furthermore, the coefficient of friction k can be estimated by a slope of the force-stroke relationship F(L,k). For a linear fit, e.g., all data points in the small- and medium-stroke regimes may be considered, while data points near the geometry limit, which may noticeably deviate from the linear trend, may be excluded.

The resulting estimates are ĥ = 12.3µm and k = 2.7 × 10⁻⁶ for a driving voltage of 11 kV, ĥ = 7.3µm and k = 3.2 × 10⁻⁶ for a driving voltage of 10 kV, ĥ = 3.5µm and k = 2.7 × 10⁻⁶ for a driving voltage of 9 kV, ĥ = 2.3µm and k = 4.2 × 10⁻⁶ for a driving voltage of 8 kV.

Fig. 45 shows fluid dynamics in a lubrication layer of an exemplary electrostatic gliding transducer 100. There may, e.g., be two concurrent motions that may occur in the lubrication layer of an exemplary electrostatic gliding transducer 100 during contraction. These two motions are a squeezing motion and a gliding motion. The stator 102 and the glider 112 of the electrostatic gliding transducer 100 may, e.g., be squeezed together by the electrostatic normal force Fₙ resulting in the squeezing motion. This squeezing is illustrated for three points of time t₁, i.e., at a start of the squeezing, t₂, during the squeezing, and t₃., i.e., at an end of the squeezing. The glider 112 may glide in a gliding motion to reduce a relative offset 120 to the stator 102 driven by the electrostatic gliding force F_{g}. In Fig. 45, L denotes a length of the electrodes, w denotes a width of the electrodes, ĥ denotes a thickness of the lubrication layer of dielectric liquid 110, i.e., a distance between the sold dielectric elements, η a viscosity of the dielectric liquid 110, p a hydrodynamic pressure, U a velocity of the glider 112, u a velocity of the dielectric liquid 110, Fₙ the electrostatic normal force, F_{g} the gliding force, Fᵥ a viscous force, and z a perpendicular direction from stator 102 to glider 102.

Fig. 46 shows an exemplary activation of an exemplary electrostatic gliding transducer 100, e.g., an electrostatic gliding actuator. Depicted is a schematic of an exemplary full actuation cycle for an exemplary electrostatic gliding transducer 100, when lifting a load to a higher position. The solid arrow shows the process being analyzed for measuring input electrical energy and output mechanical energy. The full exemplary actuation cycle of Fig. 46 comprises a loading of the electrostatic gliding transducer 100 in deactivated state (1), an activation of the electrostatic gliding transducer 100 applying a driving voltage V₁ (2), a removal of the weight in the activated state (3), and a decreasing of the driving voltage resulting in a transition of the electrostatic gliding transducer 100 back into the deactivated state (4).

Fig. 47 shows an exemplary setup for controlling an exemplary electrostatic gliding transducer 100, e.g., an electrostatic gliding actuator. This setup enables a measuring of input and output energies. The setup comprises, e.g., an HV-amplifier 158, which is used to apply voltage to the electrostatic gliding transducer 100 and to send a transient voltage to a data acquisition system (DAQ) 152. An electrometer 154 is used to measure a transient charge on the electrostatic gliding transducer 110. Am optical sensor 156, e.g., a high-speed camera, is used to monitor a transient stroke resulting from the applying of the transient voltage. The setup and the activation of the electrostatic gliding transducer 110 is controlled by a controller 150 comprising, e.g., a computational unit.

Fig. 48 shows an exemplary combined voltage over time and charge over time diagram (upper diagram) as well as an exemplary combined force over time and stroke over time diagram for the exemplary electrostatic gliding transducer of Fig. 46 lifting a weight of 95 g, i.e., 0.74 MPa.

Fig. 49 shows data from Fig. 48 plotted in a voltage-charge work-conjugate plane (left diagram) and a force-stroke work-conjugate plane (right diagram). The enclosed areas correspond to the input electrical energy (left area) and the output mechanical energy (right area).

In the evaluation of the electrical-to-mechanical energy conversion ratio of an electrostatic gliding transducer, a complete work cycle was not directly executed due to the operation of electrostatic gliding transducers in a dielectric liquid environment, which makes removal of the load challenging without disturbing the actuation process. However, a full actuation cycle may be approximated by the process shown in Fig. 46 and 49, where solid lines depict processes that were actually measured, and where dashed lines depict processes that were assumed. It may be note that the dashed lines in the voltage-charge work-conjugate plane may be considered as the worst-case scenario for electrical-to- mechanical energy conversion ratio, because they assume that no energy can be recovered in the process of discharging the electrostatic gliding transducers going from point 3 to point 4. The dashed lines in the force-stroke work-conjugate plane assume that the electrostatic gliding transducer does not further contract after removal of the load going from point 2 to point 3 in the cycle. This was also observed in experiments. Further, it may be assumed that stroke does not change when adding a load in the fully elongated state going from point 4 to point 1. The spring element is fully elongated and a film used to fabricate that spring element may be considered as inextensible for the range of applied loads in the examples considered herein. To account for the fact that full cycles are not directly evaluate, focus may be laid on the conversion ratio for the specific cycle being analyzed, rather than talking about efficiency of the electrostatic gliding transducer.

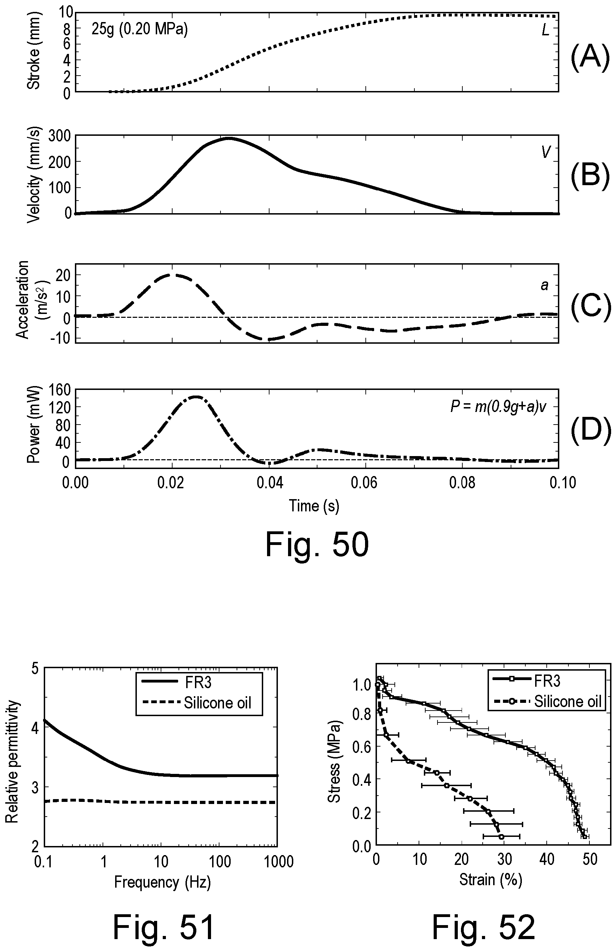

Fig. 50 shows an exemplary stroke over time (A), a velocity over time (B), an acceleration over time (C), and a power over time (D) diagram for an exemplary activation of an exemplary electrostatic gliding transducer, e.g., an electrostatic gliding actuator. These diagrams illustrate measurements of different performance metrics for the exemplary gliding transducer. Depicted are stroke (A), velocity (B), acceleration (C), and power (D) as functions over time for a transient stroke executed by the exemplary gliding transducer. The transient stroke was recorded using a high-speed camera. The velocity and acceleration were calculated from first and second derivative of the transient stroke, respectively. The power of the exemplary electrostatic gliding transducer P = m (0.9 g+a) v was calculated for a weight m, e.g., m = 25 g, and a velocity v as well as an acceleration a as shown in diagrams (B) and (C) of Fig. 50. A peak power is defined as a maximum value in the power-time curve and an average power is defined as an average value of the power-time curve.

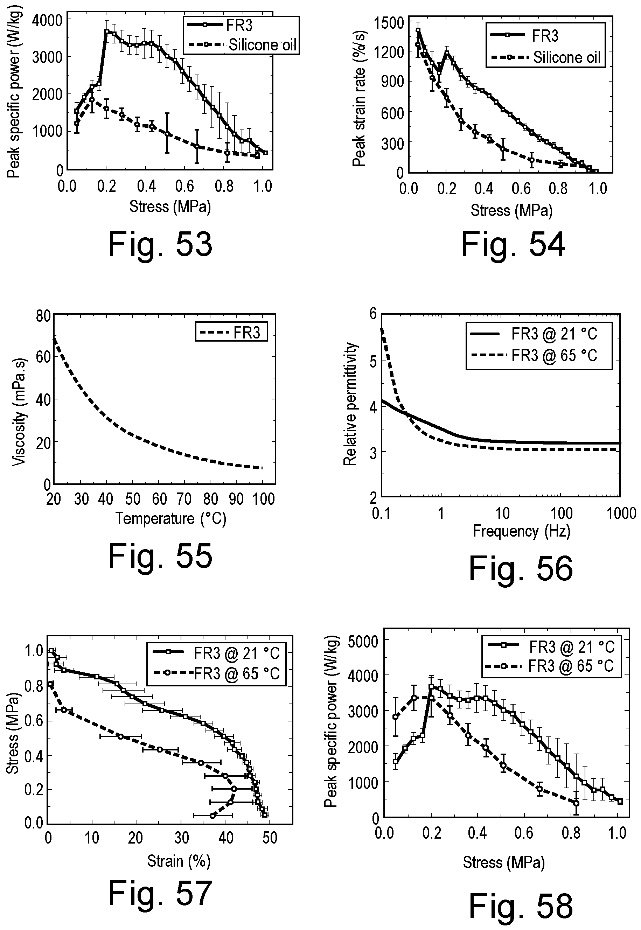

Fig. 51 to 54 show comparisons of an actuation performance of exemplary electrostatic gliding transducers, e.g., electrostatic gliding actuators, using silicone oil and transformer oil. Fig. 51 shows an exemplary relative permittivity-frequency diagram for different exemplary dielectric liquids. Depicted is a comparison of relative permittivities of an exemplary transformer oil (FR3; ^{~}60 mPa s) and an exemplary silicone oil (50 cSt; ~50 mPa s) comprised by the exemplary electrostatic gliding transducers. The relative permittivity refers to a ratio of a permittivity of the respective oil over the electric permittivity of a vacuum. Fig. 52 shows an exemplary stress-strain diagram for different exemplary dielectric liquids. Depicted is a comparison of a stress-strain performance of the exemplary electrostatic gliding transducers using the transformer oil and the silicone oil at 11 kV. Fig. 53 shows an exemplary peak specific power-stress diagram for different exemplary dielectric liquids. Depicted is a comparison of peak specific powers as functions of stress of the exemplary electrostatic gliding transducers using the transformer oil and the silicone oil at 11 kV. Fig. 54 shows an exemplary peak strain rate-stress diagram for different exemplary dielectric liquids. Depicted is a comparison of peak strain rates as functions of stress of the exemplary electrostatic gliding transducers using the transformer oil and the silicone oil at 11 kV.

Fig. 55 to 59 show comparisons of an actuation performance of an exemplary electrostatic gliding transducer, e.g., an electrostatic gliding actuator, at different temperatures. The exemplary electrostatic gliding transducer comprises transformer oil (FR3; ~60 mPa s) as a dielectric liquid. Fig. 55 shows an exemplary viscosity-temperature diagram for the exemplary dielectric liquid, i.e., transformer oil. Depicted is a dynamic viscosity of the transformer oil as a function of temperature for a range of temperature from 20°C to 100°C. Fig. 56 shows an exemplary relative permittivity-frequency diagram for the exemplary dielectric liquid, i.e., transformer oil, at different temperatures. Depicted is a permittivity of the transformer oil at different temperatures, i.e., 21°C and 65°C. Fig. 57 shows an exemplary stress-strain diagram for the exemplary dielectric liquid, i.e., transformer oil, at different temperatures. Depicted is a stress-strain performance of the exemplary electrostatic gliding transducer using the transformer oil at 21°C and at 65°C under 11 kV. Fig. 58 shows an exemplary peak specific power-stress diagram for the exemplary dielectric liquid, i.e., transformer oil, at different temperatures. Depicted is a peak specific power as a function of stress of the exemplary electrostatic gliding transducer, i.e., weight applied to the electrostatic gliding transducer, using the transformer oil at 21°C and at 65°C under 11 kV. Fig. 58 shows an exemplary relative peak strain rate-stress diagram for the exemplary dielectric liquid, i.e., transformer oil, at different temperatures. Depicted is a peak strain rate as a function of stress of the exemplary electrostatic gliding transducer, i.e., weight applied to the electrostatic gliding transducer, using the transformer oil at 21°C and at 65°C under 11 kV.

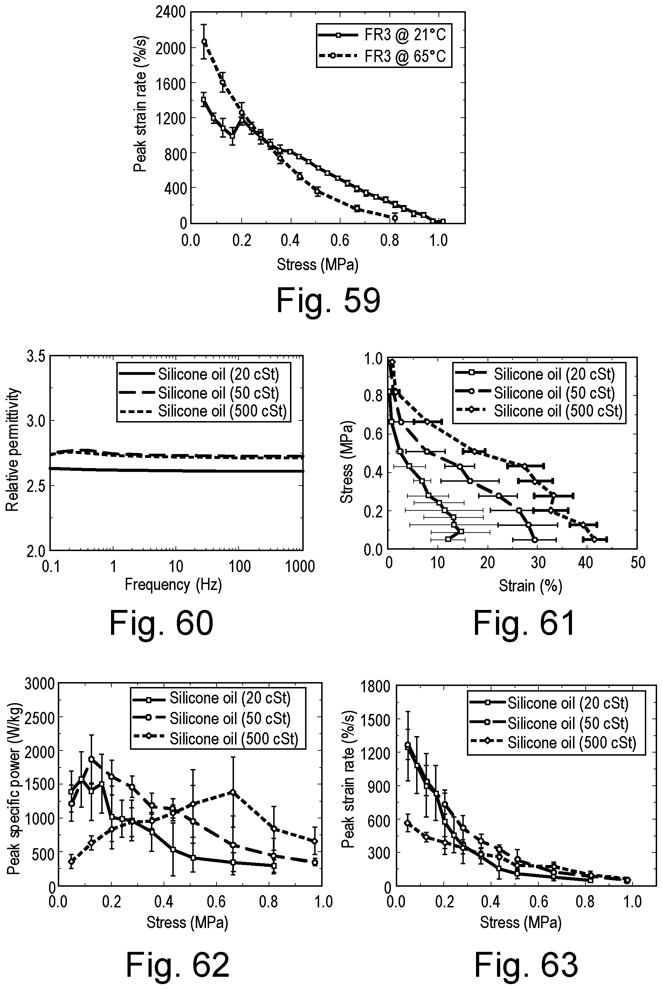

Fig. 60 to 63 show comparisons of actuation performances of exemplary electrostatic gliding transducers, e.g., electrostatic gliding actuators, using silicone oils with different viscosities, i.e., 20 cSt = 20·10⁻⁶m²/s, 50 cSt= 50·10⁻⁶m²/s, and 500 cSt= 500·10⁻⁶m²/s as a dielectric liquid. Fig. 60 shows an exemplary relative permittivity-frequency diagram for different exemplary dielectric liquids, i.e., silicone oils with different viscosities. Depicted is the relative permittivity of the different silicone oils with different viscosities, i.e., 20 cSt = 20·10⁶m²/s, 50 cSt= 50·10⁻⁶m²/s, and 500 cSt= 500·10⁻⁶m²/s. Fig. 61 shows an exemplary stress-strain diagram for different exemplary dielectric liquids, i.e., silicone oils with different viscosities. Depicted are stress-strain performances of the exemplary electrostatic gliding transducers using the different silicone oils at 11 kV. Fig. 62 shows an exemplary peak specific power-stress diagram for different exemplary dielectric liquids, i.e., silicone oils with different viscosities. Depicted are peak specific powers as functions of stress of the exemplary electrostatic gliding transducers, i.e., weight applied to the exemplary electrostatic gliding transducers, using the different silicone oils with the different viscosities at 11 kV. Fig. 63 shows an exemplary peak strain rate-stress diagram for different exemplary dielectric liquids, i.e., silicone oils with different viscosities. Depicted are peak strain rates as functions of stress of the exemplary electrostatic gliding transducers, i.e., weight applied to the exemplary electrostatic gliding transducers, using the different silicone oils with the different viscosities at 11 kV.

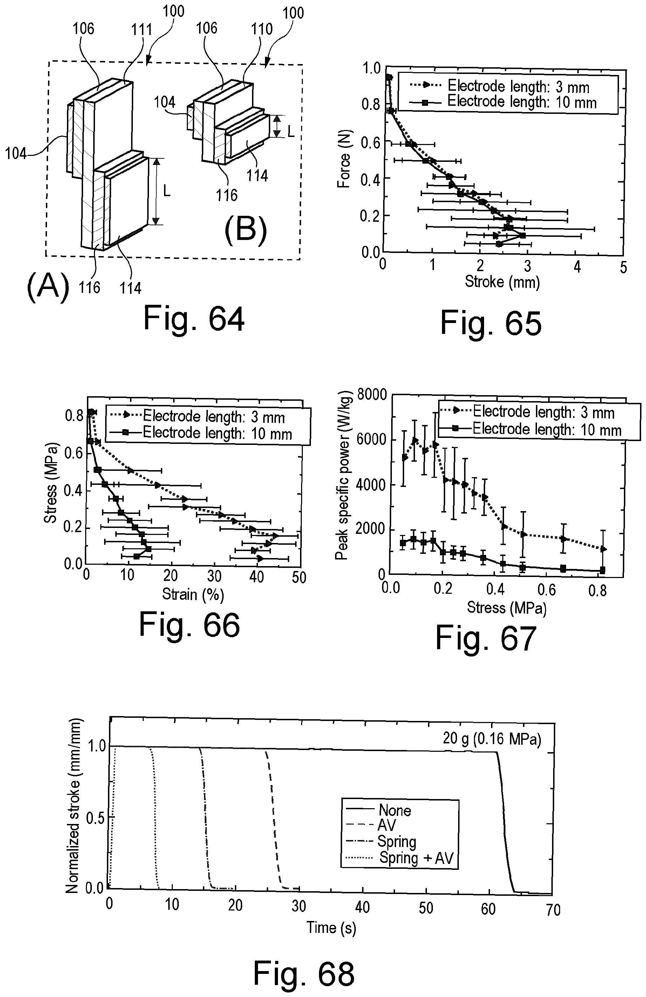

Fig. 64 shows exemplary electrostatic gliding transducers 100, e.g., electrostatic gliding actuators, with different lengths of electrodes 104, 114. Depicted are configurations of the exemplary electrostatic 100 gliding transducers with the different electrode lengths. A first one of the exemplary electrostatic gliding transducers 110 comprises two electrodes 104, 114 with an identical electrode length L of 10 mm. A second one of the exemplary electrostatic gliding transducers 100 comprises two electrodes 104, 114 with an identical electrode length L of 3 mm. Besides the different lengths of the electrodes 104, 114, the configurations of the two exemplary electrostatic gliding transducers 100 may be identical.

Fig. 65 to 67 show a comparison of actuation performances of the exemplary electrostatic gliding transducers of Fig. 64 with the different electrode lengths, i.e., 3 mm and 10 mm using a 20-cSt silicone oil, i.e., 20·10⁻⁶m²/s silicone oil, as a dielectric liquid. Fig. 65 shows an exemplary force-stroke diagram for the exemplary electrostatic gliding transducers of Fig. 64. Depicted are force-stroke characteristics of the two exemplary electrostatic gliding transducers using the 20-cSt silicone oil with the 3-mm long electrodes and 10-mm long electrodes at 11 kV. Fig. 66 shows an exemplary stress-strain diagram for the exemplary electrostatic gliding transducers of Fig. 64. Depicted are stress-strain characteristics of the two exemplary electrostatic gliding transducers using the 20-cSt silicone oil with the 3-mm long electrodes and 10-mm long electrodes at 11 kV. Fig. 67 shows show an exemplary peak specific power-stress diagram for the exemplary electrostatic gliding transducers of Fig. 64. Depicted are peak specific powers as a function of stress of the two exemplary electrostatic gliding transducers using the 20-cSt silicone oil with the 3-mm long electrodes and 10-mm long electrodes at 11 kV.

Fig. 68 shows an exemplary normalized stroke over time diagram for different configurations of exemplary electrostatic gliding transducers, e.g., electrostatic gliding actuators. This diagram illustrates release times of exemplary electrostatic gliding transducers using different mechanisms. Shown are normalized strokes, i.e., strokes each normalized relative to a maximum value of a stroke achieved by the respective exemplary electrostatic gliding transducer, as a function of time using different release mechanisms under a weight of 0.16 MPa. The mechanisms used are no additional release supporting mechanism (none), usage of an alternating polarity voltage with decaying amplitude as an additional release supporting mechanism (AV), usage of a spring element as an additional release supporting mechanism (spring), and combined usage of a spring element and an alternating polarity voltage with decaying amplitude as an additional release supporting mechanism (spring + AV).

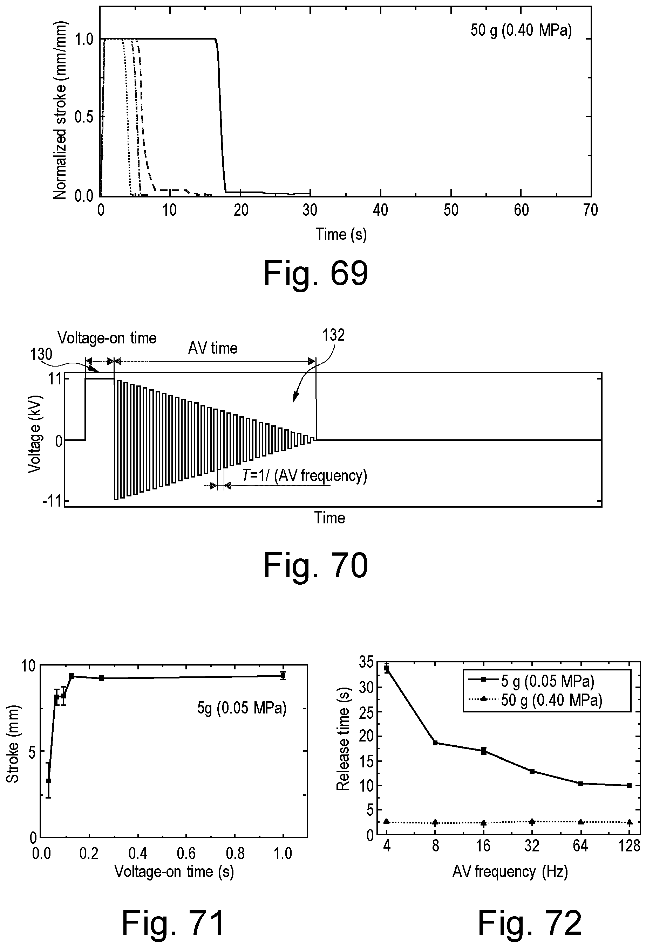

Fig. 69 shows an exemplary normalized stroke over time diagram for different configurations of exemplary electrostatic gliding transducers, e.g., electrostatic gliding actuators. This diagram illustrates release times of exemplary electrostatic gliding transducers using different mechanisms. Shown are normalized strokes, i.e., strokes each normalized relative to a maximum value of a stroke achieved by the respective exemplary electrostatic gliding transducer, as a function of time using different release mechanisms under a weight of 0.40 MPa, i.e., 50 g. The mechanisms used are no additional release supporting mechanism (none), usage of an alternating polarity voltage with decaying amplitude as an additional release supporting mechanism (AV), usage of a spring element as an additional release supporting mechanism (spring), and combined usage of a spring element and an alternating polarity voltage with decaying amplitude as an additional release supporting mechanism (spring + AV).

Fig. 70 shows an exemplary voltage pattern for controlling an exemplary electrostatic gliding transducer 100, e.g., an electrostatic gliding actuator. The depicted is a voltage-time plot of the exemplary voltage pattern, which comprises a driving voltage 130. The depicted voltage pattern further comprises an exemplary varying voltage pattern in form of an alternating polarity voltage with a decaying amplitude, which may, e.g., be used as a deactivation voltage 132. The exemplary voltage pattern illustrates which parameters are, e.g., varied. These exemplary parameters, which may be varied, e.g., comprise a voltage-on time, an alternating polarity voltage (AV) time, and an AV frequency. The voltage-on time refers to a time, over which a driving voltage is applied to the electrodes in the activated state of the electrostatic gliding transducer. The exemplary driving voltage 130 shown in Fig. 70 is a square-wave voltage. The AV time refers to a time, over which the deactivation voltage 132, e.g., an alternating polarity voltage with a decaying amplitude, is applied to the electrodes. The AV frequency is a frequency of the alternating polarity voltage with a decaying amplitude. When the driving voltage 130 is applied to an electrostatic gliding transducer, electric charges may accumulate on the interfaces between the solid dielectric elements and dielectric liquid. When the driving voltage 130 is switched off, these accumulated charges contribute to an electrostatic clutching of the glider and stator of the exemplary electrostatic gliding transducer and thereby impede a return of electrostatic gliding transducer to its initial deactivated state until these interfacial charges are sufficiently dissipated. By applying the deactivation voltage 132, the electrostatic clutching may be solved faster, i.e., a release time of the glider and stator of the exemplary electrostatic gliding transducer may be reduced.

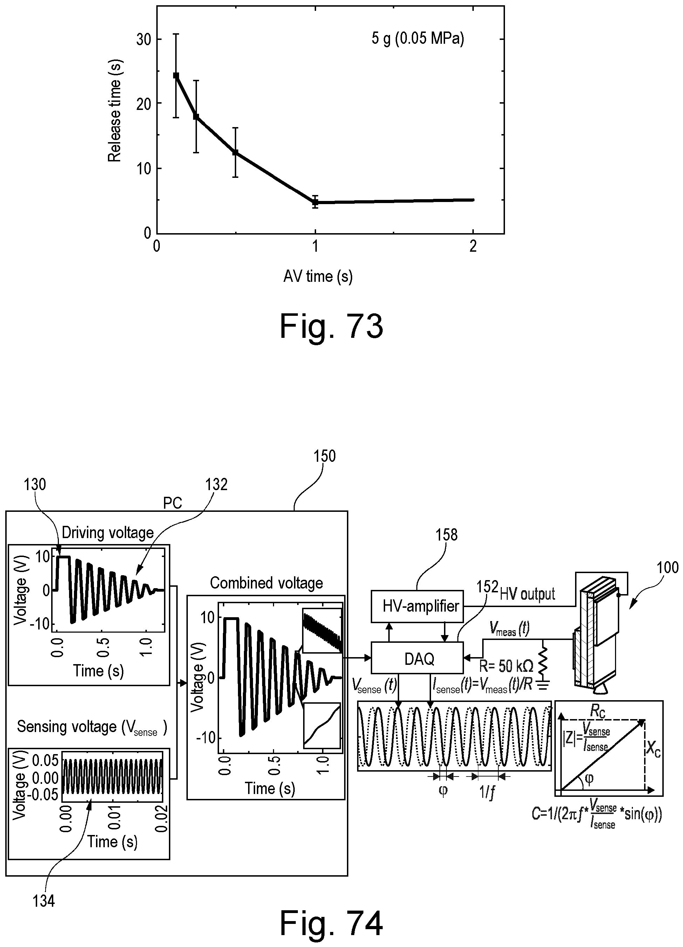

Fig. 71 shows an exemplary stroke-voltage-on time diagram for the voltage pattern of Fig. 70. Depicted is a stroke as a function of voltage-on time at 0.05 MPa, i.e., for a weight of 5 g. Fig. 72 shows an exemplary release time-AV frequency diagram for the voltage pattern of Fig. 70. Depicted is a comparison of release times as functions of AV frequency at 0.05 MPa, i.e., for a weight of 5 g, and at 0.40 MPa, i.e., for a weight of 50 g. Fig. 73 shows an exemplary release time-AV time diagram for the voltage pattern of Fig. 70. Depicted is a release time as a function of AV time at a frequency of 64 Hz and for a weight of 5 g, i.e., at 0.05 MPa. This data has been acquired for three 3 exemplary electrostatic gliding transducers.

Fig. 74 to 78 illustrate a scheme, principles, and results for a self-sensing of an exemplary electrostatic gliding transducer 100, e.g., an electrostatic gliding actuator. Fig. 74 shows an exemplary setup for implementing a stroke self-sensing for an exemplary electrostatic gliding transducer 100. Depicted is a combination of a driving and deactivation voltage 130, 132 with a sensing voltage 134 to enable an evaluation of a capacitance change during an actuation and deactivation of the exemplary electrostatic gliding transducer. The exemplary driving voltage 130 shown is a square-wave voltage. The exemplary driving voltage 130 is followed by an exemplary deactivation voltage 132 in form of an alternating polarity voltage with a decaying amplitude. The driving voltage 130 is applied to the two electrodes 104, 114 for activating the electrostatic gliding transducer 100. The deactivation voltage 132 is applied to the two electrodes 104, 114 for dissipating electric charges accumulated on the interfaces between the solid dielectric elements 106, 116 and dielectric liquid 110 of the exemplary electrostatic gliding transducer 100. When the driving voltage 130 is applied to an electrostatic gliding transducer 100, electric charges may accumulate on the interfaces between the solid dielectric elements 106, 116 and dielectric liquid 110. When the driving voltage 130 is switched off, these accumulated charges contribute to an electrostatic clutching of the glider 112 and stator 102 of the exemplary electrostatic gliding transducer 100 and thereby impede a return of electrostatic gliding transducer 100 to its initial deactivated state until these interfacial charges are sufficiently dissipated. Thus, by applying the deactivation voltage the electrostatic clutching may be solved faster, i.e., a release time of the glider 112 and stator 102 of the exemplary electrostatic gliding transducer 100 may be reduced.

A sensing signal, i.e., a sensing voltage Vₛₑₙₛₑ is superposed onto the driving voltage 130 and deactivating voltage 132. Vₛₑₙₛₑ is used for determining a change of a capacitance of the exemplary electrostatic gliding transducer 100. This determined change of the capacitance may be used for determining a distance of movement of the glider of the exemplary electrostatic gliding transducer along the direction of movement.

A sensing current Iₛₑₙₛₑ is determined based on a measured transient voltage Vₘₑₐₛ across a resistor R, i.e., Iₛₑₙₛₑ(t) = Vₘₑₐₛ(t)/R. By comparing the amplitude and the phase shift between the sensing voltage Vₛₑₙₛₑ and the sensing current Iₛₑₙₛₑ, the direction φ and the value |Z|=Vₛₑₙₛₑ/Iₛₑₙₛₑ of the impedance Z can be calculated. Consequently, the transient capacitance C can be determined, i.e., C = (2π f |Z| sin(φ))⁻¹, which is linked, in particular linearly linked, to the offset between the electrodes 104, 114 of the electrostatic gliding transducer 100. Using the determined transient capacitance C, a current offset and a corresponding transient stroke of the electrostatic gliding transducer 100 may be determined.

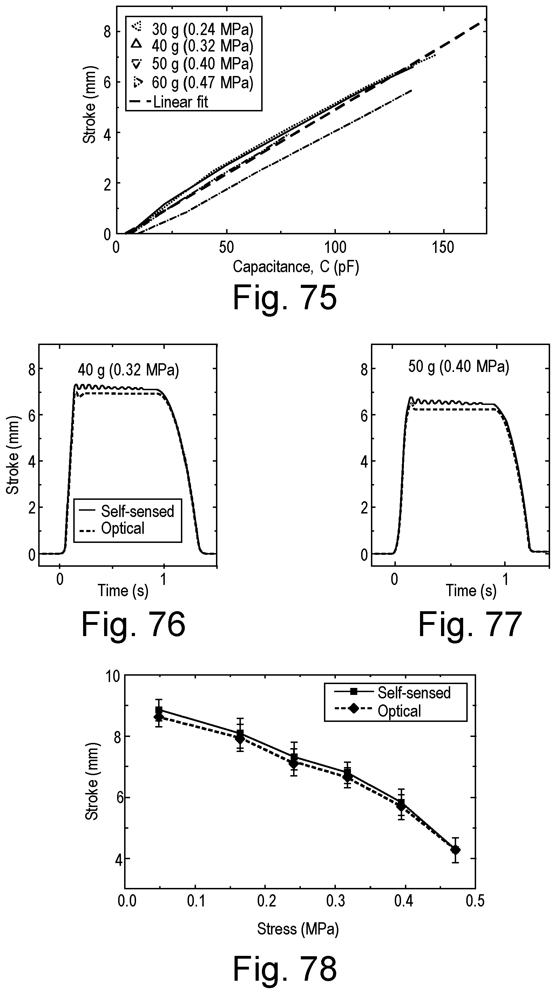

Fig. 75 shows an exemplary calibration diagram of a stroke-capacitance relationship for an exemplary electrostatic gliding transducer. Depicted is a calibration plot of stroke-capacitance relationship based on optical stroke data. This linear relationship may be used to determine a stroke based on a capacitance determined for a sensing voltage Vₛₑₙₛₑ as described before.

Fig. 76 shows exemplary stroke evaluations for an exemplary electrostatic gliding transducer using a self-sensing and an optical sensor. Depicted is a comparison of an estimating of a stroke evolution of an exemplary electrostatic gliding transducer using self-sensing and using optical evaluation. The comparison of self-sensing and optical evaluation is shown at 40 g, i.e., 0.32 MPa. As can be seen from the diagram of Fig. 76, the result determined using the self-sensing are in good agreement with the result based on optical data acquired using, e.g., a high-speed camera. The optical result may be used as a ground truth for assessing and proving the quality of the result determined using the self-sensing approach.

Fig. 77 shows exemplary stroke evaluations for an exemplary electrostatic gliding transducer using a self-sensing and an optical sensor. Depicted is a comparison of an estimating of a stroke evolution of an exemplary electrostatic gliding transducer using self-sensing and using optical evaluation. The comparison of self-sensing and optical evaluation is shown at 50 g, i.e., 0.040 MPa. As can be seen from the diagram of Fig. 76, the result determined using the self-sensing are in good agreement with the result based on optical data acquired using, e.g., a high-speed camera. The optical result may be used as a ground truth for assessing and proving the quality of the result determined using the self-sensing approach.

Fig. 78 shows an exemplary stroke-stress diagram for an exemplary electrostatic gliding transducer using a self-sensing and an optical sensor. Depicted are values of the stroke determined using a self-sensing and an optical sensor for different stress, i.e., different weights applied to the exemplary electrostatic gliding transducer. Again, the results determined using the self-sensing are in good agreement with the results based on the optical data acquired using, e.g., a high-speed camera.

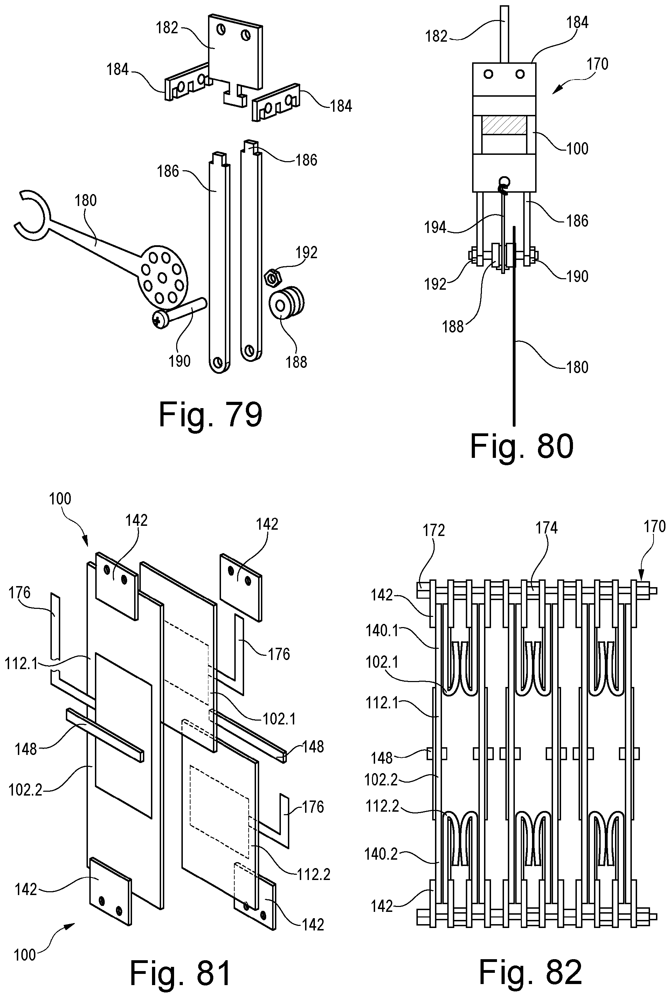

Fig. 79 shows exemplary components for assembling a robotic arm 180 drivable by an antagonistic pair 170 of exemplary electrostatic gliding transducers 100, e.g., electrostatic gliding actuators. Fig. 79 illustrates a fabrication of an exemplary robotic arm 180 to be driven by an antagonistic pair 170 of exemplary electrostatic gliding transducers 100. Components to fabricate the exemplary robotic arm 180 may comprise a mount 182, e.g., made from PMMA, two connectors 184 for holding the electrostatic gliding transducers 100, e.g., made from PMMA, two pillars 186 of a fork, e.g., made from PMMA, a roller 188, e.g., made from resin, an arm 180, e.g., made from a fiberglass sheet, a bolt 190, e.g., an M4 nylon bolt, and a nut192, e.g., an M4 nylon nut. Two exemplary electrostatic gliding transducers 100 are connected to the transducer connectors 184, e.g., via bolts to the top and tied to the roller by threads 194, e.g., cotton threads. The bolts with which the exemplary electrostatic gliding transducers 100 are connected to the transducer connectors 184 may, e.g., be M4 nylon bolts.

A fabrication of an exemplary robotic arm 180 to be driven by an antagonistic pair of exemplary electrostatic gliding transducers may, e.g., comprise the following: The robotic arm 180 to be driven by an antagonistic pair of electrostatic gliding transducers may, e.g., include two electrostatic gliding transducers commonly tied, e.g., through threads. like cotton threads, to a roller element that was attached to a frame. The frame may include a mount, two connects, and a fork with two pillars. The roller may, e.g., be designed using SolidWorks from Dassault Systèmes. The roller may, e.g., be designed with a diameter of 12.6 mm and a thickness of 10 mm. A groove, e.g., a 3 mm-deep groove, may be designed in the middle of a cylindrical surface with a handle to fix the threads. The roller may, e.g., be printed using a 3D printer, e.g., a stereolithography 3D printer, like Form 3 from Formlabs, with a resin, e.g., a clear resin like RS-F2-GPCL-04 from Formlabs. The mount may, e.g., be designed as a rectangle. The mount may, e.g., have a width of 30 mm and a length of 40 mm. The connectors, e.g., each have a width of 30 mm and a length of 10 mm. The connectors may, e.g., each have two holes. For example, the connectors may each have two 4.5 mm diameter holes, e.g., in a distance of 15 mm. The two pillars of the fork may each have two longitudinal ends. One of their longitudinal ends of each pillar may have a form of a semicircle with a hole, e.g., a through hole in the middle of the semicircle. Each of the pillars may, e.g., have a length of 100 mm and a width of 10 mm with a 10 mm diameter semicircle at a longitudinal end. Furthermore, there may be a 4.5 mm diameter hole in the middle of the semicircle. A few of the mortise-and-tenon structures, e.g., as shown in Fig. 79, may, e.g., be designed to form strong connections between different components. The frame may, e.g., be made from plastic, e.g., from polymethyl methacrylate (PMMA). For example, the frame is made from 6 mm-thick polymethyl methacrylate (PMMA) plates, e.g., through laser cutting. For the laser cutting a laser cutting device may be used, e.g., a PLS6.150D from Universal Laser Systems Inc. The resulting segments may be bonded together, e.g., using chloroform. The roller and the frame may be connected using a mechanical connecting element. The mechanical connecting element may, e.g., comprise bolt, e.g., an M4 bolt, and a nut. An arm 180 may be attached to the roller, e.g., bonded to the roller to show the motion of the pulley during actuation of the electrostatic gliding transducers. The arm 180 may be bonded to the roller, e.g., using double-sided tape. The arm 180 may have a circle head at a first longitudinal end. The circle head may have a hole, e.g., a through hole, in the middle. Furthermore, the arm 180 may comprise an end ring at a second longitudinal end, opposite of the first end. For example, the arm 180 may have a circle head with a diameter of 5 mm and a hole with 4.5 mm diameter in the middle, and an end ring with a diameter of 8.0 mm and thickness of 4 mm. The arm 180 may, e.g., be made from a fiberglass. For example, the arm 180 may be made from a fiberglass sheet with a thickness of 0.5 mm. The arm 180 may be fabricated using laser cutting.

The resulting robotic arm 180 was hung on a customized frame and submerged in a vessel, e.g., a glass tank full of dielectric liquid, e.g., Envirotemp FR3 from Cargill Inc. Two electrostatic gliding transducers were separately connected to two high voltage amplifiers, e.g., Trek 50/12 from Advanced Energy or Trek 20/20C-HS from Advanced Energy. The electrostatic gliding transducers may share the same ground. The electrostatic gliding transducers were separately connected to two high voltage amplifiers under a current limit, e.g., of 6 mA. A waveform generated, e.g., by a custom MATLAB program, may be input to the amplifiers via a DAQ and the two electrostatic gliding transducers may be actuated separately, e.g., alternatingly. The motion of the antagonistic pair was recorded using an optical sensor, e.g., a DSLR camera.

Fig. 80 shows the exemplary robotic arm 180 resulting from an assembling of the components of Fig. 79 with an antagonistic pair 170 of exemplary electrostatic gliding transducers 100.

Fig. 81 and 82 illustrate a fabrication of an exemplary 2×6-array 170 of exemplary electrostatic gliding transducers 100, e.g., electrostatic gliding actuators. The array 170 of exemplary electrostatic gliding transducers 100 comprises two-unit electrostatic gliding transducers with two exemplary electrostatic gliding transducers 100 connected in series. Fig. 81 shows an exemplary two-unit electrostatic gliding transducer. The exemplary two-unit electrostatic gliding transducers comprises a first glider 112.1, e.g., a 13-µm polyimide film, i.e., a glider 112.1 of a first one of the two electrostatic gliding transducers 100, and a second stator 102.2, e.g., a 13-µm polyimide film, i.e., a stator 102.2 of a second one of the two electrostatic gliding transducers 100, and a first stator 102.1., e.g., a first 25-µm polyimide film, i.e., a stator 102.1 of the first one of the two electrostatic gliding transducers 100, and a second glider 112.2, e.g., a second 25-µm polyimide film, i.e., a glider 112.2 of a second one of the two electrostatic gliding transducers 100. The first glider 112.1 and the second stator 102.2 may, e.g., comprise a common solid dielectric element provided, e.g., by the same 13-µm polyimide film. The first glider 112.1 and the second stator 102.2 may, e.g., comprise a common electrode. Two exemplary reinforcement elements 148 used as reinforcement frames are provided, e.g., attached in the middle of the 13-µm film. Electrical connections 176 may, e.g., be provided to apply voltages to the electrodes of the electrostatic gliding transducers 100.

Fig. 82 shows an exemplary set of six two-unit electrostatic gliding transducers as depicted in Fig. 81. These two-unit electrostatic gliding transducers are assembled to an exemplary 2×6-array 170 of exemplary electrostatic gliding transducers 100. After assembling, e.g., as shown in Fig. 41 or 42, the first stators 102.1 and second glider 112.2, e.g., the 15- µm films, are folded from the edge of the electrodes to prevent interference during contraction. Six of the exemplary two-unit electrostatic gliding transducers are connected, e.g., with bolts 172 and nuts 174 as spacers. As bolts 172, e.g., M4 nylon bolts, and, e.g., M4 nylon nuts as nuts 174 may be used. For the connecting, the electrostatic gliding transducers 100 may comprise mounts 142. For example, upper mounts 142 may be attached to the first glider 112.1 and first stators 120.1. For example, lower mounts 142 may be attached to the second glider 112.2 and second stators 120.2.

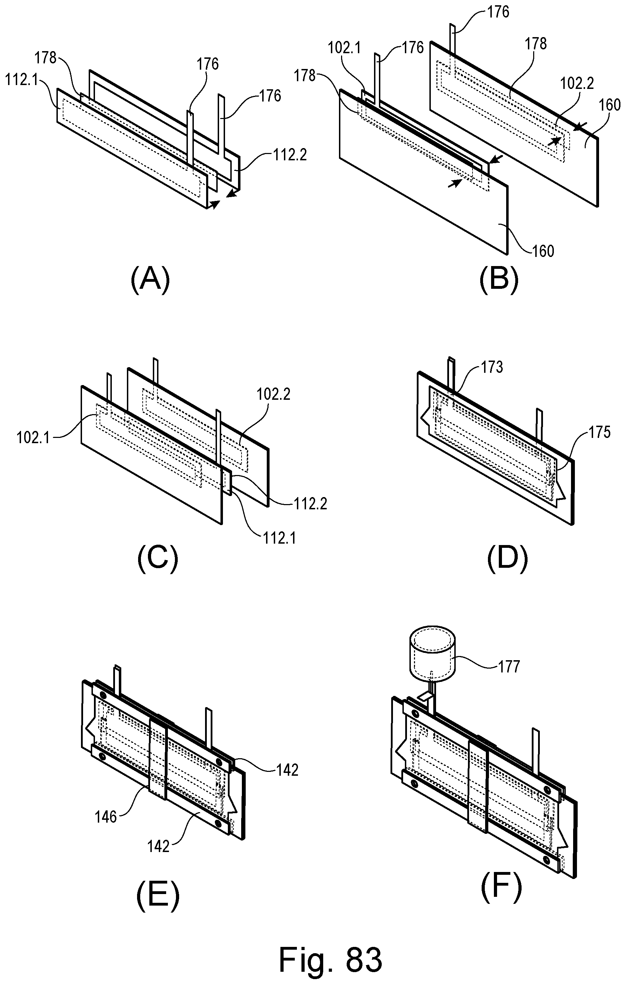

Fig. 83 is split and arranged on two pages. It comprises the parts (A) to (G). Fig. 83 shows a fabrication of an exemplary set of two electrostatic gliding transducers 100 arranged in a common sealed packaging envelope 160. Depicted is an exemplary fabrication of an exemplary single package of exemplary electrostatic gliding transducers 100. Two gliders 112.1, 112.1 are glued together (A), e.g., using double-sided tape, and two stators 102.1, 102.2 are adhered with packaging envelope (B), e.g., a film. For the adhering, e.g., double-sided tape may be used. For establishing the aforementioned bonds bonding elements 178 may be used, e.g., double-sided tapes. The stators 102.1, 102.2 and the gliders 112.1, 112.2 are aligned (C) and the packaging films are sealed, e.g., heat sealed, together along a sealing line 175 with a specific pattern (D). Mounts 142 and length limiting elements 146, e.g., strips, are attached to the package (E), e.g., double-sided tape, and a dielectric liquid 110 is filled, e.g., from a tank 177, into the package through a filling port 173, e.g., a gap between electrical connections 173 (F). The package is physically encased (G), e.g., by tightening the mounts 142 via bolts 147 and nuts 149. Furthermore, filling ports used for filling in the dielectric liquid 110 may, e.g., be mechanically clamped.

A fabrication of a single package of exemplary electrostatic gliding transducers may, e.g., comprise the following: The single package of electrostatic gliding transducers may, e.g., contain two mirrored electrostatic gliding transducers in parallel in one package. Each electrostatic gliding transducer may, e.g., be made from a 13 µm polyimide film for the stators and a 25 µm polyimide film for the gliders, both with a width of 150 mm and a length of 20 mm. The electrodes on the films may both, e.g., have a size of 140 mm-by-10 mm and, e.g., be arranged in a center of the respective films. The two gliders of the mirrored electrostatic gliding transducers may, e.g., be glued together. The two stators of the mirrored electrostatic gliding transducers may, e.g., adhered to packaging films used for packaging the electrostatic gliding transducers. The packaging films may, e.g., be LM-7501 from American Polyfilm Inc. The two stators of the mirrored electrostatic gliding transducers may, e.g., adhered to the packaging film using double-sided tape, e.g., 9086 from 3M). The stators and the gliders may, e.g., be aligned and transferred to a heat sealer, e.g., a CNC heat sealer, for creating a pouch on the packaging films, e.g., along a specific packaging pattern. The package may, e.g., be attached with one or more mounts and/or with one or more length limiting elements, e.g., one or more length limiting strips. The package may further be filled with a dielectric liquid. For example, 5 ml of dielectric liquid may be filled into the package, e.g., using a syringe. The syringe may, e.g., be a 12941031 syringe from Fisher Scientific or a 4665465 syringe from B. Braun SE. The dielectric liquid may, e.g., be filled into the package through the gap between electrical connections of the packaged electrostatic gliding transducer. Finally, the package may be physically encased by tightening the mounts via connecting elements, e.g., bolts and nuts.

A specific packaging pattern is shown in Fig. 84. The top mounts of the packaged electrostatic gliding transducers may, e.g., have a length of 150 mm and a width of 10 mm. The bottom mounts of the packaged electrostatic gliding transducers may, e.g., have a length of 150 mm and a width of 13 mm. The top and bottom mounts may, e.g., comprise one or more, e.g., two holes. For example, the holes may be configured for receiving connecting elements. The connecting elements may, e.g., comprise bolts and nuts. For example, the holes for the bolts may, e.g., 5 mm away from a bottom edge and 20 mm away from side edges of the mounts arranged. Thus, a single package of electrostatic gliding transducers may, e.g., have an overall length of 43 mm.

The package may further comprise, e.g., length limiting strips. The length limiting strips may, e.g., be made from a polyester film, e.g., Mylar 850 from Petroplast GmbH. The length limiting strips may, e.g., have a width of 10 mm and a length of 54 mm. The length limiting strips may, e.g., be attached to the top and bottom mounts on both sides of the package. For example, the length limiting strips may, e.g., be attached to the top and bottom mounts using double-sided tape, e.g., 9086 from 3M, on both ends. When connecting the electrostatic gliding transducers in series, a length of the mounts for connection may, e.g., be 13 mm. These mounts and their length were included in the calculation of the strain for the array. Each single package of electrostatic gliding transducers weighs, e.g., 5.68 g. For example, 81% of the weight of such a package may be contributed by the dielectric liquid. For example, 16% of that weight may be contributed by the packaging film.

An actuation of packaged electrostatic gliding transducers may, e.g., use the same method as described above in view of the actuation of electrostatic gliding transducers. Under a 10 kV voltage pattern with a voltage-on time of 0.125 s as a driving voltage followed by a 64 Hz AV deactivation voltage for 1 s as a deactivation voltage, a single package of electrostatic gliding transducers may, e.g., achieve the force-stroke characteristics as shown in Fig. 85. The specific energy of the packaged electrostatic gliding transducers may, e.g., be 1.7 J/kg.

The array of packaged electrostatic gliding transducers was, e.g., tested under a 10 kV voltage pattern with a voltage-on time of 0.188 s as a driving voltage followed by a 16 Hz AV deactivation voltage for 0.875 s as a deactivation voltage.

Fig. 84 shows an exemplary sealing line 175, e.g., a heat-sealing line, for the exemplary set of two electrostatic gliding transducers arranged in a common sealed packaging envelope of Fig. 83. Depicted is a specific pattern for the sealing, i.e., of the sealing line 175.

Fig. 85 shows an exemplary load-stroke diagram for the exemplary set of two electrostatic gliding transducers, e.g., electrostatic gliding actuators, arranged in the common sealed packaging envelope of Fig. 83.

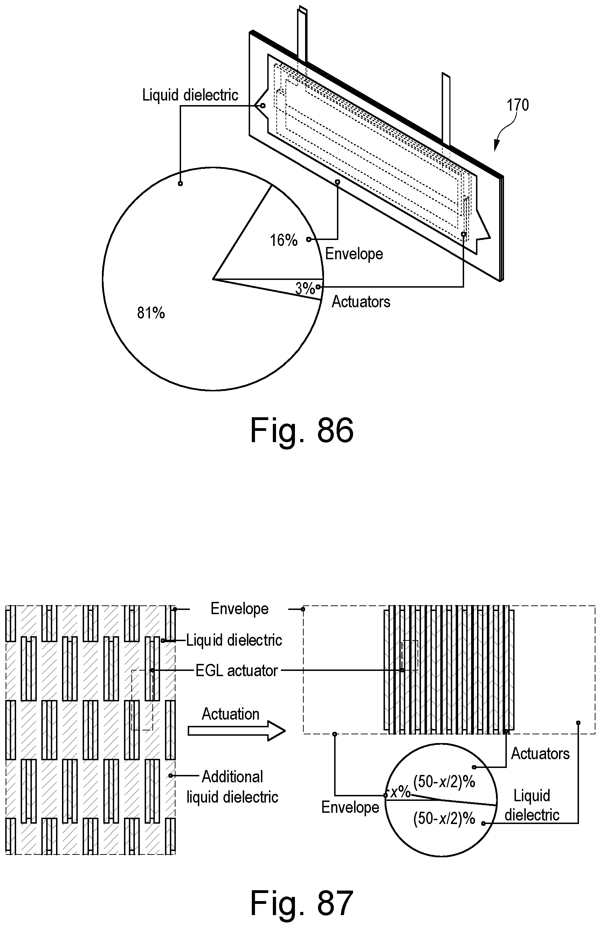

Fig. 86 shows mass contributions of different components of an exemplary set 170 of two electrostatic gliding transducers, e.g., electrostatic gliding actuators, arranged in a common sealed packaging envelope. Depicted are mass contributions of different components of the exemplary package of electrostatic gliding transducers.

Fig. 87 shows mass contributions of different components for another packaging strategy. Depicted are mass contributions of different components for an alternative idealized packaging strategy. This packaging strategy may, e.g., substantially reduce, compared to the packaging strategy used for Fig. 86, an additional weight from the packaging structure and an additional dielectric liquid that is not used as the lubrication layer.

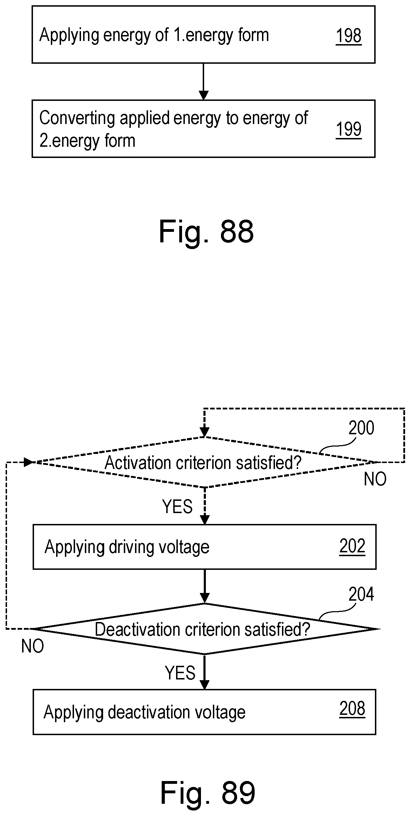

Fig. 88 shows an exemplary method for controlling an electrostatic gliding transducer for converting energy between an electrostatic energy form and a mechanical energy form. The electrostatic gliding transducer comprises a stator and a glider. The glider is arranged movably relative to the stator along a direction of movement. The stator comprises a first electrode arranged on a first solid dielectric element. The glider comprises a second electrode arranged on a second solid dielectric element. The first and second dielectric element are arranged between the two electrodes and spaced apart from each other with a clearance between the two dielectric elements filled with a dielectric liquid providing for a hydrodynamic lubrication.

The electrostatic gliding transducer is adapted for a moving of the glider in an activated state of the transducer relative to the stator along the direction of movement with the second dielectric element gliding hydrodynamically on the dielectric liquid along the first dielectric element with the moving of the glider altering a relative offset between the two electrodes along the direction of movement.

In block 198, energy of a first one of the two energy forms, i.e., a first energy form, is applied to the electrostatic gliding transducer for activating the electrostatic gliding transducer and for converting the applied energy at least partially into energy of the other one of the two energy forms, i.e. the second energy form. In block 199, the applied energy of the first form is at least partially converted into energy of the second energy form. The converting comprises the altering of the relative offset between the two electrodes of the electrostatic gliding transducer along the direction of movement.

For example, the electrostatic gliding transducer may be adapted as an electrostatic gliding actuator and electrostatic energy may be converted into mechanical energy using the electrostatic gliding transducer. In this case, the first energy form is electrostatic energy and the second energy form is mechanical energy.

For example, the electrostatic gliding transducer is adapted as an electrostatic gliding actuator for converting electrostatic energy into mechanical energy. The converting comprises decreasing the relative offset between the two electrodes by the moving of the glider relative to the stator along the direction of movement with the moving being due to a gliding force being generated in the activated state of the transducer by a driving voltage applied to the two electrodes.

In this case, the energy of the first energy form applied in block 198 is electrostatic energy, which is applied using a driving voltage applied to the two electrodes of the electrostatic gliding transducer for the activating of the electrostatic gliding transducer and for converting the applied electrostatic energy at least partially into mechanical energy. In block 199, the applied electrostatic energy is at least partially converted into mechanical energy. The converting comprises a decreasing of the relative offset between the two electrodes.

For example, the electrostatic gliding transducer may be adapted as an electrostatic gliding generator and mechanical energy may be converted into electrostatic energy using the electrostatic gliding transducer. In this case, the first energy form is mechanical energy and the second energy form is electrostatic energy.

For example, the electrostatic gliding transducer is adapted as an electrostatic gliding generator for converting mechanical energy into electrostatic energy. The converting comprises increasing the relative offset between the two electrodes by the moving of the glider relative to the stator along the direction of movement with the moving being due to a gliding force being generated in the activated state of the transducer by a mechanical force applied to the glider and the moving increasing a voltage between the two electrodes.

In this case, the energy of the first energy form applied in block 198 is mechanical energy applied to the glider of the electrostatic gliding transducer for the activating of the electrostatic gliding transducer and for converting the applied mechanical energy at least partially into electrostatic energy. In block 199, the applied mechanical energy is at least partially converted into electrostatic energy. The converting comprises a decreasing of the relative offset between the two electrodes.

Fig. 89 shows an exemplary method for controlling an electrostatic gliding transducer, which is adapted as an electrostatic gliding actuator. The exemplary electrostatic gliding transducer comprises a stator and a glider. The glider is arranged movably relative to the stator along a direction of movement. The stator comprises a first electrode arranged on a first solid dielectric element. The glider comprises a second electrode arranged on a second solid dielectric element.

In a deactivated state of the transducer, the two electrodes are arranged with a relative offset in the direction of movement. The first and second dielectric element are arranged between the two electrodes and spaced apart from each other with a clearance between the two dielectric elements filled with a dielectric liquid providing for a hydrodynamic lubrication.

In block 202, a driving voltage is applied to the two electrodes for activating the electrostatic gliding transducer. For example, the driving voltage may be a square-wave voltage. The applied driving voltage generates in the activated state of the transducer a gliding force. The generated gliding force causes a moving of the glider relative to the stator along the direction of movement with the second dielectric element gliding hydrodynamically on the dielectric liquid along the first dielectric element. By this moving of the glider reduces the relative offset between the two electrodes. The offset may, e.g., be reduced to zero.

The applying of the driving voltage in block 202 may, e.g., depend on an activation criterion. For example, applying of the driving voltage in block 202 is executed in response to a determining in block 200 that an activation criterion is satisfied. The activation criterion may, e.g., be a receiving of a deactivation signal. The activation criterion may, e.g., be a reaching of a predefined activation time. For example, in block 200 it may be monitored, whether the activation criterion is being satisfied. As long as the activation criterion is not satisfied, the monitoring may, e.g., be continued.

The method may, e.g., be continued with block 204, in which it is checked, whether a deactivation criterium is satisfied. In response to a determining on block 204 that deactivation criterium is satisfied, a deactivation voltage is applied to the electrodes. The deactivation voltage may, e.g., comprise an alternating polarity and/or a decaying amplitude. The decaying amplitude may, e.g., be a linear decaying amplitude. For example, the deactivation voltage may continue the activation voltage. For example, the activation voltage may start from zero. For example, after reaching a maximum value, the activation voltage may be continued with the deactivation voltage. The deactivation voltage may, e.g., bring the activation voltage from the maximum value back down to zero.

The deactivation voltage may, e.g., be applied to the two electrodes for dissipating electric charges accumulated on the interfaces between the solid dielectric elements and dielectric liquid of the exemplary electrostatic gliding transducer. When the driving voltage is applied to an electrostatic gliding transducer, electric charges may accumulate on the interfaces between the solid dielectric elements and dielectric liquid. When the driving voltage is switched off, these accumulated charges contribute to an electrostatic clutching of the glider and stator of the exemplary electrostatic gliding transducer and thereby impede a return of electrostatic gliding transducer to its initial deactivated state until these interfacial charges are sufficiently dissipated. Thus, by applying the deactivation voltage the electrostatic clutching may be solved faster, i.e., a release time of the glider and stator of the exemplary electrostatic gliding transducer may be reduced.

For example, the deactivation criterion is a receiving of a deactivation signal. For example, the deactivation criterion is a reaching of a predefined end of the driving voltage. The predefined end of the driving voltage may, e.g., be defined relative to a start of the driving voltage. For example, the deactivation criterion is a reaching of a predefined deactivation time. For example, the deactivation time defines a time after starting the driving voltage, at which the deactivation voltage is to be started. For example, the deactivation criterion is a reaching of a predefined reaching a predefined deactivation displacement of the glider. The predefined deactivation displacement of the glider may, e.g., be defined relative to a reference position of the glider in the deactivated state of the transducer. The predefined deactivation displacement of the glider may, e.g., be a displacement of the glider along the direction of movement relative to the reference position.

In case the deactivation criterion is not satisfied, e.g., no deactivation signal is received, the method may, e.g., be continued with a monitoring, whether the activation criterion is being satisfied. In response to the activation criterion being satisfied another time, e.g., the driving voltage may be applied another time.

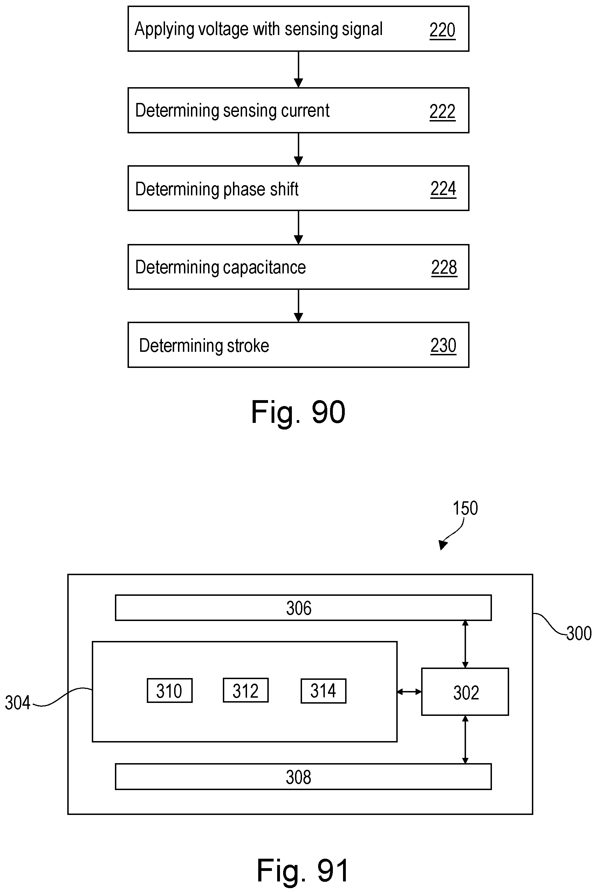

Fig. 90 shows an exemplary method for controlling an electrostatic gliding transducer, which is adapted as an electrostatic gliding actuator. The exemplary electrostatic gliding transducer comprises a stator and a glider. The glider is arranged movably relative to the stator along a direction of movement. The stator comprises a first electrode arranged on a first solid dielectric element. The glider comprises a second electrode arranged on a second solid dielectric element.

In a deactivated state of the transducer, the two electrodes are arranged with a relative offset in the direction of movement. The first and second dielectric element are arranged between the two electrodes and spaced apart from each other with a clearance between the two dielectric elements filled with a dielectric liquid providing for a hydrodynamic lubrication.

In block 220, a voltage is applied to the electrodes of the electrostatic gliding transducer. The voltage is, e.g., a driving voltage, which is applied to the electrodes for activating the electrostatic gliding transducer. The voltage is, e.g., a deactivating voltage, which is applied to the electrodes for dissipating electric charges accumulated on the interfaces between the solid dielectric elements and dielectric liquid of the exemplary electrostatic gliding transducer.

A sensing signal in form of a sensing voltage is superposed onto the voltage. The sensing signal is used for determining a change of a capacitance of the electrostatic gliding transducer. For this purpose, a sensing current Iₛₑₙₛₑ is determined in block 222. Furthermore, a phase shift φ between the sensing voltage Vₛₑₙₛₑ and the sensing current Iₛₑₙₛₑ is determined in block 224. In block 226, the capacitance of the electrostatic gliding transducer is determined using the sensing current Iₛₑₙₛₑ determined in block 222 and the phase shift φ determined in block 224. The capacitance of the electrostatic gliding transducer may be calculated using a capacitive reactance X_{C} and a known frequency f of the sensing voltage signal Vₛₑₙₛₑ as C = 1 / X_{C} 2π f. For this purpose, a capacitive reactance of the electrostatic gliding transducer may be calculated as X_{C} = |Z| sin(φ), where a magnitude of the impedance Z is |Z| = Vₛₑₙₛₑ / Iₛₑₙₛₑ.

The capacitance C of the electrostatic gliding transducer is proportional to stroke L of the electrostatic gliding transducer, i.e., a distance of movement of the glider along the direction of movement. Thus, based on a change of the capacitance C the distance of movement of the glider along the direction of movement can be determined. In block 228, a stroke L of the electrostatic gliding transducer using the determined capacitance C of the electrostatic gliding transducer. For example, optically acquired stroke data may be used for a calibration and to determine parameters of the linear relation between capacitance C and stroke L of the electrostatic gliding transducer. This linear relationship may, e.g., be used to determine the stroke using capacitance determined for a sensing voltage Vₛₑₙₛₑ as described before.

Fig. 91 shows an exemplary computational unit 300 for controlling an electrostatic gliding transducer. For example, a controller 150 for controlling the electrostatic gliding transducer may be implemented by the computational unit 300. The exemplary computational unit 300 is shown as comprising a processing unit 302. The processing unit 302 is intended to represent one or more processors or processing cores or other processing components configured for executing computational tasks. The processing unit 302 is shown as being connected to a hardware interface 306 and a memory unit 304. The hardware interface 306 may enable the processing unit 302 to exchange commands and data with other components, e.g., a voltage source unit configured to apply a voltage to the electrostatic gliding transducer and/or a data acquisition unit configured to measure data descriptive of a current state of the electrostatic gliding transducer. The hardware interface 306 may, e.g., enable the processing unit 302 to control an activation and/or deactivation of the electrostatic gliding transducer. The activation and/or deactivation of the electrostatic gliding transducer may, e.g., be executed according to the method of Fig. 88 and/or Fig. 89. Furthermore, the hardware interface 306 may, e.g., enable the processing unit 302 to determining a position of a glider of the electrostatic gliding transducer along a direction of movement.

The computational unit 300 is further shown as being connected to an optional user interface 308 which may, e.g., enable an operator to control and operate the computational unit 300 and via the computational unit 300, e.g., the electrostatic gliding transducer. The user interface 308 may, e.g., comprise an output and/or input device enabling the operator to interact with the computational unit 300.

The memory unit 304 is shown as containing machine-executable instructions 310. The machine-executable instructions 310 enable the processing unit 302 to perform controlling tasks, such as controlling an electrostatic gliding transducer, to perform numerical tasks, as well as performing various signal data processing tasks. The machine-executable instructions 310 may, e.g., enable the processing unit 302 and thus the computational unit 300 to execute any of the methods of Fig. 88 to 90.

The memory unit 304 is further shown as containing voltage pattern definitions defining a driving voltage for activating the electrostatic gliding transducer and/or a deactivation voltage for deactivating the electrostatic gliding transducer. The voltage pattern definitions may, e.g., further define a sensing voltage superimposed onto the driving voltage and/or the deactivation voltage. The memory unit 304 is further shown as containing measured data 312 descriptive of a current state of the electrostatic gliding transducer. The measured data may, e.g., comprise a measured transient voltage Vₘₑₐₛ across a resistor R electrically connected to an electrode of the electrostatic gliding transducer, e.g., in series. Furthermore, the measured data 312 may, e.g., comprise measured phase shift φ between the sensing voltage Vₛₑₙₛₑ and the sensing current Iₛₑₙₛₑ. The memory unit 304 is further shown as containing determined data 314 descriptive of a current state of the electrostatic gliding transducer. The determined data 314 may, e.g., be determined using the measured data 312. The determined data 314 may, e.g., comprise a sensing current Iₛₑₙₛₑ determined using the measured transient voltage Vₘₑₐₛ across the resistor R, i.e., Iₛₑₙₛₑ(t) = Vₘₑₐₛ(t)/R. The determined data 314 may, e.g., comprise a capacitance C of the electrostatic gliding transducer determined using a capacitive reactance X_{C} and a known frequency f of the sensing voltage signal Vₛₑₙₛₑ as C = 1 / X_{C} 2π f. The capacitive reactance X_{C} of the electrostatic gliding transducer may, e.g., be provided using the measured sensing current Iₛₑₙₛₑ and the measured phase shift φ as X_{C} = |Z| sin(φ), where a magnitude of the impedance Z is |Z| = Vₛₑₙₛₑ / Iₛₑₙₛₑ. The determined data 314 may, e.g., comprise a determined stroke L of the electrostatic gliding transducer, i.e., a distance of movement of a glider of the electrostatic gliding transducer along a direction of movement. For determining stroke L, e.g., a linear relation between capacitance C and stroke L of the electrostatic gliding transducer may be used. Parameters of the linear relation between capacitance C and stroke L may, e.g., be provided as pre-defined values. These parameters may, e.g., be pre-defined using a calibration of the electrostatic gliding transducer and/or optically stroke data acquired during the calibration.

While the invention has been illustrated and described in detail in the drawings and foregoing description, such illustration and description are to be considered illustrative or exemplary and not restrictive; the invention is not limited to the disclosed examples.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

As will be appreciated by one skilled in the art, aspects of the present invention may be embodied as an apparatus, method, computer program, or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable signal medium or a computer readable storage medium. A "computer-readable storage medium" as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. For example, a computer-readable storage medium may also be able to store data which is able to be accessed by the processor of the computing device. Examples of computer-readable storage media include, but are not limited to: a floppy disk, a magnetic hard disk drive, a solid-state hard disk, flash memory, a USB thumb drive, Random Access Memory (RAM), Read Only Memory (ROM), an optical disk, a magnetooptical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. A further example of an optical disk may be a Blu-ray disk. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

"Computer memory", "memory unit", or "memory" is an example of a computer-readable storage medium. Computer memory is any memory which is directly accessible to a processing unit. "Computer storage" or "storage" is a further example of a computer-readable storage medium. Computer storage is any non-volatile computer-readable storage medium. For example, computer storage may also be computer memory or vice versa.

A "processing unit" or "processor" as used herein encompasses an electronic component which is able to execute a program or machine executable instruction or computer executable code. References to the computing device comprising "a processing unit" should be interpreted as possibly containing more than one processor or processing core. The processor may for instance be a multi-core processor. A processor may also refer to a collection of processors within a single computer device or distributed amongst multiple computer devices. The term computing unit should also be interpreted to possibly refer to a collection or network of computing units each comprising a processing unit, e.g., a processor or processors. The computer executable code may be executed by multiple processors that may be within the same computing unit or which may even be distributed across multiple computing units.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on a user's computing unit, partly on the user's computing unit, as a stand-alone software package, partly on the user's computing unit and partly on a remote computing unit or entirely on the remote computing unit or server. In the latter scenario, the computing unit may be connected to the user's computing unit through any type of network, including a local area network (LAN) or a wide area network (WAN), or the connection may be made to an external computer (for example, through the Internet using an Internet Service Provider).

Generally, the program instructions can be executed on one processor or on several processors. In the case of multiple processors, they can be distributed over several different entities like clients, servers etc. Each processor could execute a portion of the instructions intended for that entity. Thus, when referring to a system or process involving multiple entities, the computer program or program instructions are understood to be adapted to be executed by a processor associated or related to the respective entity.

A "user interface" as used herein is an interface which allows a user or operator to interact with a computer or computer device. A "user interface" may also be referred to as a "human interface device". A user interface may provide information or data to the operator and/or receive information or data from the operator. A user interface may enable input from an operator to be received by the computing unit and may provide output to the user from the computing unit. In other words, the user interface may allow an operator to control or manipulate a computing unit and the interface may allow the computing unit to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, gear sticks, steering wheel, pedals, wired glove, dance pad, remote control, one or more switches, one or more buttons, and accelerometer are all examples of user interface components which enable the receiving of information or data from an operator.

A GUI element is a data object some of which's attributes specify the shape, layout and/or behavior of an area displayed on a graphical user interface, e.g., a screen. A GUI element can be a standard GUI element such as a button, a text box, a tab, an icon, a text field, a pane, a check-box item or item group or the like. A GUI element can likewise be an image, an alphanumeric character or any combination thereof. At least some of the properties of the displayed GUI elements depend on the data value aggregated on the group of data object said GUI element represents.

Aspects of the present invention are described with reference to flowchart illustrations and/or block diagrams of methods, apparatus (systems) and computer program products. It will be understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a processing unit of a computing unit, e.g., a general-purpose computer, a special-purpose computer, or another other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computing unit, i.e., a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computing unit, i.e., a computer, other programmable data processing apparatus, or other devices, to cause a series of operational steps to be performed on the computing unit, i.e., the computer, other programmable apparatus or other devices, to produce a computer-implemented process such that the instructions which execute on the computer or other programmable apparatus provide processes for implementing the functions/acts specified in the flowchart and/or block diagram block or blocks.

### REFERENCE SIGNS LIST

- 100: electrostatic gliding transducer
- 102: stator
- 104: first electrode
- 105: cutout
- 106: first solid dielectric element
- 107: section of varying density
- 110: dielectric liquid
- 112: glider
- 114: second electrode
- 116: second solid dielectric element
- 120: offset
- 121: electric field
- 122: direction of movement
- 123: hydrodynamic flow
- 126: clearance
- 128: distance between solid dielectric elements
- 130: driving voltage
- 132: deactivation voltage
- 134: sensing signal
- 140: spring element
- 142: mount
- 144: load
- 146: length limiting element
- 147: bolt
- 148: reinforcement element
- 149: nut
- 150: controller
- 152: data acquisition system
- 154: electrometer
- 156: optical sensor
- 158: amplifier
- 160: envelope
- 162: screen
- 164: brush
- 166: tape
- 170: set of electrostatic gliding transducers
- 171: aligning element
- 172: bolt
- 173: filling port
- 174: nut
- 175: sealing line
- 176: electrical connection
- 177: tank
- 178: bonding element
- 180: robotic arm
- 182: mount
- 184: connector
- 186: pillar
- 188: roller
- 190: bolt
- 192: nut
- 194: thread
- 300: computational unit
- 302: processing unit
- 304: memory unit
- 306: hardware interface
- 308: user interface
- 310: machine-executable instructions
- 312: measured data
- 314: determined data

## Claims

1. An electrostatic gliding transducer (100) for converting energy between an electrostatic energy form and a mechanical energy form, the electrostatic gliding transducer (100) comprising a stator (102) and a glider (112), the glider (112) being arranged movably relative to the stator (102) along a direction (122) of movement, the stator (102) comprising a first electrode (104) arranged on a first solid dielectric element (106), the glider (112) comprising a second electrode (114) arranged on a second solid dielectric element (116),
the first and second dielectric element (106, 116) being arranged between the two electrodes (104, 114) and spaced apart from each other with a clearance (126) between the two dielectric elements (106, 116) filled with a dielectric liquid (110) providing for a hydrodynamic lubrication,
the electrostatic gliding transducer (100) being adapted for a moving of the glider (112) in an activated state of the transducer (100) relative to the stator (102) along the direction (122) of movement with the second dielectric element (116) gliding hydrodynamically on the dielectric liquid (110) along the first dielectric element (106), the moving of the glider (112) altering a relative offset (120) between the two electrodes (104, 114) along the direction (122) of movement.

2. The electrostatic gliding transducer (100) of claim 1, the electrostatic gliding transducer being adapted as an electrostatic gliding actuator for converting electrostatic energy into mechanical energy, the converting comprising decreasing the relative offset (120) between the two electrodes (104, 114) by the moving of the glider (112) relative to the stator (102) along the direction (122) of movement with the moving being due to a gliding force being generated in the activated state of the transducer (100) by a driving voltage (130) applied to the two electrodes (104, 114).

3. The electrostatic gliding transducer (100) of any of the previous claims, the hydrodynamic lubrication comprising a coefficient of friction within a range from 10⁻⁴ to 10⁻⁸, preferably 10⁻⁵ to 10⁻⁸, and more preferably 10⁻⁶ to 10⁻⁸, and/or
the electrostatic gliding transducer (100) further comprising a spring element (140), the spring element (140) being in a resting state in a deactivated state of the transducer (100) and being adapted for storing potential energy, when the glider (112) moves relative to the stator (102) along the direction (122) of movement in the activated state of the transducer (100) with the relative offset (120) between the two electrodes (104, 114) being altered, and/or
the stator (102) and glider (112) with the dielectric liquid (110) being arranged in a common sealed packaging envelope (160) providing a reservoir of the dielectric liquid (110).

4. The electrostatic gliding transducer (100) of any of the previous claims, the electrostatic gliding transducer (100) further comprising a controller (150) configured for controlling the driving voltage (130) being applied to the electrodes (104, 114) in the activated state of the electrostatic gliding transducer (100).

5. The electrostatic gliding transducer (100) of claim 4, the controller (150) further being configured for controlling a deactivation voltage (132) being applied to the electrodes (104, 114) depending on a deactivation criterion, the deactivation voltage (132) comprising an alternating polarity and/or a decaying amplitude,
the deactivation criterion optionally being one of the following: receiving a deactivation signal, reaching a predefined end of the driving voltage, reaching a predefined deactivation time, reaching a predefined deactivation displacement of the glider.

6. The electrostatic gliding transducer (100) of any of the previous claims, the electrostatic gliding transducer being configured as an electrostatic gliding generator for converting mechanical energy into electrostatic energy, the converting comprising increasing the relative offset (120) between the two electrodes (104, 114) by the moving of the glider (112) relative to the stator (102) along the direction (122) of movement with the moving being due to a gliding force being generated in the activated state of the transducer (100) by a mechanical force applied to the glider (112) and the moving increasing a voltage between the two electrodes (104, 114).

7. A set (170) of electrostatic gliding transducers (100), the set (170) comprising a plurality of mechanically connected electrostatic gliding transducers (100) according to any of the previous claims, optionally at least two electrostatic gliding transducers (100) of the plurality of electrostatic gliding transducers (100) being configured to be activated alternately as antagonists.

8. The set (170) of any of claim 7, two or more electrostatic gliding transducers (100) of the plurality of electrostatic gliding transducers (100) being mechanically connected in series and/or two or more electrostatic gliding transducers (100) of the plurality of electrostatic gliding transducers (100) being mechanically connected in parallel.

9. The set (170) of any of claims 7 to 8, at least two of the plurality of electrostatic gliding transducers (100) being arranged in a common sealed packaging envelope (160) providing a reservoir of the dielectric liquid (110).

10. The set (170) of claim 9, more than two electrostatic gliding transducers (100) of the plurality of electrostatic gliding transducers (100) being arranged in the common sealed packaging envelope (160) in parallel next to each other, adjacent electrostatic gliding transducers (100) of the more than two electrostatic gliding transducers (100) being arranged pairwise mirror symmetrically with gliders (112) of the adjacent electrostatic gliding transducers (100) being pairwise bonded to each other and stators (102) of the adjacent electrostatic gliding transducers (100) being pairwise bonded to each other.

11. A method for controlling an electrostatic gliding transducer (100) according to any of claims 1 to 7, the method comprising applying energy of one of the two energy forms to the electrostatic gliding transducer (100) for activating the electrostatic gliding transducer (100) and converting the applied energy at least partially into energy of the other one of the two energy forms, the converting comprising the altering of the relative offset (120) between the two electrodes (104, 114) of the electrostatic gliding transducer (100) along the direction (122) of movement.

12. The method of claim 11, the applied energy being electrostatic energy, which is applied using a driving voltage (130) applied to the two electrodes (104, 114) of the electrostatic gliding transducer (100) for the activating of the electrostatic gliding transducer (100) and for converting the applied electrostatic energy at least partially into mechanical energy, the converting comprising a decreasing of the relative offset (120) between the two electrodes (104, 114).

13. The method of claim 12, the method further comprising applying a deactivation voltage (132) to the electrodes (104, 114) depending on a deactivation criterion, the deactivation voltage (132) comprising an alternating polarity voltage and/or a decaying amplitude, optionally the deactivation criterion being one of the following: receiving a deactivation signal, reaching a predefined end of the driving voltage, reaching a predefined deactivation time, reaching a predefined deactivation displacement of the glider.

14. The method of any of claims 12 to 13, the method further comprising superposing a sensing signal (134) onto the driving voltage (130) and/or the deactivation voltage (132), using the sensing signal (134) for determining a current capacitance of the electrostatic gliding transducer (100), using the determined current capacitance for determining a current relative offset between the two electrodes (104, 114) of the transducer (100).

15. The method of claim 11, the applied energy being mechanical energy applied to the glider (112) of the electrostatic gliding transducer (100) for the activating of the electrostatic gliding transducer (100) and for converting the applied mechanical energy at least partially into electrostatic energy, the converting comprising an increasing of the relative offset (120) between the two electrodes (104, 114).
